# EUROPEAN PATENT SPECIFICATION

(11) **EP 4 283 931 B1**
(45) Date of publication and mention of the grant of the patent: **27.05.2026**
(21) Application number: 22758808.4
(22) Date of filing: 18.02.2022
(51) Int. Cl.: H04B 5/24, H04B 5/77, H04W 4/80, H04W 84/18

(54) **NFC METHOD AND SYSTEM, AND ELECTRONIC DEVICE**
NFC-VERFAHREN UND -SYSTEM SOWIE ELEKTRONISCHE VORRICHTUNG
PROCÉDÉ ET SYSTÈME DE COMMUNICATION EN CHAMP PROCHE, ET DISPOSITIF ÉLECTRONIQUE

(30) Priority: 27.02.2021 CN 202110221353
(43) Date of publication of application: 29.11.2023
(73) Proprietor: Huawei Technologies Co., Ltd., Shenzhen, Guangdong 518129 (CN)
(72) Inventor: LV, Sen, Shenzhen, Guangdong 518129 (CN); YAO, Zhendong, Shenzhen, Guangdong 518129 (CN); LIU, Zhaoshen, Shenzhen, Guangdong 518129 (CN); ZHANG, Yichuan, Shenzhen, Guangdong 518129 (CN)
(74) Representative: Maiwald GmbH
(86) International application number: PCT/CN2022/076801
(87) International publication number: WO 2022/179443

(56) References cited:
- EP-A1- 3 038 397
- CN-A- 102 402 744
- CN-A- 103 974 457
- CN-A- 106 331 990
- CN-A- 106 341 782
- CN-A- 106 846 676
- CN-A- 107 888 423
- CN-A- 110 519 733
- CN-A- 111 818 669
- CN-A- 112 312 372
- CN-U- 212 344 063
- US-A1- 2014 256 249

## Description

This application claims priority to Chinese Patent Application No. 202110221353.4, filed with the China National Intellectual Property Administration on February 27, 2021 and entitled "NFC COMMUNICATION METHOD, ELECTRONIC DEVICE, AND SYSTEM"

### TECHNICAL FIELD

The present invention relates to the field of wireless communication, and in particular, to an NFC communication method, an electronic device, and a system.

### BACKGROUND

With development of wireless communications technologies, more wireless communications technologies are applied to communication and data exchange between smart devices, to improve work efficiency of the smart devices in a home scenario or an office scenario. A near filed communication (near filed communication, NFC) technology is widely used. The NFC is developed based on a non-contact radio frequency identification (radio frequency identification, RFID) technology. In this technology, a smart device supporting an NFC function is used as a core device, and a device including an NFC tag (TAG) is used as an auxiliary device. One-touch connection or data exchange between devices is implemented through an operation of mutual touch between the devices.

However, in the existing NFC technology, in one touch between devices, only simple data processing can be completed. Subsequently, another data interaction needs to be completed by using another wireless channel established between the devices, such as Bluetooth or wireless fidelity (wireless fidelity, Wi-Fi), and a plurality of times of data interaction cannot be completed through only one touch. Therefore, for a user, in the conventional technology, operation steps are relatively cumbersome, and operations are very inconvenient.

CN 106 341 782 A describes a method based on NFC technology to realize the awakening of Bluetooth communication between mobile terminals and household appliances.

EP 3 038 397 A1 describes a connection method between terminals.

CN 212 344 063 U describes a virtual reality device, which aims to solve the technical problem that the existing pairing method is complicated and the virtual reality device cannot be connected to the designated Bluetooth handle.

### SUMMARY

This application provides an NFC communication method, an electronic device, and a system. Therefore, when a first electronic device including an NFC control chip approaches a second electronic device including an NFC tag chip, the first electronic device can obtain tag data stored in the NFC tag chip in the second electronic device, thus completing a first operation, and the first electronic device sends straight-through data to the second electronic device through NFC straight-through transmission, to trigger the second electronic device to complete a second operation. This simplifies user operations.

The present invention is defined by the subject-matter of the independent claims. Additional features of the invention are presented in the dependent claims.

According to a first aspect, this application provides an NFC communications system, and the system includes: a first electronic device and a second electronic device. The first electronic device is configured with a first near filed communication NFC control chip, and the second electronic device is configured with a first near filed communication tag NFC tag chip. The first NFC control chip is configured to modulate a radio frequency field with a specified frequency to communicate with the first NFC tag chip, and the first NFC tag chip is configured to sense the radio frequency field to obtain energy, and perform load modulation on the radio frequency field to communicate with the first NFC control chip. The first electronic device is configured to read, by using the radio frequency field generated by the first NFC control chip, first tag data stored in the first NFC tag chip. The first electronic device is further configured to: after reading the tag data, perform a first operation, and send straight-through data to the second electronic device by using the first NFC control chip. The second electronic device is configured to perform a second operation after receiving the straight-through data by using the first NFC tag chip.

By using the NFC communications system provided in this application, an effect that a plurality of operations are triggered by one touch between the first electronic device and the second electronic device can be implemented, thereby reducing operation steps of the user.

In a possible implementation, the first electronic device is further configured to display a first interface of a first application before reading the first tag data. The first tag data includes a Bluetooth media access control MAC address of the second electronic device and a service processing attribute of the second electronic device. The first operation includes: when the service processing attribute of the second electronic device is a first attribute, establishing a Bluetooth connection to the second electronic device based on the Bluetooth MAC address of the second electronic device; establishing a wireless local area network WLAN direct connection to the second electronic device based on the Bluetooth connection; and sending first display data to the second electronic device through the WLAN direct connection. The second electronic device is further configured to: after receiving the first display data, display a second interface based on the first display data, where display content on the second interface is the same as display content on the first interface. The straight-through data includes account information of the first application and an identifier of the first application, and the account information includes an account identifier and an account password of the first application. The second operation includes: logging in to the first application on the second electronic device based on the account information and the identifier of the first application by using the account information.

In this possible implementation, when the first electronic device approaches the second electronic device through one touch, an operation of projection from the first electronic device to the second electronic device and an operation of synchronizing account information of a specified application on the first electronic device to the second electronic device can be simultaneously completed, so that the second electronic device can automatically log in to the first application, thereby reducing operation steps of the user and improving user experience.

In a possible implementation, the tag data includes a Bluetooth media access control MAC address of the second electronic device and a service processing attribute of the second electronic device. The first operation includes: when the service processing attribute of the second electronic device is a second attribute, establishing a Bluetooth connection to the second electronic device based on the Bluetooth MAC address of the second electronic device. The straight-through data includes first wireless high-fidelity Wi-Fi connection information, and the first Wi-Fi connection information includes a Wi-Fi name, a Wi-Fi password, and an encryption manner of a first Wi-Fi network. The second operation includes: connecting, based on the Wi-Fi connection information, to the first Wi-Fi network established by a routing device.

In this possible implementation, the electronic device 100 may also send, to the electronic device 200 through NFC straight-through transmission, the Wi-Fi name, the Wi-Fi password, the encryption manner, and the like that are of the routing device 300 and that are stored in a memory space. The electronic device 200 receives the Wi-Fi name, the Wi-Fi password, the encryption manner, and the like, and may access a corresponding wireless local area network, thereby reducing operation steps of the user and improving user experience.

In a possible implementation, the routing device is configured with a second NFC tag chip, and the second NFC tag chip is configured to sense the radio frequency field to obtain energy, and perform load modulation on the radio frequency field to communicate with the first NFC control chip. The first electronic device is further configured to: before sending the straight-through data to the second electronic device by using the NFC control chip, read, by using the radio frequency field generated by the first NFC control chip, second tag data stored in the second NFC tag chip, where the second tag data includes the first Wi-Fi connection information. The first electronic device is further configured to connect to the first Wi-Fi network based on the first Wi-Fi connection information.

In a possible implementation, the first electronic device is further configured to: before sending the straight-through data to the second electronic device by using the NFC control chip, receive the first Wi-Fi connection information entered by a user. The first electronic device is further configured to connect to the first Wi-Fi network based on the first Wi-Fi connection information.

In a possible implementation, the first tag data includes a Bluetooth media access control MAC address of the second electronic device and a service processing attribute of the second electronic device. The first electronic device is further configured to: before reading the first tag data, read, by using the radio frequency field generated by the first NFC control chip, third tag data stored in a third NFC tag chip of a third electronic device, where the third tag data includes a Bluetooth MAC address of the third electronic device and a service processing attribute of the third electronic device. The first electronic device is further configured to: when the service processing attribute of the third electronic device is a third attribute, output a first prompt, where the first prompt is used to prompt a user whether to set the third attribute to a high-priority service attribute. The first electronic device is further configured to receive a first input of the user. The first electronic device is further configured to set the third attribute to the high-priority service attribute in response to the first input of the user. The first operation includes: when the service processing attribute of the second electronic device is a first attribute, establishing a Bluetooth connection to the second electronic device based on the Bluetooth MAC address of the second electronic device; establishing a wireless local area network WLAN direct connection to the second electronic device based on the Bluetooth connection; and sending second display data to the second electronic device through the WLAN direct connection. The straight-through data includes a setting instruction, and the setting instruction instructs the second electronic device to enable a multi-screen collaboration function corresponding to the third attribute. The second operation includes: in response to the setting instruction, performing, based on the second display data, the multi-screen collaboration function corresponding to the third attribute.

In this possible implementation, the second electronic device may implement a plurality of functions, and an operation of switching between functions is simple, thereby reducing operation steps of the user and improving user experience.

In a possible implementation, the first electronic device is further configured to display a first interface of a first application before reading the first tag data. The performing, based on the second display data, the multi-screen collaboration function corresponding to the third attribute specifically includes: displaying the second display data in a first window and a second window, where the first window includes a second interface of the first application and a third interface of the first application, display content on the second interface is the same as display content on the first interface, and display content on the third interface is different from the display content on the first interface.

In a possible implementation, the first tag data includes a service processing attribute of the second electronic device. The first electronic device is further configured to: before reading the first tag data, read, by using the radio frequency field generated by the first NFC control chip, third tag data stored in a third NFC tag chip of a third electronic device, where the third tag data includes a Bluetooth MAC address of the third electronic device. The first electronic device is further configured to establish a Bluetooth connection to the third electronic device based on the Bluetooth MAC address of the third electronic device. The first operation includes: when the service processing attribute of the second electronic device is a fourth attribute, displaying a third prompt, where the third prompt is used to prompt a user whether to copy the Bluetooth MAC address of the third electronic device to the second electronic device. The first electronic device is specifically configured to: after receiving a second input of the user, send the straight-through data to the second electronic device by using the first NFC control chip. The straight-through data includes the Bluetooth MAC address of the third electronic device. The second operation includes: writing fourth tag data into the first NFC tag chip, where the fourth tag data includes a Bluetooth MAC address of the third electronic device.

In this possible implementation, when the first electronic device establishes a Bluetooth connection to the third electronic device again, the first electronic device may obtain the Bluetooth MAC address of the third electronic device from the NFC tag chip on the second electronic device by approaching the second electronic device, and establish the Bluetooth connection to the third electronic device based on the Bluetooth MAC address without approaching the third electronic device, so that user operations are more convenient and user experience is improved.

In a possible implementation, the first electronic device is further configured to: after disconnecting the Bluetooth connection, read, by using the radio frequency field generated by the first NFC control chip, the fourth tag data stored in the first NFC tag chip. The first electronic device is further configured to establish a Bluetooth connection to the third electronic device based on the Bluetooth MAC address of the third electronic device in the fourth tag data.

In a possible implementation, the first electronic device is further configured to: before sending straight-through data to the second electronic device by using the first NFC control chip, send a radio frequency field waiting instruction to the second electronic device by using the first NFC control chip, where the radio frequency field waiting instruction instructs the second electronic device to keep receiving, by using the first NFC tag chip, data sent by the first NFC control chip.

In a possible implementation, the second electronic device is further configured to: after receiving the straight-through data by using the first NFC tag chip, send an answer instruction to the first electronic device by using the first NFC tag chip. The answer instruction is used to notify the first electronic device that the second electronic device has received the straight-through data.

In a possible implementation, the first tag data further includes a straight-through flag bit, and the straight-through flag bit indicates whether the second electronic device supports receiving of the straight-through data. The first electronic device is specifically configured to: when a value of the straight-through flag bit is a first value, send the straight-through data to the second electronic device by using the first NFC control chip.

According to a second aspect, this application provides another NFC communication method. The method includes: A first electronic device reads, by using a radio frequency field generated by a first NFC control chip, first tag data stored in a first NFC tag chip of a second electronic device. The first NFC control chip is configured to modulate the radio frequency field with a specified frequency to communicate with the first NFC tag chip, and the first NFC tag chip is configured to sense the radio frequency field to obtain energy, and perform load modulation on the radio frequency field to communicate with the first NFC control chip. After reading the tag data, the first electronic device performs a first operation, and sends straight-through data to the second electronic device by using the first NFC control chip, where the straight-through data is used to trigger the second electronic device to perform a second operation.

By using the NFC communication method provided in this application, an effect that a plurality of operations are triggered by one touch between the first electronic device and the second electronic device can be implemented, thereby reducing operation steps of the user.

In a possible implementation, the first tag data includes a Bluetooth media access control MAC address of the second electronic device and a service processing attribute of the second electronic device. Before the reading first tag data, the method further includes: The first electronic device displays a first interface of a first application. The first operation includes: when the service processing attribute of the second electronic device is a first attribute, establishing a Bluetooth connection to the second electronic device based on the Bluetooth MAC address of the second electronic device; establishing a wireless local area network WLAN direct connection to the second electronic device based on the Bluetooth connection; and sending first display data to the second electronic device through the WLAN direct connection, where the first display data is used by the second electronic device to display a second interface, and display content on the second interface is the same as display content on the first interface. The straight-through data includes account information of the first application and an identifier of the first application, and the account information includes an account identifier and an account password of the first application. The second operation includes: logging in to the first application on the second electronic device based on the account information and the identifier of the first application by using the account information.

In a possible implementation, the tag data includes a Bluetooth media access control MAC address of the second electronic device and a service processing attribute of the second electronic device. The first operation includes: when the service processing attribute of the second electronic device is a second attribute, establishing a Bluetooth connection to the second electronic device based on the Bluetooth MAC address of the second electronic device. The straight-through data includes first wireless high-fidelity Wi-Fi connection information, and the first Wi-Fi connection information includes a Wi-Fi name, a Wi-Fi password, and an encryption manner of a first Wi-Fi network. The second operation includes: connecting, based on the Wi-Fi connection information, to the first Wi-Fi network established by a routing device.

In a possible implementation, before the first electronic device sends the straight-through data to the second electronic device by using the NFC control chip, the method further includes: The first electronic device reads, by using the radio frequency field generated by the first NFC control chip, second tag data stored in the second NFC tag chip, where the second tag data includes the first Wi-Fi connection information. The first electronic device connects to the first Wi-Fi network based on the first Wi-Fi connection information.

In a possible implementation, before the first electronic device sends the straight-through data to the second electronic device by using the NFC control chip, the method further includes: The first electronic device receives the first Wi-Fi connection information entered by a user. The first electronic device is further configured to connect to the first Wi-Fi network based on the first Wi-Fi connection information.

In a possible implementation, the first tag data includes a Bluetooth media access control MAC address of the second electronic device and a service processing attribute of the second electronic device. Before the first electronic device reads the first tag data, the method further includes: The first electronic device reads, by using the radio frequency field generated by the first NFC control chip, third tag data stored in a third NFC tag chip of a third electronic device, where the third tag data includes a Bluetooth MAC address of the third electronic device and a service processing attribute of the third electronic device. When the service processing attribute of the third electronic device is a third attribute, the first electronic device outputs a first prompt, where the first prompt is used to prompt a user whether to set the third attribute to a high-priority service attribute. The first electronic device receives a first input of the user. In response to the first input, the first electronic device sets the third attribute to the high-priority service attribute. The first operation includes: when the service processing attribute of the second electronic device is a first attribute, establishing a Bluetooth connection to the second electronic device based on the Bluetooth MAC address of the second electronic device; establishing a wireless local area network WLAN direct connection to the second electronic device based on the Bluetooth connection; and sending second display data to the second electronic device through the WLAN direct connection. The straight-through data includes a setting instruction, and the setting instruction instructs the second electronic device to enable a multi-screen collaboration function corresponding to the third attribute. The second operation includes: in response to the setting instruction, performing, based on the second display data, the multi-screen collaboration function corresponding to the third attribute.

In a possible implementation, before the first electronic device reads the first tag data, the method further includes: The first electronic device displays a first interface of a first application. The performing, based on the second display data, the multi-screen collaboration function corresponding to the third attribute specifically includes: displaying the second display data in a first window and a second window, where the first window includes a second interface of the first application and a third interface of the first application, display content on the second interface is the same as display content on the first interface, and display content on the third interface is different from the display content on the first interface.

In a possible implementation, the first tag data includes a service processing attribute of the second electronic device. Before the first electronic device reads the first tag data, the method further includes: The first electronic device reads, by using the radio frequency field generated by the first NFC control chip, third tag data stored in a third NFC tag chip of a third device, where the third tag data includes a Bluetooth MAC address of the third electronic device. The method further includes: The first electronic device establishes a Bluetooth connection to the third electronic device based on the Bluetooth MAC address of the third electronic device. The first operation includes: when the service processing attribute of the second electronic device is a fourth attribute, displaying a third prompt, where the third prompt is used to prompt a user whether to copy the Bluetooth MAC address of the third electronic device to the second electronic device. That the first electronic device sends straight-through data to the second electronic device by using the first NFC control chip specifically includes: After receiving a second input of the user, the first electronic device sends the straight-through data to the second electronic device by using the first NFC control chip. The second operation includes: in response to receiving the second input of the user, writing fourth tag data into the first NFC tag chip, where the fourth tag data includes the Bluetooth MAC address of the third electronic device.

In a possible implementation, the method further includes: After disconnecting the Bluetooth connection, the first electronic device reads, by using the radio frequency field generated by the first NFC control chip, the fourth tag data stored in the first NFC tag chip. The first electronic device establishes a Bluetooth connection to the third electronic device based on the Bluetooth MAC address of the third electronic device in the fourth tag data.

In a possible implementation, before the first electronic device sends straight-through data to the second electronic device by using the first NFC control chip, the method further includes: The first electronic device sends a radio frequency field waiting instruction to the second electronic device by using the first NFC control chip, where the radio frequency field waiting instruction instructs the second electronic device to keep receiving, by using the first NFC tag chip, data sent by the first NFC control chip.

In a possible implementation, after the first electronic device sends straight-through data to the second electronic device by using the first NFC control chip, the method further includes: The first electronic device receives an answer instruction sent by the second electronic device by using the first NFC tag chip, where the answer instruction is used to notify the first electronic device that the second electronic device has received the straight-through data.

In a possible implementation, the first tag data further includes a straight-through flag bit, and the straight-through flag bit indicates whether the second electronic device supports receiving of the straight-through data. That the first electronic device sends the straight-through data to the second electronic device by using the first NFC control chip specifically includes: When a value of the straight-through flag bit is a first value, the first electronic device sends the straight-through data to the second electronic device by using the first NFC control chip.

According to a third aspect, this application provides an NFC communication method, where the method includes: A second electronic device performs, by using a first NFC tag chip, load modulation on a radio frequency field generated by a first electronic device by using a first NFC control chip, and sends first tag data stored in the first NFC tag chip to the first electronic device. The first NFC tag chip is configured to: sense the radio frequency field generated by the first electronic device by using the first NFC control chip, to obtain energy, and perform load modulation on the radio frequency field to communicate with the first NFC control chip. The first tag data is used to trigger the first electronic device to perform a first operation and send straight-through data to the second electronic device by using the first NFC control chip. The second electronic device performs a second operation after receiving the straight-through data sent by the first electronic device.

In a possible implementation, the first tag data includes a Bluetooth media access control MAC address of the second electronic device and a service processing attribute of the second electronic device. The first operation includes: when the service processing attribute of the second electronic device is a first attribute, establishing a Bluetooth connection to the second electronic device based on the Bluetooth MAC address of the second electronic device; establishing a wireless local area network WLAN direct connection to the second electronic device based on the Bluetooth connection; and sending first display data to the second electronic device through the WLAN direct connection, where the first display data is used by the second electronic device to display a second interface, and display content on the second interface is the same as display content on the first interface. The straight-through data includes account information of the first application and an identifier of the first application, and the account information includes an account identifier and an account password of the first application. The second operation includes: logging in to the first application on the second electronic device based on the account information and the identifier of the first application by using the account information.

In a possible implementation, the tag data includes a Bluetooth media access control MAC address of the second electronic device and a service processing attribute of the second electronic device. The first operation includes: when the service processing attribute of the second electronic device is a second attribute, establishing a Bluetooth connection to the second electronic device based on the Bluetooth MAC address of the second electronic device. The straight-through data includes first wireless high-fidelity Wi-Fi connection information, and the first Wi-Fi connection information includes a Wi-Fi name, a Wi-Fi password, and an encryption manner of a first Wi-Fi network. The second operation includes: connecting, based on the Wi-Fi connection information, to the first Wi-Fi network established by a routing device.

In a possible implementation, the first tag data includes a Bluetooth media access control MAC address of the second electronic device and a service processing attribute of the second electronic device. The first operation includes: when the service processing attribute of the second electronic device is a first attribute, establishing a Bluetooth connection to the second electronic device based on the Bluetooth MAC address of the second electronic device; establishing a wireless local area network WLAN direct connection to the second electronic device based on the Bluetooth connection; and sending second display data to the second electronic device through the WLAN direct connection. The straight-through data includes a setting instruction, and the setting instruction instructs the second electronic device to enable a multi-screen collaboration function corresponding to the third attribute. The second operation includes: in response to the setting instruction, performing, based on the second display data, the multi-screen collaboration function corresponding to the third attribute.

In a possible implementation, the first tag data includes a service processing attribute of the second electronic device. The first operation includes: when the service processing attribute of the second electronic device is a fourth attribute, displaying a third prompt, where the third prompt is used to prompt a user whether to copy a Bluetooth MAC address of a third electronic device to the second electronic device. That the first electronic device sends straight-through data to the second electronic device by using the first NFC control chip specifically includes: After receiving a second input of the user, the first electronic device sends the straight-through data to the second electronic device by using the first NFC control chip. The second operation includes: in response to receiving the second input of the user, writing fourth tag data into the first NFC tag chip, where the fourth tag data includes the Bluetooth MAC address of the third electronic device.

In a possible implementation, before the second electronic device receives the straight-through data sent by the first electronic device by using the first NFC control chip, the method further includes: The second electronic device receives a radio frequency field waiting instruction sent by the first electronic device by using the first NFC control chip, where the radio frequency field waiting instruction instructs the second electronic device to keep receiving, by using the first NFC tag chip, data sent by the first NFC control chip.

In a possible implementation, before the second electronic device receives the straight-through data sent by the first electronic device by using the first NFC control chip, the method further includes: The second electronic device sends an answer instruction to the first electronic device by using the first NFC tag chip, where the answer instruction is used to notify the first electronic device that the second electronic device has received the straight-through data.

In a possible implementation, the first tag data further includes a straight-through flag bit, and the straight-through flag bit indicates whether the second electronic device supports receiving of the straight-through data. That the second electronic device receives the straight-through data sent by the first electronic device by using the first NFC control chip specifically includes: When a value of the straight-through flag bit is a first value, the second electronic device receives the straight-through data sent by the first electronic device by using the first NFC control chip.

According to a fourth aspect, this application provides an electronic device, which is a first electronic device and includes one or more processors, an NFC control chip, and one or more memories. The one or more memories and the NFC control chip are coupled to the one or more processors. The one or more memories are configured to store computer program code, the computer program code includes computer instructions, and when the one or more processors execute the computer instructions, the first electronic device is enabled to perform the method according to any possible implementation of the second aspect.

According to a fifth aspect, this application provides another electronic device, which is a second electronic device and includes one or more processors, an NFC tag chip, and one or more memories. The one or more memories and the NFC tag chip are coupled to the one or more processors. The one or more memories are configured to store computer program code, the computer program code includes computer instructions, and when the one or more processors execute the computer instructions, the second electronic device is enabled to perform the method according to any possible implementation of the third aspect.

According to a sixth aspect, this application provides a chip system, applied to a first electronic device. The chip system includes an application processor and an NFC control chip, and the chip system performs the method according to any possible implementation of the second aspect.

According to a seventh aspect, this application provides another chip system, applied to a second electronic device. The chip system includes an application processor and an NFC tag chip, and the chip system performs the method according to any possible implementation of the third aspect.

According to an eighth aspect, this application provides a computer storage medium, including computer instructions. When the computer instructions are run on a first electronic device, the electronic device is enabled to perform the method according to any possible implementation of the second aspect.

According to a ninth aspect, this application provides another computer storage medium, including computer instructions. When the computer instructions are run on a second electronic device, the electronic device is enabled to perform the method according to any possible implementation of the third aspect.

According to a tenth aspect, this application provides a computer program product, and when the computer program product is run on a first electronic device, the first electronic device is enabled to perform the method according to any possible implementation of the second aspect.

According to an eleventh aspect, this application provides another computer program product, and when the computer program product is run on a second electronic device, the second electronic device is enabled to perform the method according to any possible implementation of the third aspect.

### BRIEF DESCRIPTION OF DRAWINGS

FIG. 1A is a schematic diagram of an architecture of an NFC communications system according to an embodiment of this application;
FIG. 1B to FIG. 1D are schematic diagrams of data exchange based on an NFC communications technology according to an embodiment of this application;
FIG. 2 is a schematic diagram of a hardware structure of an electronic device according to an embodiment of this application;
FIG. 3 is a schematic diagram of a hardware structure of another electronic device according to an embodiment of this application;
FIG. 4 is a schematic diagram of a modular structure of an electronic device according to an embodiment of this application;
FIG. 5A is a schematic diagram of an NDEF standard protocol format according to an embodiment of this application;
FIG. 5B is a schematic diagram of an NDEF TAG header format according to an embodiment of this application;
FIG. 5C is a schematic diagram of an NDEF record block according to an embodiment of this application;
FIG. 5D to FIG. 5G are schematic diagrams of tag data update according to an embodiment of this application;
FIG. 5H is a schematic diagram of an NFC Record according to an embodiment of this application;
FIG. 6A is a schematic diagram of an NDEF protocol format according to an embodiment of this application;
FIG. 6B is a schematic diagram of a radio frequency field waiting instruction protocol according to an embodiment of this application;
FIG. 6C is a schematic diagram of a data transmission protocol format according to an embodiment of this application;
FIG. 6D is a schematic diagram of an answer protocol format according to an embodiment of this application;
FIG. 7 is a schematic flowchart of an NFC communication method according to an embodiment of this application;
FIG. 8A to FIG. 8G are schematic diagrams of a user interface according to an embodiment of this application;
FIG. 9A and FIG. 9B are a schematic flowchart of an NFC communication method according to an embodiment of this application;
FIG. 10A to FIG. 10D are schematic diagrams of a group of user interfaces according to an embodiment of this application;
FIG. 11 is a schematic flowchart of an NFC communication method according to an embodiment of this application;
FIG. 12A and FIG. 12B are schematic diagrams of a group of user interfaces according to an embodiment of this application;
FIG. 13A and FIG. 13B are a schematic flowchart of an NFC communication method according to an embodiment of this application;
FIG. 14 is a schematic diagram of a group of user interfaces according to an embodiment of this application; and
FIG. 15A, FIG. 15B, and FIG. 15C are a schematic diagram of module interaction according to an embodiment of this application.

### DESCRIPTION OF EMBODIMENTS

The technical solutions according to embodiments of this application are clearly and completely described in the following with reference to the accompanying drawings. In the descriptions of embodiments of this application, unless otherwise specified, "/" indicates "or". For example, A/B may indicate A or B. The term "and/or" in this specification merely describes an association relationship for describing associated objects, and indicates that three relationships may exist. For example, A and/or B may indicate the following three cases: only A exists, both A and B exist, and only B exists.

Terms "first" and "second" in the following are used for description only, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more than two.

First, a communications system 10 provided in an embodiment of this application is described.

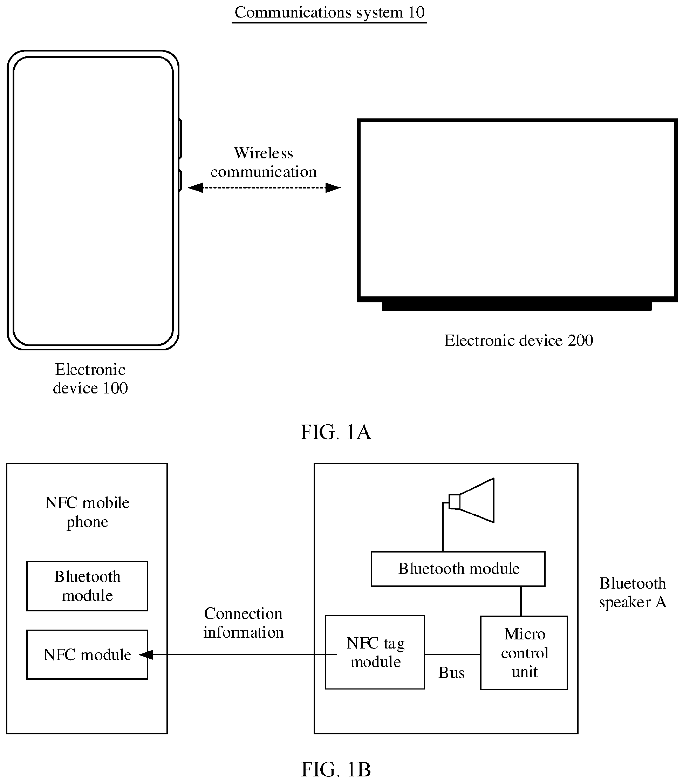

As shown in an example in FIG. 1A, the communications system 10 may include an electronic device 100 and an electronic device 200.

The electronic device 100 may be an electronic device such as a mobile phone, a tablet computer, or a PC. Specifically, the electronic device 100 may have an NFC module, or may have one or more of a Bluetooth (Bluetooth, BT) module and a wireless local area network (wireless local area network, WLAN) module. The electronic device 100 may generate a radio frequency (radio frequency, RF) field whose frequency is a specified frequency (for example, 13.56 megahertz (MHz)) by using the NFC module, and transmit data to a nearby target device (for example, the electronic device 200) by directly modulating the RF field. Alternatively, the electronic device 100 may generate an RF field whose frequency is a specified frequency (for example, 13.56 MHz) by using the NFC module, and obtain tag data in the NFC tag chip in a manner of performing load modulation on the RF field by using an NFC tag chip that is within a specified distance away from the electronic device 100 (for example, within 10 centimeters from the electronic device 100). In this process, the electronic device 100 may detect existence of the NFC tag chip nearby through an inverse frequency of an original sine wave or a wave with changed frequency attribute that is generated by energy obtained by the NFC tag chip through electromagnetic induction for the radio frequency field. Alternatively, the electronic device 100 may detect and scan a device near the electronic device 100 by using one or more transmit signals of the Bluetooth module and the WLAN module, so that the electronic device 100 may discover a nearby device (for example, the electronic device 200) by using one or more wireless communications technologies of Bluetooth or WLAN, and may establish a wireless communication connection to the nearby device, and transmit data to the nearby device (for example, the electronic device 200) by using one or more wireless communications technologies of Bluetooth or WLAN. The Bluetooth module may provide a Bluetooth communications solution including one or more of classic Bluetooth (basic rate/enhanced data rate, BR/EDR) or Bluetooth low energy (Bluetooth low energy, BLE). The WLAN module may provide a WLAN communications solution including one or more of wireless fidelity direct (wireless fidelity direct, Wi-Fi direct), a wireless fidelity local area network (wireless fidelity local area networks, Wi-Fi LAN), or a wireless fidelity software access point (wireless fidelity software access point, Wi-Fi SoftAP).

The electronic device 200 may be a smartphone, a tablet computer, a desktop computer, or an electronic device of another type, and has a relatively strong computing processing capability, relatively robust internal storage space, and the like. Alternatively, the electronic device 200 may be an electronic device of a type such as a smartwatch, a smart band, or a smart speaker that has a relatively weak computing processing capability or relatively small internal storage space. Specifically, the electronic device 200 may have the NFC tag module, or may have one or more of the Bluetooth module and the WLAN module. The electronic device 200 may be located in the RF field generated by the electronic device 100, and obtain an induced current in an electromagnetic induction manner by using an antenna in the NFC tag module. The induced current may provide energy for the NFC tag module. After obtaining the energy, the NFC tag module may transmit data to the electronic device 100 in a manner of performing load modulation on the RF field. The electronic device 200 may also receive or transmit a wireless signal by using one or more of the Bluetooth module and the WLAN module. The Bluetooth module may provide a Bluetooth communications solution including one or more of classic Bluetooth (Bluetooth 2.1 standard) or BLE. The WLAN module may provide a WLAN communications solution including one or more of Wi-Fi direct, a Wi-Fi LAN, or Wi-Fi SoftAP. The load modulation may be that the electronic device 200 adjusts, based on the radio frequency field generated by the electronic device 100, an electrical parameter of an oscillation loop in the NFC tag chip based on a beat of a data stream, so that a magnitude and a phase of impedance in the NFC tag chip change accordingly, thereby completing modulation.

As shown in FIG. 1A, the electronic device 100 and the electronic device 200 may transmit data information to each other by using a wireless communications technology. Specifically, the wireless communication may be NFC communication, or may be wireless communication connection including one or more of Bluetooth, Wi-Fi direct, or Wi-Fi SoftAP.

It may be understood that an example of a communications system structure shown in this embodiment of this application does not constitute a specific limitation on the communications system 10. In some other embodiments of this application, the communications system 10 may include more or fewer electronic devices than those shown in the figure, or may include electronic devices of different types from those shown in the figure. For example, the communications system 10 may further include a plurality of mobile phones or a plurality of electronic devices of different types, such as a display, a tablet computer, and a PC that have a communications function. This is not limited in this application.

Currently, an NFC communications system may include the electronic device 100 having the NFC control chip and the electronic device 200 having the NFC tag chip. For example, the electronic device 100 is a mobile phone, and the electronic device 200 is a Bluetooth speaker. When an NFC tag tag in the Bluetooth speaker enables a non-contact reading function, the mobile phone obtains, through a touch operation with the Bluetooth speaker, tag data stored in an NFC tag chip in the Bluetooth speaker, for example, including a media access control address (media access control address, MAC) of the Bluetooth speaker, where a format of the data stored in the NFC tag chip may be an NFC data exchange format (NFC data exchange format, NDEF). After parsing the tag data in the data format, the mobile phone obtains a Bluetooth MAC address of the Bluetooth speaker from the tag data, and sends the MAC address to a processor for further processing, so as to establish a Bluetooth connection to the Bluetooth speaker. Subsequent data interaction is completed through the Bluetooth connection.

In some embodiments of this application, when the Bluetooth speaker is within a specified distance away from the mobile phone (for example, within 10 centimeters from the mobile phone), the mobile phone may also obtain tag data stored in the NFC tag chip of the Bluetooth speaker. This is not limited in this application.

FIG. 1B to FIG. 1D show examples of a process in which a mobile phone and a Bluetooth speaker perform data exchange by using the foregoing NFC communications technology. The mobile phone may include but is not limited to the Bluetooth module and the NFC module. For descriptions of the Bluetooth module and the NFC module, refer to related descriptions in FIG. 1A, and details are not described herein again. The Bluetooth speaker may include but is not limited to the Bluetooth module, the NFC tag module, and a micro control unit. For descriptions of the Bluetooth module and the NFC tag module, refer to descriptions in FIG. 1A, and details are not described herein again. The micro control unit may be connected to the NFC tag module by using a bus, and therefore, data in the Bluetooth speaker may be written into the NFC tag module by using the micro control unit via the bus.

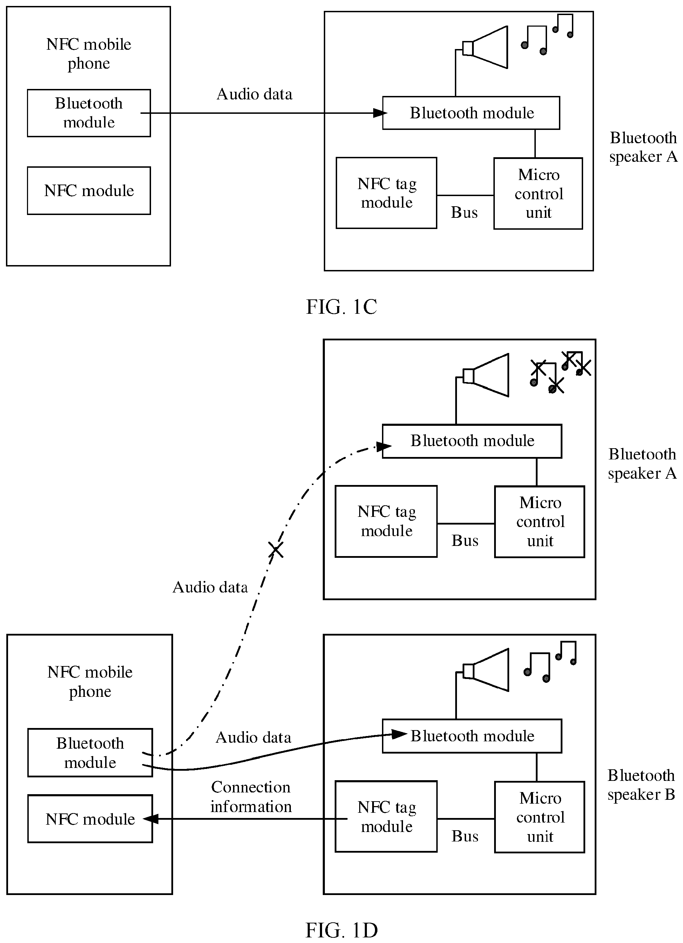

As shown in FIG. 1B, the mobile phone may obtain, through a touch operation with a Bluetooth speaker A, connection information stored in an NFC tag module of the Bluetooth speaker A, for example, a Bluetooth MAC address of the Bluetooth speaker A. After obtaining the Bluetooth MAC address of the Bluetooth speaker A, the mobile phone may establish a Bluetooth connection to the Bluetooth speaker A. As shown in FIG. 1C, after the Bluetooth connection is established between the mobile phone and the Bluetooth speaker A, audio data in the mobile phone may be sent to the Bluetooth speaker A through the Bluetooth connection. After receiving, through the Bluetooth connection, the audio data sent by the mobile phone, the Bluetooth speaker A may play audio based on the audio data.

As shown in FIG. 1D, when the mobile phone obtains, through a touch operation with a Bluetooth speaker B, connection information (for example, a Bluetooth MAC address of the Bluetooth speaker B) stored in an NFC tag module of the Bluetooth speaker B, the Bluetooth connection established between the mobile phone and the Bluetooth speaker A may be disconnected, and the audio data in the mobile phone cannot be sent to the Bluetooth speaker A through the Bluetooth connection. Therefore, the Bluetooth speaker A cannot receive the audio data of the mobile phone, and cannot play the audio. After obtaining the Bluetooth MAC address of the Bluetooth speaker B, the mobile phone may establish a Bluetooth connection to the Bluetooth speaker B. The audio data in the mobile phone may be sent to the Bluetooth speaker B through the Bluetooth connection. After receiving, through the Bluetooth connection, the audio data sent by the mobile phone, the Bluetooth speaker B may play the audio based on the audio data.

It can be learned from the foregoing process that, in the NFC communication method, a plurality of times of data exchange cannot be completed through only one touch operation, and there are problems of relatively low working efficiency and inconvenient user operations. In addition, because a non-contact write function is enabled for the NFC tag chip, a security risk such as data theft or tampering may exist. In addition, because the data is stored in the NFC tag chip, when the mobile phone re-reads the NFC tag chip, the mobile phone may additionally read and process unnecessary information, which greatly increases processing costs and also increases a probability of a read failure.

Therefore, this embodiment of this application provides an NFC communication method, so that when the electronic device 100 including the NFC control chip approaches the electronic device 200 having the NFC tag chip, tag data stored in the NFC tag chip of the electronic device 200 can be obtained. The electronic device 100 may complete a first operation based on the obtained tag data, and send the straight-through data to the electronic device 200 through NFC straight-through transmission, to trigger the electronic device 200 to complete a second operation. In this way, a plurality of operations may be triggered by one touch between the electronic device 100 and the electronic device 200, thereby reducing operation steps of the user.

The following describes an example of the electronic device 100 provided in this embodiment of this application.

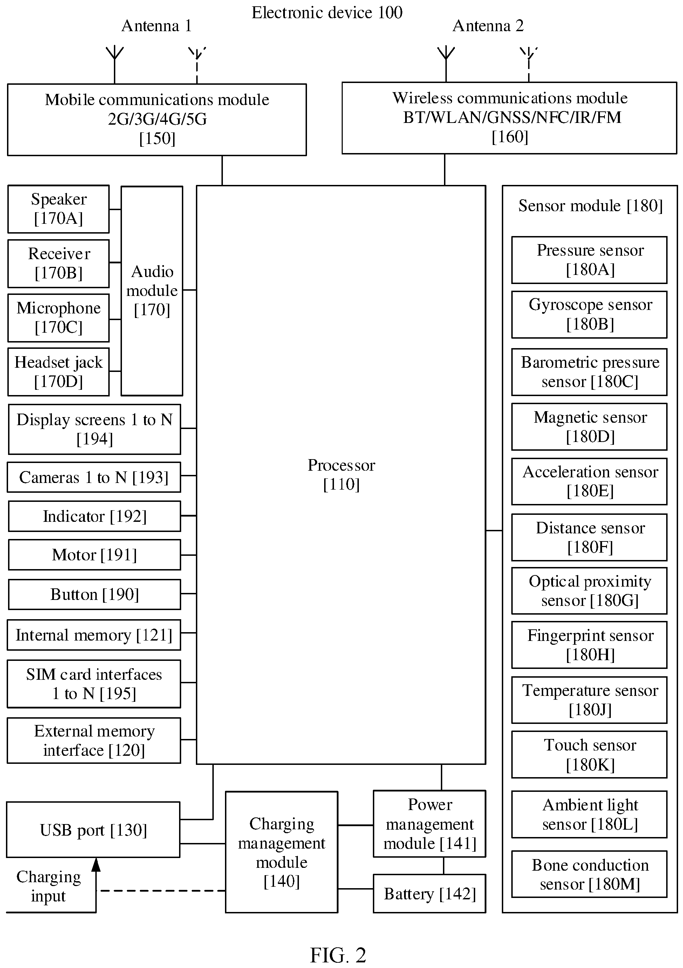

FIG. 2 is a schematic diagram of a hardware structure of an electronic device 100.

The electronic device 100 may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device. A specific type of the electronic device is not limited in this embodiment of this application.

The electronic device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communications module 150, a wireless communications module 160, an audio module 170, a speaker 170A, a receiver 170B, a microphone 170C, a headset jack 170D, a sensor module 180, a button 190, a motor 191, an indicator 192, a camera 193, a display screen 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the electronic device 100. In other embodiments of this application, the electronic device 100 may include more or fewer components than those shown in the figure, combine some components, split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The controller may generate an operation control signal based on an instruction operation code and a time sequence signal, to complete control of instruction fetching and instruction executing.

A memory may be further disposed in the processor 110, and is configured to store an instruction and data. In some embodiments, the memory in the processor 110 is a cache. The memory may store an instruction or data that has been used or cyclically used by the processor 110. If the processor 110 needs to use the instruction or the data again, the processor may directly invoke the instruction or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

The charging management module 140 is configured to receive charging input from a charger. The power management module 141 is configured to connect to the battery 142, the charging management module 140, and the processor 110. The power management module 141 receives input of the battery 142 and/or the charging management module 140, to supply power to the processor 110, the internal memory 121, the display screen 194, the camera 193, the wireless communications module 160, and the like. The power management module 141 may be further configured to monitor a parameter such as a battery capacity, a quantity of battery cycles, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communications function of the electronic device 100 may be implemented by using the antenna 1, the antenna 2, the mobile communications module 150, the wireless communications module 160, the modem processor, the baseband processor, and the like.

The antenna 1 and the antenna 2 are configured to transmit and receive an electromagnetic wave signal. Each antenna in the electronic device 100 may be configured to cover one or more communications frequency bands. Different antennas may be multiplexed to improve antenna utilization. For example, the antenna 1 may be multiplexed as a diversity antenna of a wireless local area network. In some other embodiments, an antenna may be used in combination with a tuning switch.

The mobile communications module 150 may provide a wireless communications solution that includes 2G/3G/4G/5G or the like and that is applied to the electronic device 100. The mobile communications module 150 may include at least one filter, switch, power amplifier, low noise amplifier (low noise amplifier, LNA), and the like. The mobile communications module 150 may receive an electromagnetic wave through the antenna 1, perform processing such as filtering or amplification on the received electromagnetic wave, and transmit the electromagnetic wave to the modem processor for demodulation. The mobile communications module 150 may further amplify a signal modulated by the modem processor, and convert, by using the antenna 1, the signal into an electromagnetic wave for radiation. In some embodiments, at least some functional modules in the mobile communications module 150 may be disposed in the processor 110. In some embodiments, at least some function modules of the mobile communications module 150 may be disposed in a same component with at least some modules of the processor 110. In some embodiments, the wireless communications solution provided by the mobile communications module 150 may enable the electronic device to communicate with a device (such as a cloud server) in a network.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then the demodulator transfers the low-frequency baseband signal obtained through demodulation to the baseband processor for processing. After being processed by the baseband processor, the low-frequency baseband signal is transmitted to the application processor. The application processor outputs a sound signal by using an audio device (not limited to the speaker 170A, the receiver 170B, or the like), or displays an image or a video by using the display screen 194. In some embodiments, the modem processor may be an independent component. In some other embodiments, the modem processor may be independent of the processor 110, and is disposed in a same component as the mobile communications module 150 or another function module.

The wireless communications module 160 may provide a solution that is applied to the electronic device 100 and is for wireless communication such as a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communications module 160 may be one or more components integrating at least one communications processor module. The wireless communications module 160 receives an electromagnetic wave through the antenna 2, performs frequency modulation and filtering processing on an electromagnetic wave signal, and sends a processed signal to the processor 110. The wireless communications module 160 may further receive a to-be-sent signal from the processor 110, perform frequency modulation and amplification on the to-be-sent signal, and convert, by using the antenna 2, the signal into an electromagnetic wave for radiation. In some embodiments, the electronic device 100 may detect or scan a device near the electronic device 100 by transmitting a signal by using a Bluetooth module and a WLAN module in the wireless communications module 160, and establish a wireless communication connection to the nearby device and transmit data. The Bluetooth module may provide a Bluetooth communications solution including one or more of classic Bluetooth (Bluetooth 2.1 standard) or Bluetooth low energy. The WLAN module may provide a WLAN communications solution including one or more of Wi-Fi direct, a Wi-Fi LAN, or Wi-Fi SoftAP.

The NFC module may generate an RF field whose frequency is a specified frequency (for example, 13.56 MHz), and may send data to a target device (for example, the electronic device 200) near the electronic device 100 by directly modulating the RF field. Alternatively, the NFC module may obtain the tag data in the NFC tag chip in a manner of performing load modulation on the RF field by using an NFC tag chip that is within a specified distance away from the electronic device 100 (for example, within 10 centimeters from the electronic device 100).

In some embodiments, the antenna 1 of the electronic device 100 is coupled to the mobile communications module 150, and the antenna 2 is coupled to the wireless communications module 160, so that the electronic device 100 may communicate with a network and another device by using a wireless communications technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, and/or an IR technology. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 implements a display function by using the GPU, the display screen 194, the application processor, and the like. The GPU is a microprocessor for image processing, and is connected to the display screen 194 and the application processor. The GPU is configured to perform mathematical and geometric computation, and render an image. The processor 110 may include one or more GPUs, and the GPUs execute a program instruction to generate or change display information.

The display screen 194 is configured to display an image, a video, and the like. The display screen 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a mini-LED, a micro-LED, a micro-OLED, a quantum dot light emitting diode (quantum dot light-emitting diode, QLED), or the like. In some embodiments, the electronic device 100 may include one or N display screens 194, where N is a positive integer greater than 1.

The electronic device 100 may implement a photographing function by using the ISP, the camera 193, the video coder/decoder, the GPU, the display screen 194, the application processor, and the like.

The ISP is configured to process data fed back by the camera 193. For example, during shooting, a shutter is pressed, light is transmitted to a photosensitive element of the camera through a lens, an optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a shooting scenario. In some embodiments, the ISP may be disposed in the camera 193.

The camera 193 is configured to capture a static image or a video. An object generates, through a lens, an optical image to be projected to the photosensitive element. The photosensitive element may be a charge coupled device (charge coupled device, CCD) or a complementary metal-oxide-semiconductor (complementary metal-oxide-semiconductor, CMOS) optoelectronic transistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into a standard image signal in a format such as RGB or YUV. In some embodiments, the electronic device 100 may include one or N cameras 193, where N is a positive integer greater than 1.

The digital signal processor is configured to process a digital signal, and may process another digital signal in addition to a digital image signal. For example, when the electronic device 100 selects a frequency, the digital signal processor is configured to perform Fourier transform on frequency energy.

The video codec is configured to: compress or decompress a digital video. The electronic device 100 may support one or more video codecs. Therefore, the electronic device 100 may play or record videos in a plurality of coding formats, for example, a moving picture experts group (moving picture experts group, MPEG) 1, an MPEG 2, an MPEG 3, and an MPEG 4.

The NPU is a neural-network (neural-network, NN) computing processor, quickly processes input information by referring to a structure of a biological neural network, for example, by referring to a mode of transmission between human brain neurons, and may further continuously perform self-learning. Applications such as intelligent cognition of the electronic device 100 may be implemented through the NPU, for example, image recognition, facial recognition, speech recognition, and text understanding.

The internal memory 121 may include one or more random access memories (random access memory, RAM) and one or more non-volatile memories (non-volatile memory, NVM).

The random access memory may include a static random-access memory (static random-access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, for example, a fifth generation DDR SDRAM, generally referred to as a DDR5 SDRAM), and the like.

The non-volatile memory may include a magnetic disk storage device and a flash memory (flash memory).

The flash memory may include, according to an operation principle, NOR FLASH, NAND FLASH, 3D NAND FLASH, and the like; may include, according to a potential level of a cell, a single-level cell (single-level cell, SLC), a multi-level cell (multi-level cell, MLC), a triple-level cell (triple-level cell, TLC), a quad-level cell (quad-level cell, QLC), and the like; and may include, according to a storage specification, universal flash storage (English: universal flash storage, UFS), an embedded multi media card (embedded multi media Card, eMMC), and the like.

The random access memory may be directly read and written by the processor 110, may be configured to store an operating system or an executable program (for example, a machine instruction) of another running program, and may be further configured to store data of a user and an application, and the like.

The non-volatile memory may also store an executable program, store data of a user and an application, and the like, and may be loaded to the random access memory in advance, for the processor 110 to directly read and write.

The external memory interface 120 may be configured to connect to an external non-volatile memory, to extend a storage capability of the electronic device 100. The external non-volatile memory communicates with the processor 110 by using the external memory interface 120, to implement a data storage function. For example, files such as music and a video are stored in the external non-volatile memory.

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal output, and is also configured to convert an analog audio input into a digital audio signal.

The speaker 170A, also referred to as a "loudspeaker", is configured to convert an electrical audio signal into a sound signal.

The receiver 170B, also referred to as an "earpiece", is configured to convert an audio electrical signal into a sound signal.

The microphone 170C, also referred to as a "mike" or a "microphone", is configured to convert a sound signal into an electrical signal.

The pressure sensor 180A is configured to sense a pressure signal, and can convert the pressure signal into an electrical signal. In some embodiments, the pressure sensor 180A may be disposed on the display screen 194. The gyroscope sensor 180B may be configured to determine a motion posture of the terminal 100. The barometric pressure sensor 180C is configured to measure barometric pressure. The magnetic sensor 180D includes a Hall effect sensor, and opening and closing of a flip cover leather case may be detected by using the magnetic sensor 180D. The acceleration sensor 180E may detect magnitudes of accelerations of the terminal 100 in various directions (usually on three axes). The distance sensor 180F is configured to measure a distance. The optical proximity sensor 180G may also be used in a leather case mode or a pocket mode to automatically unlock or lock the screen. The ambient light sensor 180L is configured to sense ambient light brightness. The fingerprint sensor 180H is configured to collect a fingerprint. The temperature sensor 180J is configured to detect a temperature. The touch sensor 180K is also referred to as a "touch panel". The touch sensor 180K may be disposed on the display screen 194, and the touch sensor 180K and the display screen 194 form a touchscreen, which is also referred to as a "touch control screen". The touch sensor 180K is configured to detect a touch operation performed on or near the touch sensor 180K. The touch sensor may transfer the detected touch operation to the application processor to determine a type of a touch event. A visual output related to the touch operation may be provided through the display screen 194. In some other embodiments, the touch sensor 180K may alternatively be disposed on a surface of the terminal 100 at a position different from that of the display screen 194. The bone conduction sensor 180M may obtain a vibration signal. The button 190 includes a power button, a volume button, and the like. The motor 191 may generate a vibration prompt. The indicator 192 may be an indicator light, and may be configured to indicate a charging status and a power change, or may be configured to indicate a message, a missed call, a notification, and the like. The SIM card interface 195 is configured to connect to a SIM card.

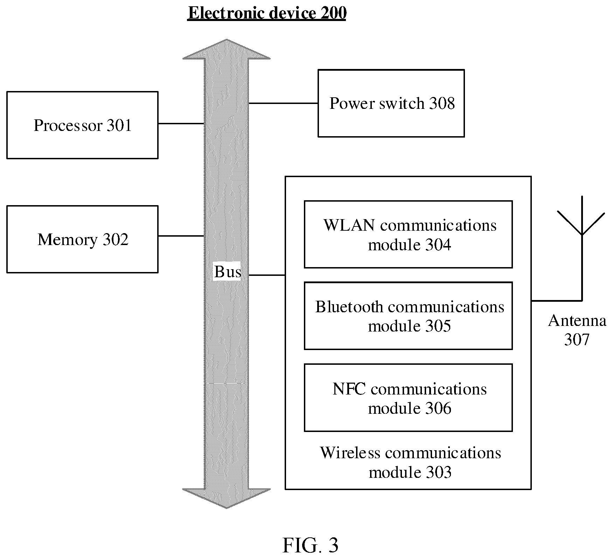

FIG. 3 is a schematic diagram of a hardware structure of an electronic device 200.

As shown in FIG. 3, the electronic device 200 may include a processor 301, a memory 302, a wireless communications module 303, an antenna 307, and a power switch 308.

The processor 301 may be configured to read and execute a computer-readable instruction. In specific implementation, the processor 301 may mainly include a controller, an arithmetic unit, and a register. The controller is mainly responsible for decoding instructions and sending a control signal for an operation corresponding to the instructions. The arithmetic unit is mainly responsible for storing a quantity of register operations, intermediate operation results, and the like that are temporarily stored during instruction execution. In specific implementation, a hardware architecture of the processor 301 may be an application-specific integrated circuit (ASIC) architecture, an MIPS architecture, an ARM architecture, an NP architecture, or the like.

In some embodiments, the processor 301 may be configured to: parse a signal received by the wireless communications module 303 and/or a wired LAN communications processor module 309, and demodulate the signal. The processor 301 may respond based on a parsing result, and perform a corresponding operation, for example, displaying a corresponding web page. In some embodiments, the processor 301 may be further configured to generate a signal, for example, a Bluetooth signal, sent by the wireless communications module 303 to the outside.

The memory 302 is coupled to the processor 301, and is configured to store various software programs and/or a plurality of sets of instructions. In specific implementation, the memory 302 may include a high-speed random access memory, and may further include a non-volatile memory, for example, one or more magnetic disk storage devices, a flash memory, or another non-volatile solid-state storage device. The memory 302 may store an operating system, for example, an embedded operating system such as uCOS^{®}, VxWorks^{®}, or RTLinux^{®}. The memory 302 may further store a communications program, and the communications program may be used to communicate with the electronic device 100 or another electronic device.

The wireless communications module 303 may include one or more of an NFC communications module 306, a WLAN communications module 304, and a Bluetooth communications module 305. In some embodiments, the WLAN communications module 304 may be integrated with another communications module (for example, the Bluetooth communications module 305). The WLAN communications module 304 and/or the Bluetooth module 305 may monitor a signal transmitted by another device (for example, the electronic device 100), for example, a measurement signal or a scanning signal, and may send a response signal, for example, a measurement response or a scanning response, so that the another device (for example, the electronic device 100) may discover the electronic device 200, and establish a wireless communication connection to the another device (for example, the electronic device 100) through one or more of WLAN and Bluetooth or another near filed communication technology, to perform data transmission. The NFC communications module 306 may capture energy of an RF field generated by another electronic device (for example, the electronic device 100), and transmit, in a manner of performing load modulation on the RF field, data to the electronic device (for example, the electronic device 100) that generates the RF field. Alternatively, the NFC communications module 306 may receive data sent by an electronic device (for example, the electronic device 100) that generates an RF field by directly modulating the RF field. The data received by the NFC module 306 is not stored in the NFC module 306, but is sent by the NFC module 306 to the processor 301, and the processor 301 further processes the data.

In some other embodiments, one or more modules of the wireless communications module 303 may also transmit a signal, for example, a broadcast sounding signal or a beacon signal, so that another device (for example, the electronic device 100) can discover the electronic device 200, and transmit data to the another device (for example, the electronic device 100) through WLAN, Bluetooth, NFC, or another near filed communication technology.

The antenna 307 may be configured to transmit and receive an electromagnetic wave signal. Antennas of different communications modules may be multiplexed, or may be independent of each other, to improve antenna utilization.

The power switch 308 may be configured to control a power supply to supply power to the electronic device 200.

In some embodiments, the electronic device 200 may further include a wired LAN communications processor module. The wired LAN communications processor module may be connected to another network device by using a cable and a switch or a router, so that the electronic device 200 may join a local area network.

In some embodiments, the electronic device 200 may further include a display screen (not shown in FIG. 3).

It may be understood that the electronic device 200 shown in FIG. 3 is only an implementation of this embodiment of this application, and does not constitute a specific limitation on the electronic device 200. In actual application, the electronic device 200 may further include more or fewer components than those shown in the figure. This is not limited herein.

The following describes a schematic diagram of a hardware structure of an NFC communications system 40 according to an embodiment of this application.

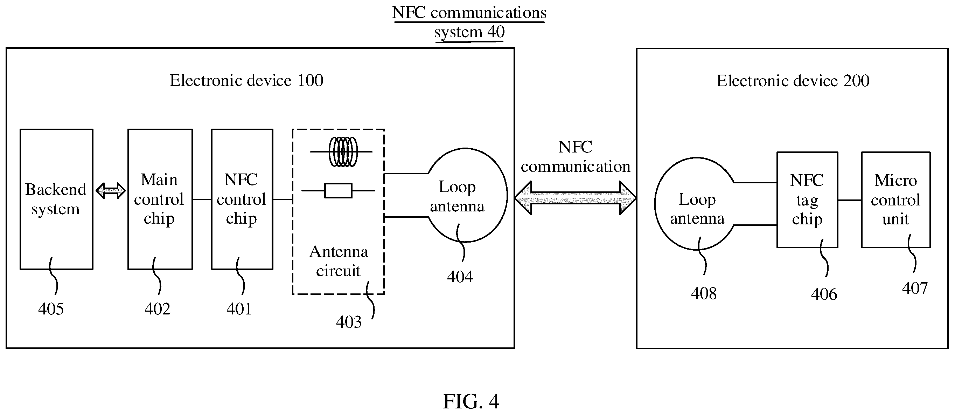

As shown in an example of FIG. 4, the NFC communications system 40 may include an electronic device 100 and an electronic device 200. The electronic device 100 and the electronic device 200 may exchange data through an NFC communications technology.

The electronic device 100 may include but is not limited to an NFC control chip 401, a main control chip 402, an antenna circuit 403, a loop antenna 404, and a backend system 405.

Based on a non-contact radio frequency identification technology, the NFC control chip 401 may be used as a reader/writer for data exchange and collection, and has a capability of communicating with another electronic device (for example, the electronic device 200). The NFC control chip 401 may also include a high-frequency communications circuit module. The high-frequency communications circuit module may generate a high-frequency alternating current (for example, a change of more than 10,000 times per second), and the high-frequency alternating current may form a radio frequency field of a specified frequency (for example, 13.56 MHz).

The main control chip 402 may be configured to perform normal data communication with the NFC control chip 401, and process data received and parsed out by the NFC control chip 401. In addition, the main control chip 402 may also manage an NFC communications process.

The antenna circuit 403 is mainly configured to transfer energy generated by the NFC control chip 401 to the antenna in a maximum form. The antenna circuit 403 may include an electromagnetic compatibility (electromagnetic compatibility, EMC) filter circuit, a matching circuit, and a receiving circuit. The antenna circuit 403 may be configured to filter a high-order harmonic wave to meet an internal electromagnetic compatibility rule. In addition, the antenna circuit 403 may be configured to adjust a transmit load and a resonance frequency, so that the resonance frequency is stable at a specified frequency (for example, 13.56 MHz). Power of the antenna circuit 403 is affected by internal impedance and external impedance of the chip. When the internal impedance is consistent with the external impedance of the chip, the transmit power is the highest. In addition, the antenna circuit 403 may further receive a sine wave signal whose amplitude is from 1.5 V to 3 V.

The loop antenna 404 may be configured to radiate, in a form of an electromagnetic wave, power of a radio frequency signal generated by the NFC control chip 401, and may also receive a radio frequency signal that carries data and that is sent by the electronic device 200.

The backend system 405 may communicate and interact with the main control chip 402, and is configured to process data, perform a corresponding operation, store an instruction, and the like.

In another embodiment, the electronic device 100 may further be integrated with a secure element (secure element, SE) chip, configured to process security-related functions such as sensitive data and an encryption operation.

The electronic device 200 may include but is not limited to an NFC tag chip 406, a micro control unit 407, and a loop antenna 408.

The NFC tag chip 406 may be configured to store related data information of the electronic device 200 and an instruction of an operation that needs to be performed by the electronic device 100. The NFC tag chip 406 cannot generate a radio frequency field of a specified frequency (for example, 13.56 MHz), but sends data by using a radio frequency field of a specified frequency (for example, 13.56 MHz) generated by performing load modulation on the electronic device 100. When an NFC communications function of the electronic device 100 is enabled to continuously generate a radio frequency field with a center frequency of 13.56 MHz, if the NFC tag chip 406 is within a range of the radio frequency field, the NFC tag chip 406 may obtain energy in an electromagnetic induction manner, drive an integrated circuit in the NFC tag chip through the obtained energy, and communicate with the electronic device 100 in a manner of performing load modulation on the radio frequency field.

The micro control unit 407 may be configured to perform normal data communication with the NFC tag chip, and parse and process data received by the NFC tag chip 406. In addition, the electronic device 200 may also transmit and/or write data information to the NFC tag chip 406 by using the micro control unit 407 via a bus connected to the NFC tag chip.

The loop antenna 408 may be configured to capture energy in a radio frequency field generated by the electronic device 100, and transmit the energy to the NFC tag chip 406, or may be configured to perform data communication with the electronic device 100 in a form of radiating or receiving an electromagnetic wave.

It may be understood that the hardware structure of the NFC communications system 40 shown in FIG. 4 is merely an implementation of this embodiment of this application, and does not constitute a specific limitation on the hardware structure of the NFC communications system. In actual application, the hardware structure of the NFC communications system may further include more or fewer components than those shown in the figure. This is not limited herein.

In this embodiment of this application, the NFC tag chip 406 on the electronic device 200 may store tag data. The tag data may be preset in the NFC tag chip before delivery, or may be written into the NFC tag chip 406 by the micro control unit 407 of the electronic device 200. For example, the tag data may be a Bluetooth MAC address of the electronic device 200 and/or a MAC address of a WLAN. The electronic device 100 may generate a radio frequency field of a specified frequency (for example, 13.56 MHz) by using the NFC control chip 401. When the electronic device 100 touches the electronic device 200, or is within a specified distance away from the electronic device 200 (for example, within 10 centimeters from the electronic device 200), the electronic device 200 may capture energy of a radio frequency field in an electromagnetic induction manner by using the loop antenna 408, and transmit the energy to an integrated circuit of the NFC tag chip 406, to drive the integrated circuit to send the tag data to the electronic device 100 in a manner of performing load modulation on the radio frequency field.

Alternatively, the electronic device 100 may send straight-through data on the electronic device 100 to the electronic device 200 in a manner of directly modulating the radio frequency field generated by the NFC control chip 401. After receiving the straight-through data, the NFC tag chip 406 on the electronic device 200 does not store the straight-through data in the NFC tag chip 406, but transmits the straight-through data to the micro control unit 407 by using the bus. After receiving the straight-through data, the micro control unit 407 parses the straight-through data and performs further processing.

In some embodiments, the electronic device 200 may also transmit data information (for example, an answer instruction) on the electronic device 200 to the NFC tag chip 406 by using the micro control unit 407 via the bus, and send the data information to the electronic device 100 in a manner of performing load modulation by the NFC tag chip 406 on the radio frequency field. The data information is not stored in the NFC tag chip 406. It should be noted that, in some embodiments of this application, the process may be referred to as NFC straight-through transmission.

In some embodiments, the NFC control chip 401, the antenna circuit 403, and the loop antenna 404 in the electronic device 100 may be integrated into one chip unit. In some embodiments, the NFC tag chip 406 and the loop antenna 408 in the electronic device 200 may also be integrated into one chip unit.

In some embodiments, the NFC tag chip 406 may be disposed in a detachable apparatus. The NFC tag chip 406 may communicate with the micro control unit 407 by using a communications interface (for example, a USB port or a Type-C port).

The following describes an NDEF standard protocol format provided in an embodiment of this application.

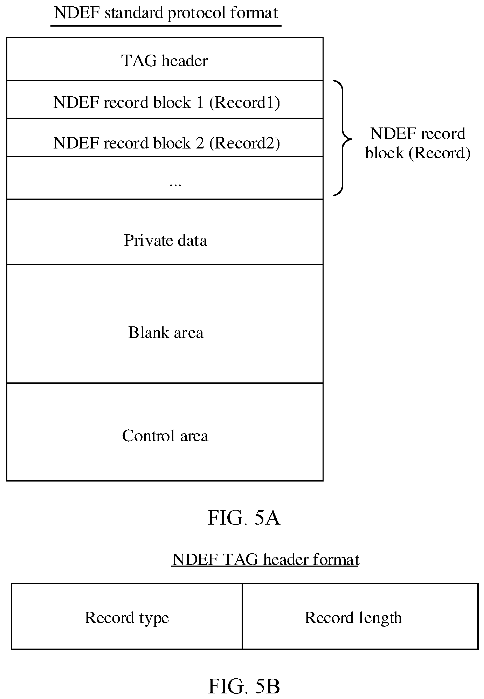

As shown in FIG. 5A, the NDEF standard protocol format includes: a TAG header area, an NDEF record block (Record) area, a private data area, a blank area, and a control area.

As shown in FIG. 5B, the TAG header area includes a record type and a record length of an NDEF message.

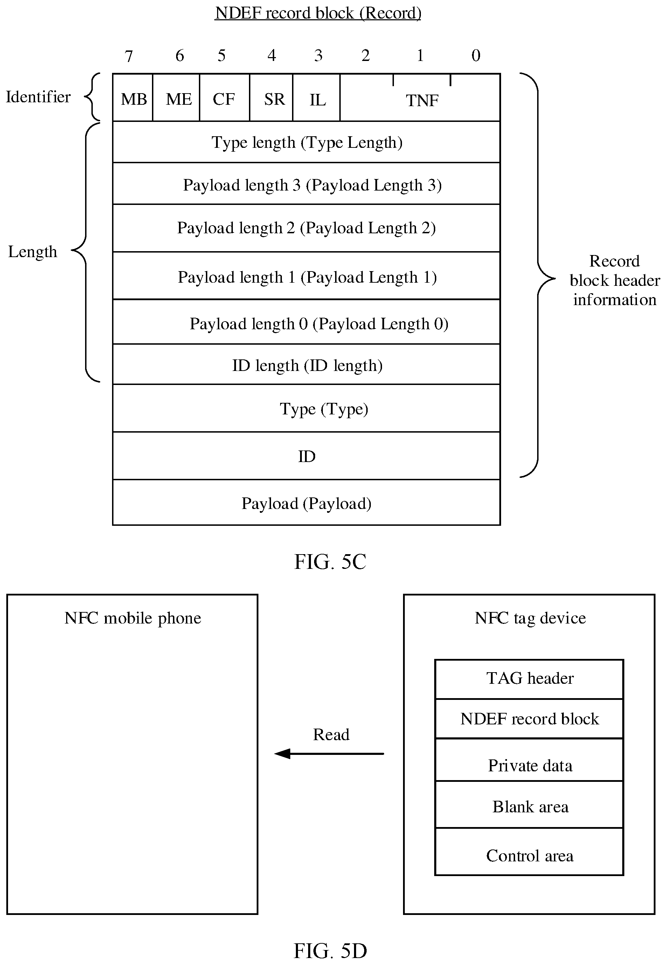

The NDEF record block area includes data information that is actually required between devices and that is transmitted during each interaction between an NFC device and an NFC tag device, for example, a Bluetooth MAC address of the NFC tag device and/or a MAC address of a WLAN. The NDEF record block area may be divided into one or more NDEF record blocks. As shown in FIG. 5C, each NDEF record block area includes record block header information and a payload. The record block header information includes an identifier field, a length field, and a type field. The identifier field may include 6 flag bits, which are as follows.

A message begin (message begin, MB) flag bit that occupies 1 bit (bit) and that indicates a start location of an NDEF record block in the NDEF message. If MB = 1, it indicates that this is a first NDEF record block of the NDEF message.

A message end (message end, ME) flag bit that occupies 1 bit (bit) and that indicates an end location of an NDEF record block in the NDEF message. If ME = 1, it indicates that this is a last NDEF record block of the NDEF message, and if ME = 0, it indicates that the NDEF record block is not the last NDEF record block of the NDEF message, and there are more NDEF record blocks following the NDEF record block.

A chunk flag (chunk flag, CF) flag bit that occupies 1 bit (bit) and that indicates that there is another NDEF record block in the NDEF message. If CF = 0, it indicates that the NDEF message has only this one NDEF record block, and if CF = 1, it indicates that the NDEF message has another NDEF record block.

A short record (short record, SR) flag bit that occupies 1 bit (bit). If SR = 1, it indicates that a content length of the record is an octet, and only one of four Payload Length fields in FIG. 5C is required. A payload (Payload) length is limited to 255 bytes. The short record is used to simplify encapsulation of content whose length is less than 255 bytes.

An identity length (identity length, IL) flag bit that occupies 1 bit (bit) and that indicates whether the record block header information includes two fields: an identity (identity, ID) and the identity length (ID Length). If IL = 1, the ID length appears in the record block header information with a length of one octet. If IL = 0, an ID length field is ignored from the header information, and the ID field is also ignored.

A type name format (type name format, TNF) flag bit that occupies 3 bits (bit) and that indicates a type of the payload. For example, some common data types may be shown in Table 1:

**Table 1**

| TNF name | Value |
|---|---|
| Empty | 0x00 |
| NFC Forum Well-Known Type | 0x01 |
| MIME | 0x02 |
| Absolute URL | 0x03 |
| NFC Forum External Type | 0x04 |
| Unknown | 0x05 |
| Unchanged | 0x06 |
| Reserved | 0x07 |

It can be learned from Table 1 that, when the value of the TNF flag bit is "0x00", it indicates that a type of the payload is Empty (Empty). When the value of the TNF flag bit is "0x01", it indicates that the type of the payload is NFC Forum Well-Known Type (NFC Forum Well-Known Type). The NFC Forum Well-Known Type includes a uniform resource locator (uniform resource locator, URL), a text, and the like, and the NFC Forum Well-Known Type complies with an NFC Forum record type definition (record type definition, RTD) specification. When the value of the TNF flag bit is "0x02", it indicates that the type of the payload is multipurpose Internet mail extension (multipurpose Internet mail extension, MIME). When the value of the TNF flag bit is "0x03", it indicates that the type of the payload is an absolute uniform resource locator (absolute uniform resource locator, Absolute URL). When the value of the TNF flag is 0x04, it indicates that the type of the payload is NFC Forum External Type (NFC Forum External Type). When the value of the TNF flag bit is "0x05", it indicates that the type of the payload is Unknown (Unknown). When the value of the TNF flag bit is "0x06", it indicates that the type of the payload is used for an NFC Record block (Unchanged). For example, a large piece of data needs to be carried by using a plurality of NFC Records, and for another NFC Record block corresponding to the data other than a first NFC Record block, a TNF should be set to Unchanged. When the value of the TNF flag bit is "0x07", it indicates that the record is reserved (Reserved) and is not used currently.

It may be understood that the example shown in Table 1 is merely used to explain this application, and should not constitute a limitation.

In the foregoing seven types of TNF, the NFC Forum defines the NFC Forum Well-Known Type (which may also be referred to as WKT) by using the RTD specification. For example, a common type in the WKT may further include subtypes shown in the following Table 2.

**Table 2**

| Name | Purpose |
|---|---|
| URL Record Type | Used to store URL data, and a value of Type field is "U" |
| Text Record Type | Used to store text data, and a value of Type field is "T" |
| Signature Record Type | Used to store digital signature data, and a value of Type field is "Sig" |
| Smart Poster Record Type | Intelligent poster, which is used to store consultation information related to the poster, such as images and related introductions, and a value of Type field is "Sp" |
| Generic Control Record Type | Used to transfer control information, and a value of Type field is "Ge" |

In addition to the identifier field, the record block header information further includes other fields, for example, a type length (Type Length) field, which indicates a length of the type (Type) field in a header message. A payload length (Payload Length) field is divided into 4 sub-fields in total, for example, a Payload Length 0 sub-field, a Payload Length 1 sub-field, a Payload Length 2 sub-field, and a Payload Length 3 sub-field. The four sub-fields jointly indicate a length of a Payload field. If the SR is set to 1, the record block header information includes only one Payload Length field. ID Length indicates a length of an ID field. A type (Type) field indicates a type of the payload. The NFC Forum defines a type such as a URL or an MIME, which is intended to facilitate different applications to process data of different types. For example, data of the URL type is handed over to a browser for processing. It is necessary to use the ID together with the payload of the URL type. It enables an NFC record to point to another NFC record through the ID.

FIG. 5D to FIG. 5G show an example of a tag data update procedure based on an NDEF standard protocol format.

An example in which an electronic device involved in the update procedure is a mobile phone (which may also be referred to as an NFC mobile phone) having an NFC module and a device (which may also be referred to as an NFC tag device) having an NFC tag module is used. For related descriptions of the foregoing electronic device, refer to the descriptions in the communications system 10. Details are not described herein again.

As shown in FIG. 5D, the NFC mobile phone may obtain tag data stored in the NFC tag device by generating a radio frequency field whose frequency is a specified frequency (for example, 13.56 MHz). For a specific implementation process in which the NFC mobile phone obtains the tag data, refer to the descriptions of the embodiment shown in FIG. 4, and details are not described herein again. The tag data is in the foregoing NDEF standard protocol format. After obtaining the tag data from the NFC tag device through the radio frequency field, the NFC mobile phone may read, through a data reading instruction, for example, a READ instruction and/or a FAST READ instruction, specific data information stored in the tag data.

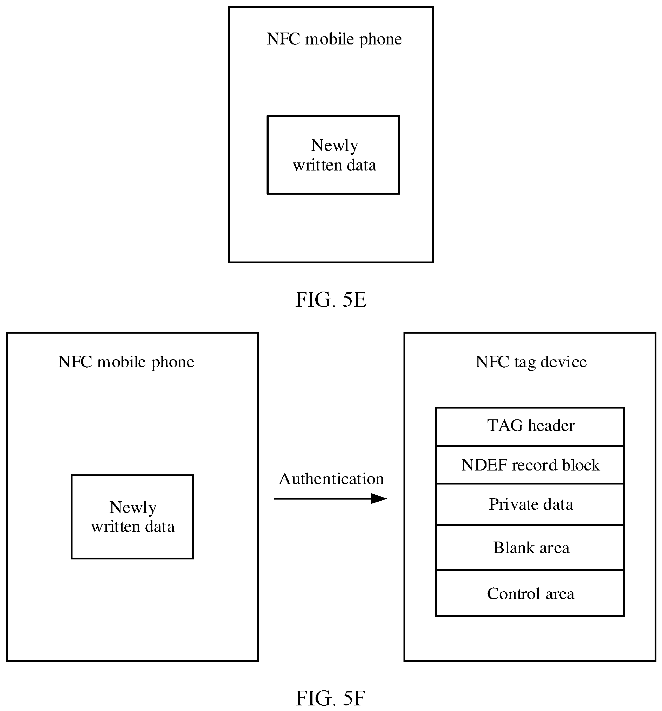

As shown in FIG. 5E, after reading, in the foregoing manner, specific content stored in the tag data, the NFC mobile phone may perform an operation of updating the tag data.

As shown in FIG. 5F, after the NFC mobile phone completes the operation of updating the tag data, in consideration of data security, the NFC mobile phone may confirm, with the NFC tag device by using an authentication instruction, for example, an AUTH instruction, whether the NFC mobile phone has a right to write updated data back to the NFC tag device. If yes, the NFC mobile phone may write the updated tag data back to the NFC tag device.

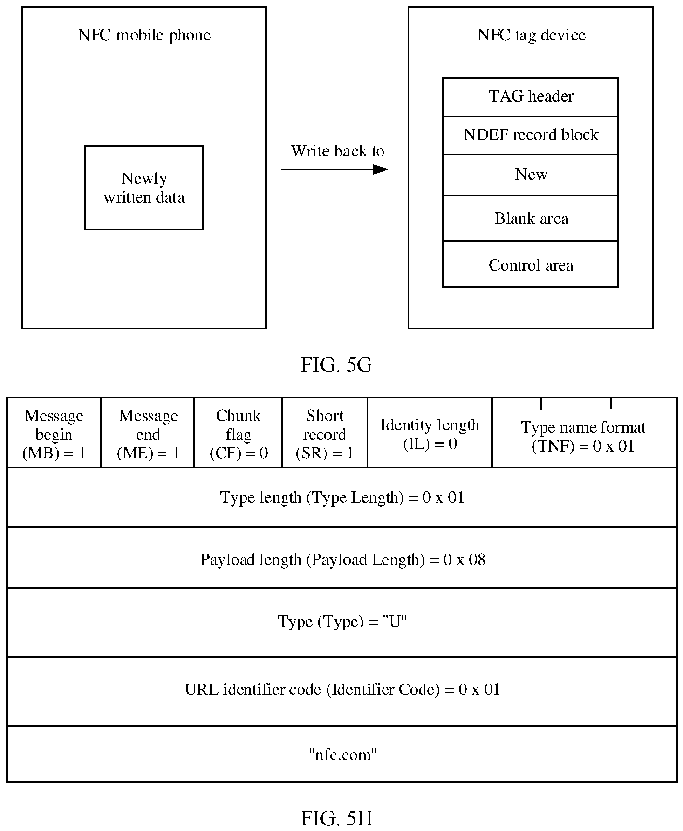

As shown in FIG. 5G, when the NFC mobile phone confirms, through the foregoing steps, that the NFC mobile phone has the right to write the updated tag data back to the NFC tag device, the NFC mobile phone may write the updated tag data back to the NFC tag device by using a data write-back instruction, for example, a WRITE instruction. An update part of the tag data may be stored in a private data area in the NDEF standard protocol.

The following describes, by using an example, data encapsulation based on an NDEF standard protocol format provided in an embodiment of this application.

Specifically, for example, a piece of information "http://www.nfc.com" is encapsulated. The piece of information belongs to a URL record type. For an NFC Record of this type, the NFC Forum defines a structure of a payload of the NFC Record, as shown in Table 3.

**Table 3**

| Field name | Length | Description |
|---|---|---|
| Identifier Code | 1 byte | Identifier code, which indicates an ID code of the URL (also referred to as ID code), and will be described in detail subsequently |
| URL | N byte | Specific content of URL |

The ID code of the URL is shown in Table 4:

**Table 4**

| ID Code | Meaning |
|---|---|
| 0x00 | No prefix |
| 0x01 | http://www |
| 0x02 | https://www |
| 0x03 | http:// |
| 0x04 | https:// |
| 0x05 | tel: |
| 0x06 | mailto: |
| 0x07 | ftp://anonymous: anonymous@ |
| 0x08 | ftp://ftp. |
| 0x09 | ftps:// |

It can be learned from the foregoing Table 4 that when a value of the ID Code is "0x00", it indicates that the URL record has no prefix. When a value of the ID Code is "0x01", it indicates that the prefix of the URL record is "http://www". When a value of the ID Code is "0x02", it indicates that the prefix of the URL record is "https://www". When a value of the ID Code is "0x03", it indicates that the prefix of the URL record is "http://". When a value of the ID Code is "0x04", it indicates that the prefix of the URL record is "https://". When a value of the ID Code is "0x05", it indicates that the prefix of the URL record is "tel:". When a value of the ID Code is "0x06", it indicates that the prefix of the URL record is "mailto:". When a value of the ID Code is "0x07", it indicates that the prefix of the URL record is "ftp://anonymous: anonymous@". When a value of the ID Code is "0x08", it indicates that the prefix of the URL record is "ftp://ftp.". When a value of the ID Code is "0x09", it indicates that the prefix of the URL record is "ftps://".

It may be understood that the example shown in Table 4 is merely used to explain this application, and should not constitute a limitation.

NFC Record information carrying "http://www.nfc.com" includes only one NFC Record without a block. Therefore, this unique NFC Record may separately set a flag bit of MB and ME to 1. A data amount of the piece of information is less than 255 bytes. Therefore, an SR flag bit is 1. Data carried in the record is of the URL type, which is a WKT type. Therefore, a value of the TNF is 0x01. Because the piece of information "http://www.nfc.com" belongs to the URL record type, referring to Table 2, a value of a corresponding Type field is "U", and a value of a corresponding Type Length field is 0x01.

In a payload part of the NFC Record, the prefix of the payload part is "http://www", referring to Table 4, a value of an Identifier Code field is 0x01 and occupies 1 byte, while a data part is "nfc.com" and occupies 7 bytes, and a length of an entire payload part is 8 bytes. Therefore, a value of a Payload Length field in the record block header information is "0x08".

Encapsulation of complete information of the NFC Record is shown in FIG. 5H.

The following describes tag data in an NDEF protocol format and an instruction format used for NFC straight-through data transmission in a process of completing the NFC communication method according to an embodiment of this application. For a specific process of NFC straight-through transmission, refer to the foregoing embodiment shown in FIG. 4.

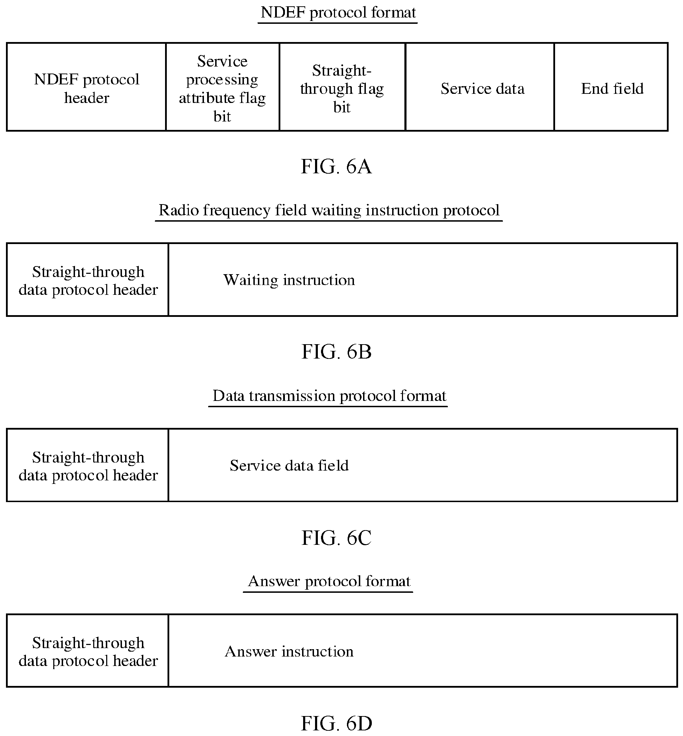

For example, an electronic device 200 is a device for transmitting an NDEF protocol, and an electronic device 100 is a device for obtaining the NDEF protocol. As shown in FIG. 6A, the data format based on the NDEF protocol includes an NDEF protocol header, a service processing attribute flag bit, a straight-through flag bit, a service data area, and an end field.

For the NDEF protocol header area, refer to related descriptions of recording block header information in the NDEF standard protocol format shown in FIG. 5A to FIG. 5C. Details are not described herein again.

The service processing attribute flag bit may be used to indicate an operation that needs to be completed in current NFC communication by the electronic device 100 that obtains the NDEF protocol. For example, when the service processing attribute flag bit is set to "0x01", it indicates that the electronic device 200 supports establishment of a Bluetooth connection through NFC. Therefore, when the electronic device 100 obtains, from an NFC tag chip of the electronic device 200, tag data whose value of the service processing attribute flag bit is "0x01", the electronic device 100 may establish a Bluetooth connection to the electronic device 200. When the service processing attribute flag bit is set to "0x02", it indicates that the electronic device 200 supports a projection service. Therefore, when the electronic device 100 obtains, from the NFC tag chip of the electronic device 200, the tag data whose value of the service processing attribute flag bit is "0x02", the electronic device 200 may receive projection data sent by the electronic device 100, and perform projection display based on the projection data.

The straight-through flag bit may be used to indicate whether the electronic device 200 supports obtaining, in an NFC straight-through transmission manner, the data sent by the electronic device 100. For example, when the straight-through flag bit is set to 1, the electronic device 200 supports obtaining, in the NFC straight-through transmission manner, the data sent by the electronic device 100. When the straight-through flag bit is set to 0, the electronic device 200 does not support obtaining, in the NFC straight-through transmission manner, the data sent by the electronic device 100.

The service data area may be used to store related information of the electronic device 200, for example, a Bluetooth MAC address of the electronic device 200 and/or a MAC address of a WLAN.

The end field may be used to indicate an end location of an NDEF record block. For example, when the end field is set to 1, it indicates that this is a last record of an NDEF message. If the end field is set to 0, it indicates that there will be more records.

FIG. 6B shows an example of a format of a radio frequency field waiting instruction protocol used in an NFC straight-through transmission process. Before the electronic device 100 sends straight-through data to the electronic device 100 in the NFC straight-through transmission manner, the electronic device 100 may send the radio frequency field waiting instruction to the electronic device 200. The radio frequency field waiting instruction may be used to instruct the electronic device 200 to keep receiving data sent by the electronic device 100 in the NFC straight-through transmission manner. In this way, it can be ensured that in a process in which the electronic device 100 prepares straight-through data to be sent, a radio frequency field may not be disconnected within a specific time threshold because no data information is transmitted, thereby avoiding interruption of an NFC straight-through transmission link between the electronic device 100 and the electronic device 200.

The radio frequency field waiting instruction protocol may include a straight-through data protocol header and a waiting instruction.

The straight-through data protocol header may include but is not limited to fields such as a version number field, a data length field, a type field, and a flag bit. The version number field may be used to indicate a version of the straight-through data protocol. The data length field may be used to indicate a byte length of data information included in the straight-through data protocol. The type field may be used to indicate a data type of the straight-through data protocol. For example, when a value of the type field is "0x01", it indicates that the data type of the straight-through data protocol is the radio frequency field waiting instruction. A type and a function of a flag bit field may be the same as or different from those of a flag bit field in the foregoing NDEF standard protocol. This is not limited in this application.

The waiting instruction may include specified character data of a specified byte length. For example, the waiting instruction may be "0x33".

FIG. 6C shows an example of a data transmission protocol format used in an NFC straight-through transmission process. The data transmission protocol format may be used by the electronic device 100 to send data information to the electronic device 200 in an NFC straight-through transmission manner. After obtaining and parsing the protocol, the electronic device 200 performs a corresponding operation. The data transmission protocol format may include a straight-through data protocol header and a service data field.

For the straight-through data protocol header, refer to related descriptions of the straight-through data protocol header in the foregoing embodiment shown in FIG. 6B, and details are not described herein again.

The service data field may include related data information transmitted by the electronic device 100 to the electronic device 200, for example, application account login information.

FIG. 6D shows an example of an answer protocol format used in an NFC straight-through transmission process. In a process of transmitting NFC straight-through data, the electronic device 200 may send the answer protocol to the electronic device 100, to indicate whether data transmitted by the electronic device 100 is received. The answer protocol format may include a straight-through data protocol header and an answer instruction.

For the straight-through data protocol header, refer to related descriptions of the straight-through data protocol header in the foregoing embodiment shown in FIG. 6B, and details are not described herein again.

The answer instruction indicates whether the electronic device 200 receives the data transmitted by the electronic device 100. For example, when an answer field is set to 1, it indicates that the electronic device 200 has successfully received the data sent by the electronic device 100. When the answer field is set to 0, it indicates that the electronic device 200 does not receive the data sent by the electronic device 100, and the electronic device 100 needs to resend the data.

It may be understood that setting of the protocol field is merely an example for describing the protocol format provided in this embodiment of this application, and does not constitute any limitation on this application.

The following describes an NFC communication method according to an embodiment of this application.

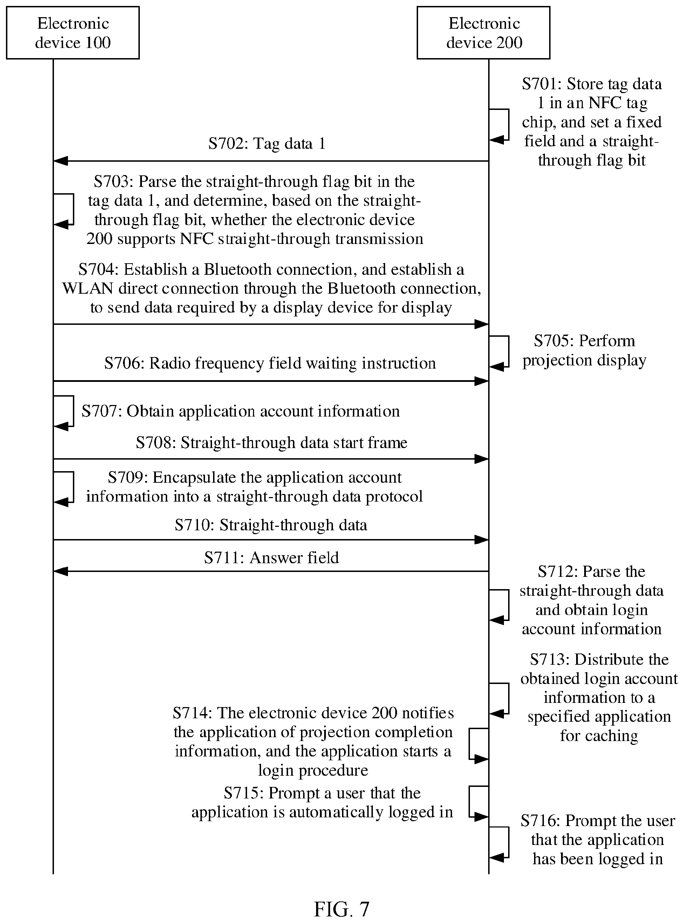

FIG. 7 is a schematic flowchart of an NFC communication method according to an embodiment of this application.

In some application scenarios, when an electronic device 100 approaches an electronic device 200 (that is, the electronic device 100 touches the electronic device 200, or is within a specified distance away from the electronic device 200 (for example, within 10 centimeters from the electronic device 200)), the electronic device 100 (for example, a mobile phone) may read information such as a Bluetooth MAC address of the electronic device 200 from an NFC tag chip of the electronic device 200 (for example, a display device). Then, the electronic device 100 may establish a Bluetooth connection to the electronic device 200, and establish a WLAN direct connection to the electronic device 200 through the Bluetooth connection. The electronic device 100 may send projection data to the electronic device 200 through the WLAN direct connection for display. In addition, the electronic device 100 may further send account information of a specified application to the electronic device 200 in an NFC straight-through transmission manner, and instruct the electronic device 200 to log in to the specified application by using the account information. In this way, when the electronic device 100 approaches the electronic device 200 through one touch, an operation of projection from the electronic device 100 to the electronic device 200 and an operation of synchronizing the account information of the specified application on the electronic device 100 to the electronic device 200 can be simultaneously completed, so that the electronic device 200 can automatically log in to the specified application, thereby reducing operation steps of a user and improving user experience.

In this application scenario, the electronic device 100 may be referred to as a first electronic device, the electronic device 200 may be referred to as a second electronic device, an NFC control chip in the electronic device 100 may be referred to as a first NFC control chip, and the NFC tag chip in the electronic device 200 may be referred to as a first NFC tag chip.

As shown in FIG. 7, the method may include the following steps.

S701: The electronic device 200 stores tag data 1 in the NFC tag chip, and sets a fixed field and a straight-through flag bit in the tag data 1 (which may also be referred to as first tag data).

A format of the tag data 1 may be based on the NDEF protocol format in the embodiment shown in FIG. 6A. The tag data 1 may include an NDEF protocol header, a service processing attribute flag bit, a straight-through flag bit, service data, and an end field. The electronic device 200 may set the fixed field and the straight-through flag bit. For descriptions of the NDEF protocol header, refer to related descriptions in the embodiment of FIG. 6A. Details are not described herein again. The service processing attribute flag bit may be used to indicate a service supported by the tag data 1. For example, when a value of the service processing attribute flag bit is "0x02" (which may also be referred to as a first attribute), it indicates that the tag data 1 is used for a projection service. In other words, when the electronic device 100 obtains the tag data 1 and reads that the service processing attribute flag bit in the tag data 1 is "0x02", the electronic device 100 may send the projection data to the electronic device 200. The straight-through flag bit may be used to indicate whether the electronic device 200 can receive, in the NFC straight-through transmission manner, data sent by the electronic device 100. For example, when a value of the straight-through flag bit is 1, it indicates that the electronic device 200 can receive, in the NFC straight-through transmission manner, the data sent by the electronic device 100. The service data may store data information related to the electronic device 200. For example, the service data may store a Bluetooth MAC address of the electronic device 200 and/or a MAC address of a WLAN of the electronic device 200. The end field may be used to indicate an end location of data information in the tag data 1.

In some embodiments of this application, the tag data 1 may be pre-stored in the NFC tag chip before the electronic device 200 is delivered from a factory. In some other embodiments of this application, the tag data 1 may also be written into the NFC tag chip in real time by the electronic device 200 by using a micro processing unit via a bus connected to the NFC tag chip. This is not limited in this application.

S702: The electronic device 100 enables NFC communication, and obtains the tag data 1 from the electronic device 200.

Specifically, the electronic device 100 may enable NFC communication when approaching the electronic device 200. In other words, the electronic device 100 may generate a radio frequency field of a specified frequency (for example, 13.56 MHz) by using the NFC control chip. In a range of the radio frequency field, the NFC tag chip in the electronic device 200 may send, in a manner of performing load modulation on the radio frequency field, the tag data 1 stored in the NFC tag chip to the electronic device 100, so that the electronic device 100 obtains the tag data 1.

The electronic device 100 may receive an input (for example, a tap) of the user for an NFC control in a drop-down list, and in response to the input for the NFC control, the electronic device 100 may enable the radio frequency field.

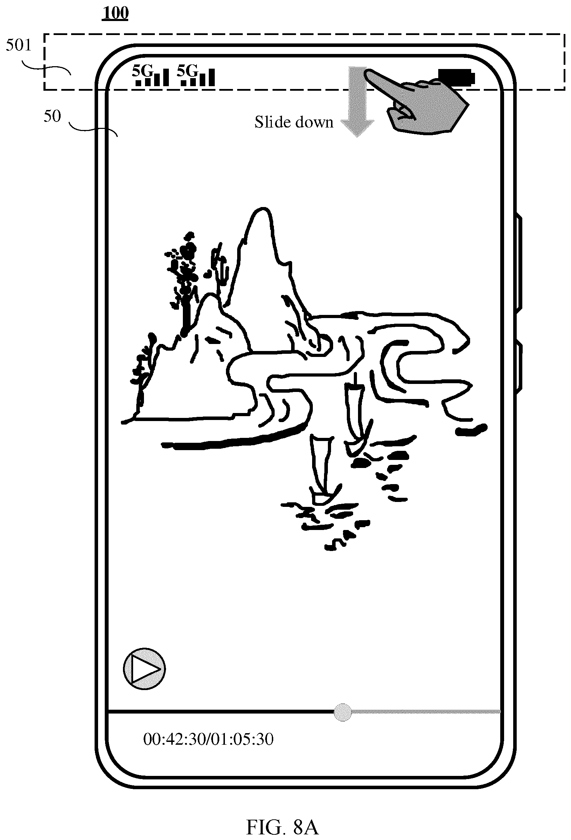

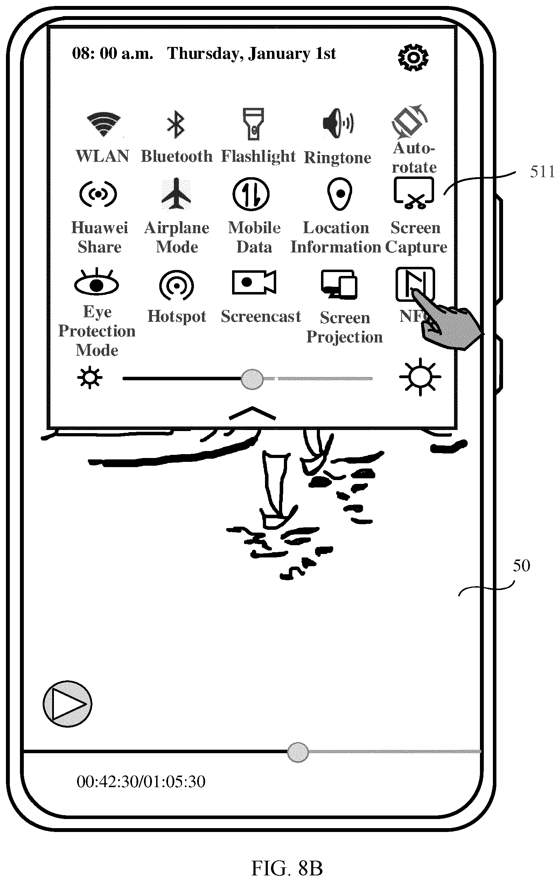

The electronic device 100 may display a user interface including a plurality of application icons (for example, a weather application icon, a calendar application icon, and a video application icon). The electronic device 100 may receive a touch operation (for example, a tap) performed by the user on an icon of a video application (which may also be referred to as a first application), and in response to the touch operation, for example, as shown in FIG. 8A, the electronic device 100 may display a video playback screen 50 (which may also be referred to as a first interface), and the video playback screen includes a video image, a play/pause control, and a progress bar. When the electronic device 100 detects a down-slide gesture operation on a status bar 501, in response to the gesture operation, as shown in FIG. 8B, the electronic device 100 may display a drop-down list window 511 on the video playback screen 50.

As shown in FIG. 8B, the drop-down list window 511 may include an NFC switching tool 511A and another switching tool of one or more functions (for example, a Wi-Fi control, a flashlight control, and a location information control). When the electronic device 100 detects a touch operation (for example, a tap) on the NFC switching tool 511A in the window 511, in response to the operation, the electronic device 100 may enable an NFC function, that is, the NFC control chip in the electronic device 100 may generate a radio frequency field of a specified frequency (for example, 13.56 MHz). The electronic device 100 may receive the tag data 1 that is stored in the NFC tag chip and that is sent by the electronic device 200 in a manner of performing load modulation on the radio frequency field.

In some other embodiments, when approaching the electronic device 200, the electronic device 100 may enable NFC communication in response to voice information collected by a microphone (for example, "enabling NFC communication"), to generate a radio frequency field of a specified frequency (for example, 13.56 MHz). It may be understood that how to enable NFC communication of the mobile phone is not limited in this application.

S703: The electronic device 100 parses the straight-through flag bit in the tag data 1, and determines, based on the straight-through flag bit, whether the electronic device 200 supports NFC straight-through transmission.

Specifically, the electronic device 100 may learn, by parsing the straight-through flag bit in the tag data 1, whether the electronic device 200 receives the data sent by the electronic device 100 through the NFC straight-through transmission. For example, when parsing and reading that a value of the straight-through flag bit in the tag data 1 is 1 (which may also be referred to as a first value), the electronic device 100 learns that the electronic device 200 may receive the data sent by the electronic device 100 in the NFC straight-through transmission manner, and the electronic device 100 may perform an operation of obtaining account information of a specified application (for example, a video application).

The specified application may be an application currently displayed by the electronic device 100 in a foreground.

In a possible implementation, the specified application may also be a preset application (for example, a "Huawei video application").

S704: The electronic device 100 and the electronic device 200 establish a Bluetooth connection, and establish a WLAN direct connection through the Bluetooth connection. The electronic device 100 sends, through the WLAN direct connection, data (which may also be referred to as first display data) required by the electronic device 200 for display.

Specifically, the electronic device 100 may obtain the Bluetooth MAC address of the electronic device 200 by obtaining and parsing the received tag data 1, and the electronic device 100 may establish a Bluetooth connection to the electronic device 200 based on the Bluetooth MAC address. Then, the electronic device 100 may establish a WLAN direct connection to the electronic device 200 through the Bluetooth connection, and send, through the WLAN direct connection, data required by the electronic device 200 for projection display. In this embodiment provided in this application, projection information sent by the electronic device 100 may be URL information of a video or a picture that needs to be projected and displayed by the electronic device 200. In some other embodiments, projection information sent by the electronic device 100 may also be real-time data information of a video or a picture displayed by the electronic device 100. This is not limited in this application.

In some other embodiments, the electronic device 100 and the electronic device 200 may further establish a Wi-Fi connection, and the electronic device 100 may send, through the Wi-Fi connection, data required by the electronic device 200 for projection display. Therefore, the NFC tag chip in the electronic device 200 may store a service set identifier (service set identifier, SSID) and a password of a wireless local area network connected to the electronic device 200. The electronic device 100 may obtain the SSID and the password by using the received tag data 1, and then connect to a same wireless local area network as the electronic device 200.

In the foregoing process, the electronic device 100 and the electronic device 200 may establish a Bluetooth connection in response to a touch operation (for example, a tap) performed on a specified control, and establish a WLAN direct connection through the Bluetooth connection. The electronic device 100 may send the projection data to the electronic device 200 through the WLAN direct connection.

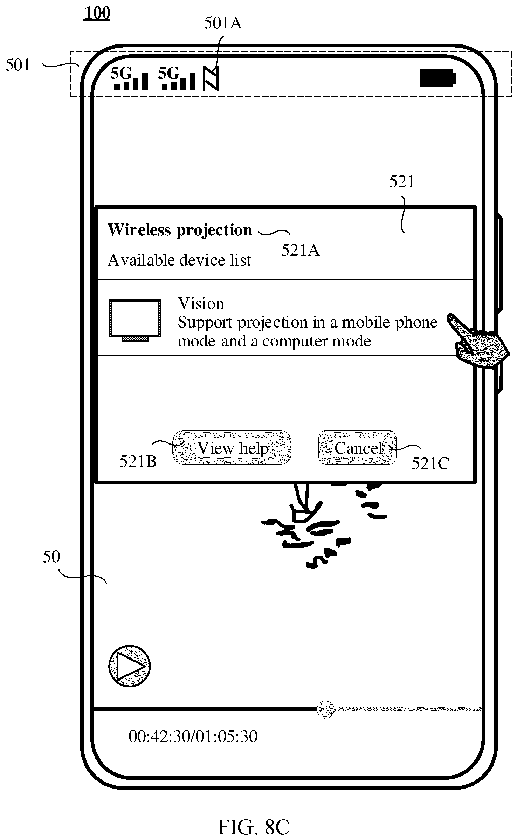

For example, as shown in FIG. 8C, the electronic device 100 may display a window 521 and an NFC communications icon 501A on the video playback screen 50.

The NFC communications icon 501A may be displayed in the status bar 501, and is used to inform the user that the electronic device 100 has enabled NFC communication. The window 521 may display a current window page indicator 521A and a corresponding text description, used to indicate a current window page. For example, the current window page indicator 521A may be text information "wireless projection", and the corresponding text description may be "Available device list". Not limited to text information, the current window page indicator 521Amay also be an icon. The window 521 may display one or more device options, and the one or more device options may correspond to corresponding device names and text descriptions. For example, a device name corresponding to a device option of the electronic device 200 may be "Vision", and a corresponding text description may be "Support projection in a mobile phone mode and a computer mode". The window 521 may further display a "View help" control 521B and a "Cancel" control 521C, and may be configured to monitor a touch operation (for example, a tap) on the control. In response to the operation, the electronic device 100 may display a text page that helps the user learn how to perform a wireless projection operation, or no longer display the window 521.

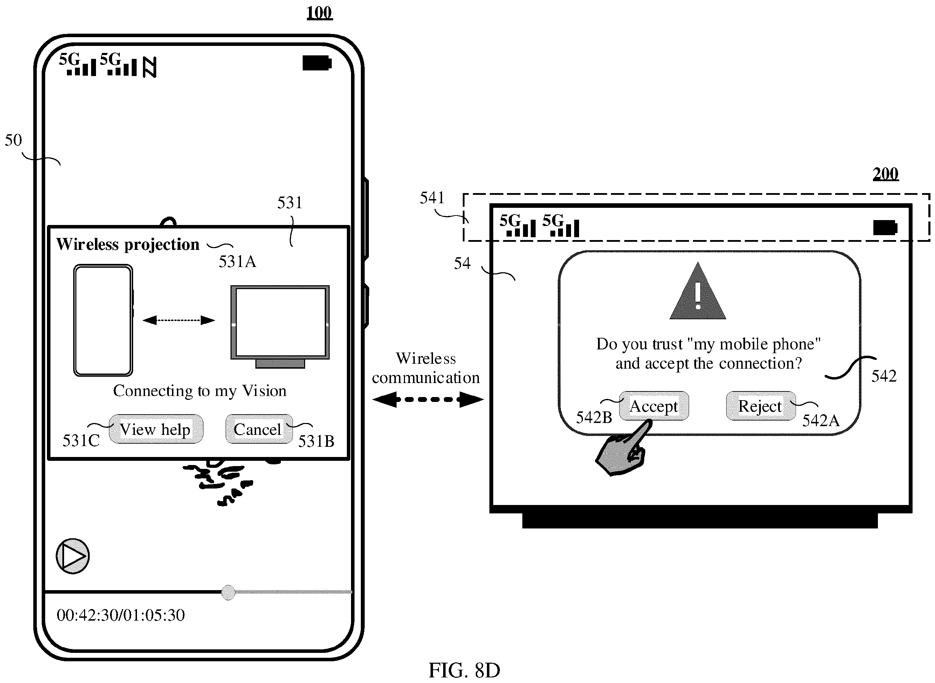

The electronic device 100 may detect a touch operation (for example, a tap) performed on a device option displayed on the electronic device 100. In response to the operation, as shown in FIG. 8D, the electronic device 100 may display a window 531 on the video playback screen 50, and the electronic device 200 may display a video playback screen 54. The electronic device 100 may perform wireless communication with the electronic device 200 through NFC.

The window 531 may display a current window page indicator 531A and a corresponding text description, used to indicate a current window page. For example, the current window page indicator 531A may be text information "wireless projection", and the corresponding text description may be "Connecting to my Vision". Not limited to text information, the current window page indicator 531A may also be an icon. The window 531 may further display a "Cancel" control 531B and a "View help" control 531C, and may be configured to monitor a touch operation (for example, a tap) on the control. In response to the operation, the electronic device 100 may display a text page that helps the user learn how to perform a wireless projection operation, or no longer display the window 531.

The video playback screen 54 may include a status bar 541 and a prompt box 542. For descriptions of the status bar 541, refer to the descriptions of the status bar 501 in the video playback screen 50. Details are not described herein again. The prompt box 542 may be used to prompt the user whether to agree to establish a wireless connection between the electronic device 100 and the electronic device 200. For example, prompt information displayed in the prompt box 542 may be text information "Do you trust "my mobile phone" and accept the connection?". In addition to the text information, the prompt information may further be a voice output by the electronic device 200, prompt information of another type, or the like. This is not limited in this application. The prompt box 542 may further display an "Accept" control 542B and a "Reject" control 542C, so that the user selects whether to agree to establish a wireless connection between the electronic device 100 and the electronic device 200. In response to the touch operation (for example, a tap) performed on the control, the electronic device 200 may perform an operation, corresponding to the control, of accepting establishing a wireless connection between the electronic device 100 and the electronic device 200, or perform an operation of rejecting establishing a wireless connection between the electronic device 100 and the electronic device 200.

S705: The electronic device 200 performs projection display.

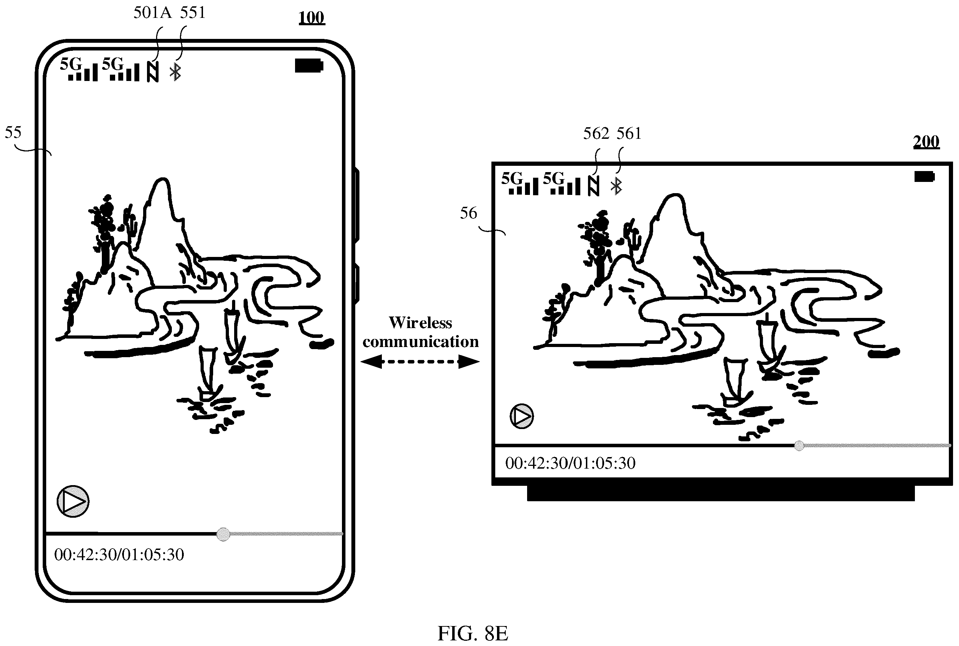

When the electronic device 200 detects the touch operation (for example, a tap) performed by the user on the "Accept" control 542B displayed in the prompt box 542, the electronic device 200 may establish a wireless connection to the electronic device 100 in response to the operation. As shown in FIG. 8E, the electronic device 100 may display an NFC communications icon 501A and a Bluetooth icon 551 on the video playback screen 50. The electronic device 200 may display a user interface 56 (which may also be referred to as a second interface).

For descriptions of the NFC communications icon 501A, refer to related descriptions in FIG. 8C. Details are not described herein again.

The Bluetooth icon 551 is used to prompt the user that the electronic device 100 establishes a wireless communication connection to the electronic device 200 through Bluetooth.

An interface element on the user interface 56 may be partially or completely the same as an interface element (for example, a control, an icon, or a text) displayed on the electronic device 100. Details are not described herein again.

S706: The electronic device 100 sends a radio frequency field waiting instruction, to keep a radio frequency field communications link uninterrupted.

Specifically, in this embodiment of this application, the electronic device 200 may obtain, in the NFC straight-through transmission manner, the data sent by the electronic device 100. Therefore, when performing projection display, the electronic device 200 may also obtain, in the NFC straight-through transmission manner, login information of a related application account sent by the electronic device 100. When the electronic device 100 has not sent the login information, the electronic device 100 may send the radio frequency field waiting instruction to the electronic device 200 in the NFC straight-through transmission manner, to keep the radio frequency field communications link uninterrupted. For descriptions of the radio frequency field waiting instruction, refer to the descriptions in the embodiment shown in FIG. 6B, and details are not described herein again.

S707: The electronic device 100 obtains the account information of the specified application.

Specifically, the electronic device 100 may obtain login account information of the specified application from a server end and/or local memory space.

For example, the electronic device 100 currently displays a video application in the foreground. The electronic device 100 may obtain login account information (including an account ID, an account password, and the like) of the video application.

S708: The electronic device 100 sends a straight-through data start frame.

Specifically, after obtaining the login account information of the specified application, the electronic device 100 may send the straight-through data start frame to the electronic device 200 in the NFC straight-through transmission manner, to prompt the electronic device 200 that the electronic device 100 may send the straight-through data to the electronic device 200. The straight-through data start frame may be in an NDEF protocol format, and a content field of the straight-through data start frame may be specified character data of a specified field length, for example, "0x10".

S709: The electronic device 100 encapsulates the login account information of the specified application and an identifier of the specified application into a straight-through data protocol.

Specifically, for a format of the straight-through data protocol, refer to the descriptions in the embodiment shown in FIG. 6C, and details are not described herein again.

S710: The electronic device 100 sends, in the NFC straight-through transmission manner, application account information (which may also be referred to as straight-through data) that has been encapsulated into the straight-through data protocol.

S711: The electronic device 200 sends an answer field in the NFC straight-through transmission manner.

Specifically, the electronic device 200 may send the answer field in the NFC straight-through transmission manner, to indicate whether the electronic device 200 receives the straight-through data sent by the electronic device 100. For descriptions of the answer field, refer to the descriptions in the embodiment shown in FIG. 6D. Details are not described herein again.

S712: The electronic device 200 parses the straight-through data obtained from the electronic device 100, and obtains the account information of the specified application and the identifier of the specified application.

Specifically, an operation of parsing the straight-through data by the electronic device 200 is completed by a micro processing unit in the electronic device 200, and the straight-through data is not stored in the NFC tag chip. For descriptions of the micro processing unit, refer to the descriptions of the embodiment shown in FIG. 4. Details are not described herein again.

The electronic device 200 may parse out the account information of the specified application and the identifier of the specified application from the straight-through data.

S713: The electronic device 200 distributes the obtained account information of the specified application to the specified application for caching.

After parsing out the account information of the specified application and the identifier of the specified application from the straight-through data, the electronic device 200 may distribute the electronic device 200 to the specified application by using the identifier of the specified application.

In a possible implementation, after parsing out the account information of the specified application (for example, the video application) and the identifier of the specified application, the electronic device 200 may determine whether the specified application is installed on the electronic device 200. If yes, the electronic device 200 may send the account information of the specified application to the specified application. If the specified application is not installed on the electronic device 200, the electronic device 200 may download an installation package of the specified application from a server for installation. After successful installation, the electronic device 200 may distribute the account information of the specified application to the specified application, and log in to an account of the specified application.

Before downloading the installation package of the specified application from the server, the electronic device 200 may output an installation prompt to the user. After the electronic device 200 receives an operation of confirming download by the user, the electronic device 200 may download the installation package of the specified application from the server, and install the specified application.

S714: The electronic device 200 notifies the specified application of projection completion information, and the specified application starts a login procedure.

Specifically, after obtaining the account information (including the account ID and the account password) of the specified application, the electronic device 200 may send the account information to a server corresponding to the specified application. The server may verify whether the account password in the account information matches the account ID. When the account password matches the account ID, the server may send information about a verification success instruction to the electronic device 200. After receiving the verification success instruction, the electronic device 200 may obtain application data from the server, and display an application interface in the application.

S715: The electronic device 200 prompts the user that the specified application is being automatically logged in.

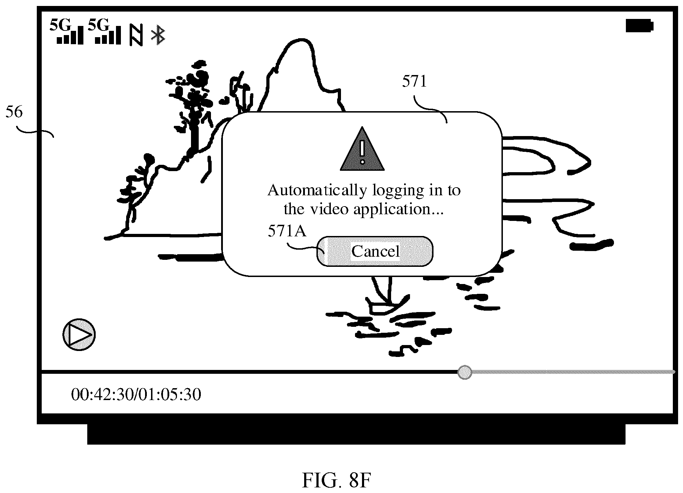

Specifically, as shown in an example of FIG. 8F, the electronic device 200 may display a prompt box 571 on the user interface 56. The prompt box 571 may be used to display prompt information, and the prompt information may be used to prompt the user that the specified application is logging in to an account. For example, the prompt information displayed in the prompt box 571 may be a text "automatically logging in to the video application...". Not limited to text information, the prompt information may also be a voice output by the electronic device 200, another type of prompt information, or the like. This is not limited in this application.

The prompt box 571 may further display a corresponding control, so that the user selects whether to cancel the login procedure of the specified application. For example, the prompt box 571 may display a "Cancel" control 571A, which is configured to monitor a touch operation (for example, a tap) performed on the control. In response to the operation, the electronic device 200 may cancel the login procedure of the application.

This is not limited thereto. The electronic device 200 may further receive voice information collected by the microphone, for example, "cancel login", and in response to the voice information, the electronic device 200 may cancel the login procedure of the application. This is not limited in this application.

S716: The electronic device 200 prompts the user that the specified application has been logged in.

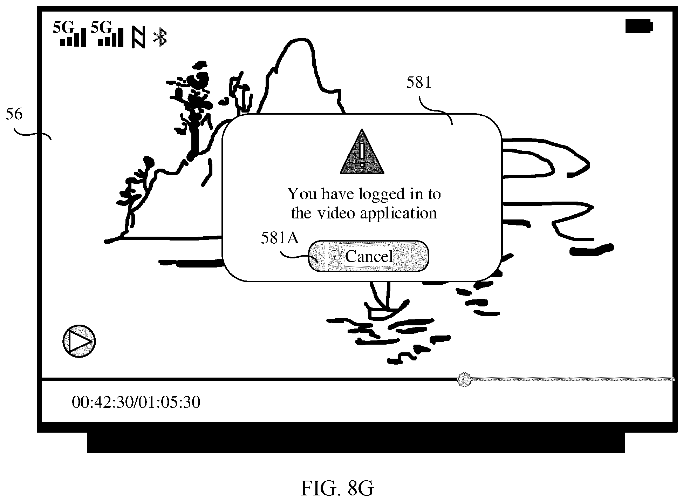

Specifically, as shown in FIG. 8G, the electronic device 200 may display a prompt box 581 on the user interface 56. The prompt box 581 may be used to display the prompt information, and the prompt information may be used to prompt the user that the specified application has logged in to the account. For example, the prompt information displayed in the prompt box 581 may be a text "You have logged in to the video application". Not limited to text information, the prompt information may also be a voice output by the electronic device 200, another type of prompt information, or the like. This is not limited in this application.

The prompt box 581 may further display a corresponding control, so that the user selects whether to log out of a logged-in account of the application. For example, the prompt box 581 may display a "Cancel" control 581A, which is configured to monitor a touch operation (for example, a tap) performed on the control. In response to the operation, the electronic device 200 may log out of the logged-in account of the specified application.

This application is not limited thereto. The electronic device 200 may further receive voice information collected by the microphone, for example, "cancel login", and in response to the voice information, the electronic device 200 may log out of the logged-in account of the application. This is not limited in this application.

It may be understood that a sequence of the foregoing steps is merely used to explain a specific procedure of the communication method as an example, and does not constitute a specific limitation on this application.

It may be understood that, the foregoing example of the user interface is merely used to explain this application, and should not be construed as a limitation on this application.

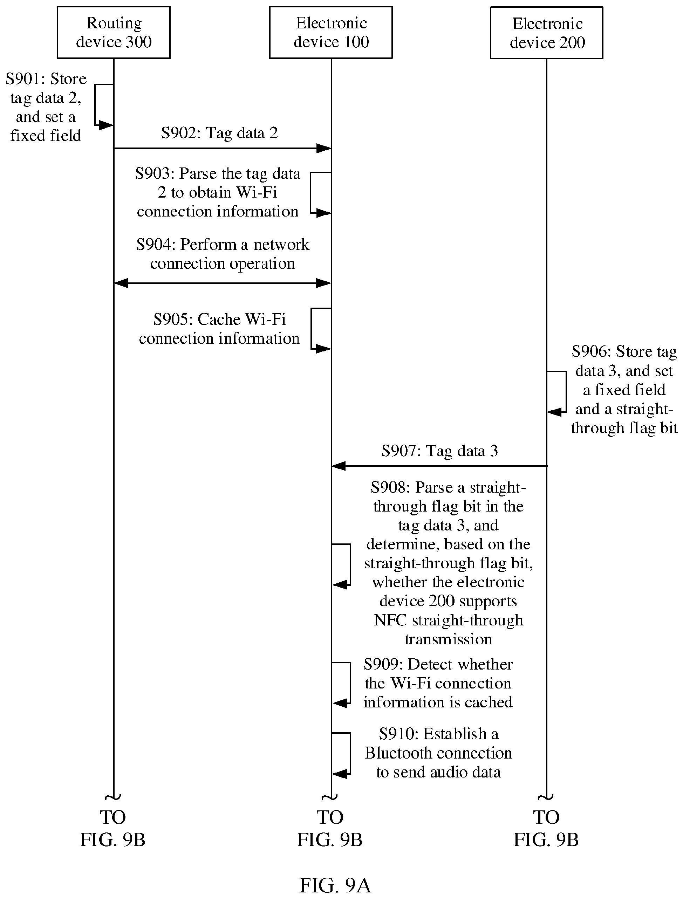

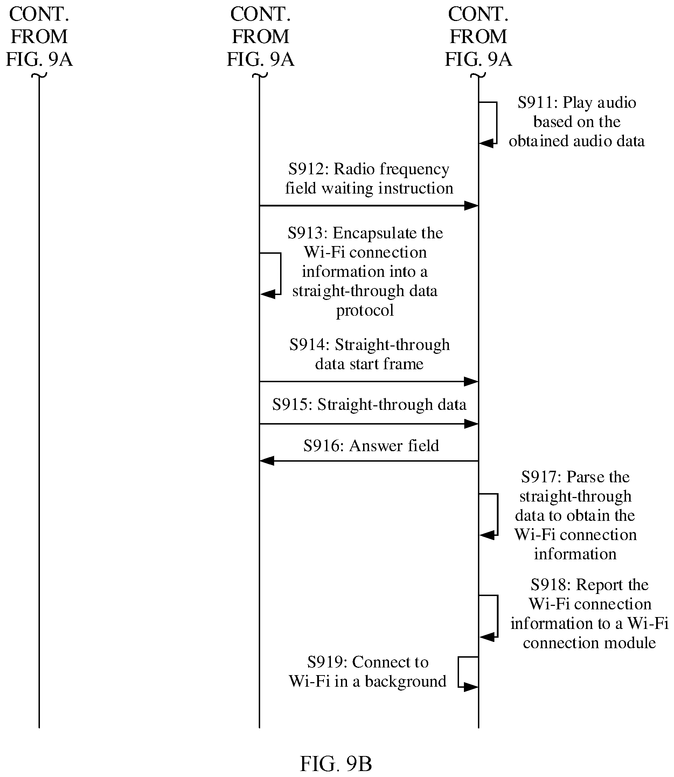

FIG. 9A and FIG. 9B are a schematic flowchart of an NFC communication method according to another embodiment of this application.

In some application scenarios, when an electronic device 100 (for example, a mobile phone) approaches a routing device 300, the electronic device 100 may read, from an NFC tag chip of the routing device 300, a Wi-Fi name, a Wi-Fi password, an encryption manner, and the like of the routing device 300. The electronic device 100 may access, based on the Wi-Fi name, the Wi-Fi password, the encryption manner, and the like, a wireless local area network established by the routing device 300, and cache the Wi-Fi name, the Wi-Fi password, the encryption manner, and the like in memory space. For a hardware structure of the routing device 300, refer to the foregoing structural description of an electronic device 200 shown in FIG. 3, and details are not described herein again. When the electronic device 100 approaches the electronic device 200 (for example, a smart speaker), the electronic device 100 may read a Bluetooth MAC address of the electronic device 200 from an NFC tag chip of the electronic device 200, and then the electronic device 100 may establish a Bluetooth connection to the electronic device 200, and send audio data to the electronic device 200 through the Bluetooth connection. After obtaining the audio data, the electronic device 200 may play audio based on the audio data. In the foregoing process, the electronic device 100 may also send, to the electronic device 200 through NFC straight-through transmission, the Wi-Fi name, the Wi-Fi password, the encryption manner, and the like that are of the routing device 300 and that are stored in the memory space. The electronic device 200 receives the Wi-Fi name, the Wi-Fi password, the encryption manner, and the like, and may access a corresponding wireless local area network.

In this application scenario, the electronic device 100 may be referred to as a first electronic device, the electronic device 200 may be referred to as a second electronic device, an NFC control chip in the electronic device 100 may be referred to as a first NFC control chip, the NFC tag chip in the electronic device 200 may be referred to as a first NFC tag chip, and an NFC tag chip in the routing device may be referred to as a second NFC tag chip.

As shown in FIG. 9A and FIG. 9B, the method may include the following steps.

S901: The routing device 300 stores tag data 2 (which may also be referred to as second tag data) in the NFC tag chip, and sets a fixed field in the tag data 2.

A format of the tag data 2 may be based on the NDEF protocol format in the embodiment shown in FIG. 6A. The tag data 2 may include an NDEF protocol header, a service processing attribute flag bit, a straight-through flag bit, service data, and an end field. The routing device 300 may set the fixed field and the straight-through flag bit. For descriptions of the NDEF protocol header, refer to related descriptions in the embodiment of FIG. 6A. Details are not described herein again. The service processing attribute flag bit may be used to indicate a service supported by the tag data 2. For example, when a value of the service processing attribute flag bit is "0x03", it indicates that the tag data 2 is used for a Wi-Fi connection service. That is, when the electronic device 100 obtains the tag data 2 and reads that the service processing attribute flag bit in the tag data 2 is "0x03", the electronic device 100 may be connected to a wireless local area network established by the routing device 300. The service data may store the Wi-Fi name, the Wi-Fi password, the encryption manner, and the like of the routing device 300. The end field may be used to indicate an end location of data information in the tag data 2.

In some embodiments of this application, the tag data 2 may be pre-stored in an NFC tag chip before the routing device 300 is delivered from a factory. In some other embodiments of this application, the tag data 2 may also be written into the NFC tag chip in real time by the routing device 300 by using a micro processing unit via a bus connected to the NFC tag chip. This is not limited in this application.

S902: The electronic device 100 enables NFC communication, and obtains the tag data 2 from the routing device 300.

Specifically, the electronic device 100 may enable the NFC communication when approaching the routing device 300. The electronic device 100 may generate a radio frequency field of a specified frequency (for example, 13.56 MHz) by using the NFC control chip. In a range of the radio frequency field, the routing device 300 may send the tag data 2 stored in the NFC tag chip to the electronic device 100 in a manner of performing load modulation on the radio frequency field, so that the electronic device 100 obtains the tag data 2.

The electronic device 100 may receive an input (for example, a tap) of a user for an NFC control in a drop-down list, and in response to the input for the NFC control, the electronic device 100 may enable the radio frequency field.

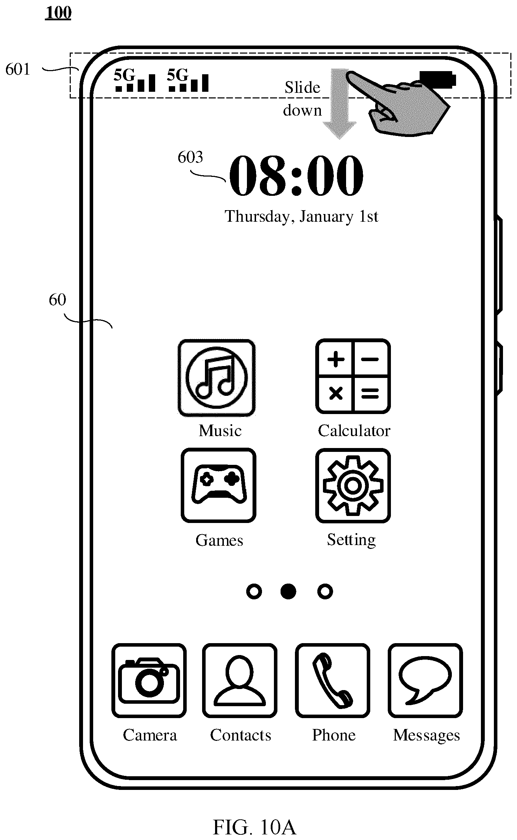

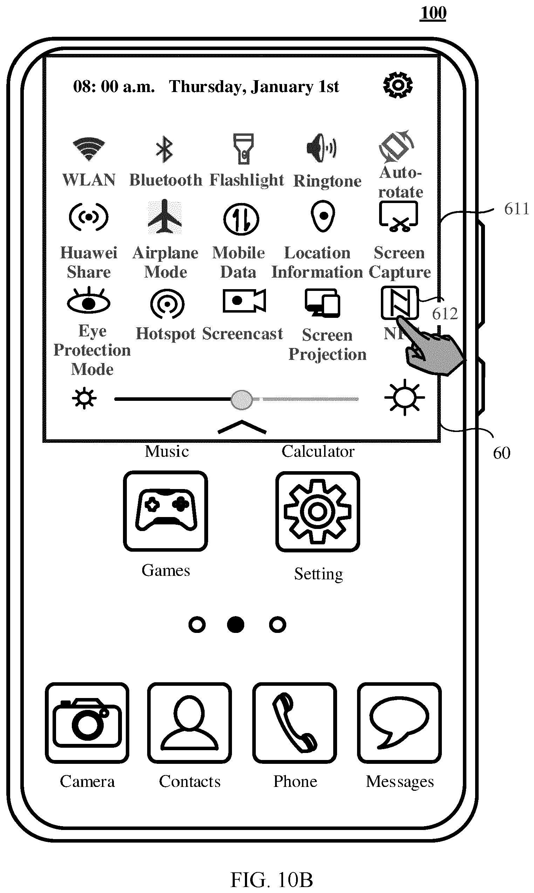

For example, as shown in FIG. 10A, the electronic device 100 may display a user interface 60. The user interface 60 may include a status bar 601, a plurality of application icons, a calendar indicator, a page indicator, and the like. When the electronic device 100 detects a down-slide gesture operation on the status bar 601, in response to the gesture operation, as shown in FIG. 10B, the electronic device 100 may display a drop-down list window 611 on the user interface 60.

As shown in FIG. 10B, for descriptions of the drop-down list window 611, refer to related descriptions of the drop-down list window 311 in FIG. 8B, and details are not described herein again. When the electronic device 100 detects a touch operation (for example, a tap) on an NFC switching tool 612 in the window 611, in response to the operation, the electronic device 100 may enable an NFC function, that is, the NFC control chip in the electronic device 100 may generate a radio frequency field of a specified frequency (for example, 13.56 MHz). The electronic device 100 may receive the tag data 2 that is sent by the routing device 300 in a manner of performing load modulation on the radio frequency field and that is stored in the NFC tag chip of the routing device 300.

In some other embodiments, when approaching the routing device 300, in response to voice information collected by a microphone (for example, "enabling NFC communication"), the electronic device 100 may enable NFC communication and generate a radio frequency field of a specified frequency (for example, 13.56 MHz). It may be understood that how to enable NFC communication of the electronic device 100 is not limited in this application.

S903: The electronic device 100 parses the obtained tag data 2 to obtain Wi-Fi connection information of the routing device 300.

Specifically, the electronic device 100 may parse the obtained tag data 2 to obtain the Wi-Fi connection information (which may also be referred to as first Wi-Fi connection information) of the routing device 300, for example, a Wi-Fi name, a Wi-Fi password, and an encryption manner of the routing device 300.

S904: The electronic device 100 performs a network connection operation.

Specifically, the electronic device 100 may connect, based on the Wi-Fi name, the Wi-Fi password, the encryption manner, and the like that are obtained by parsing, to a wireless local area network (which may also be referred to as a first Wi-Fi network) established by the routing device 300.

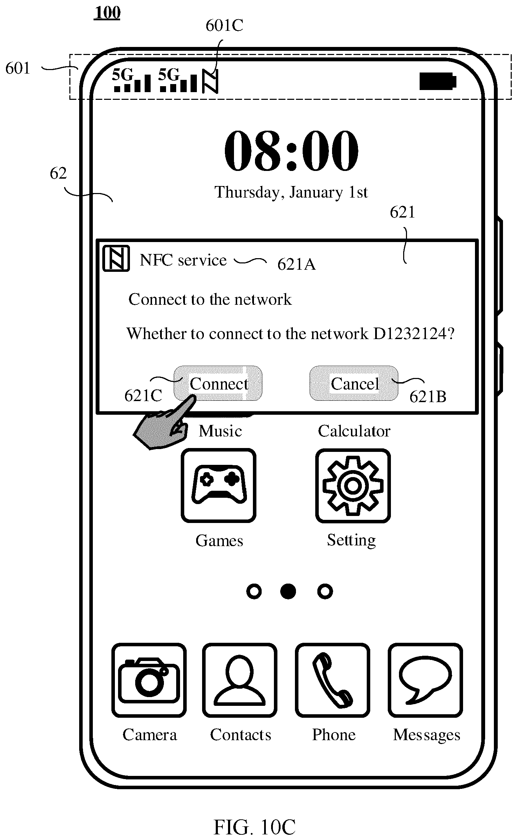

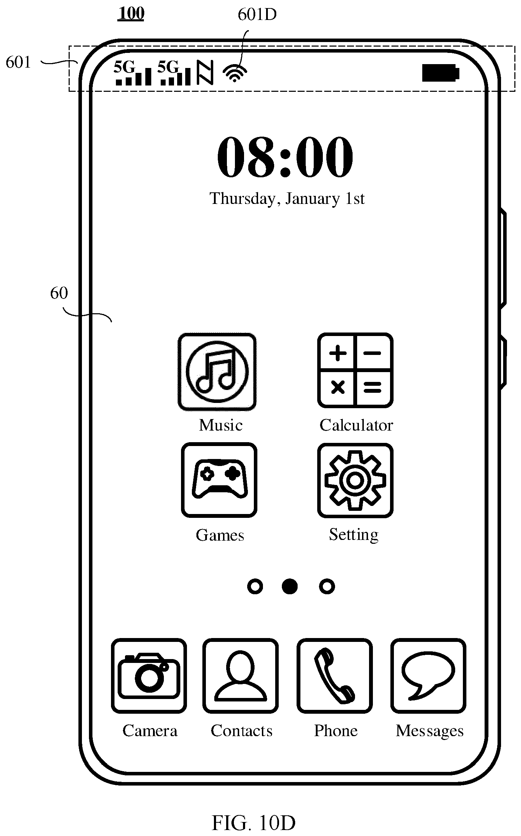

FIG. 10C and FIG. 10D show examples of a user interface used for connecting the electronic device 100 to a wireless local area network.

As shown in FIG. 10C, when the electronic device 100 obtains the Wi-Fi name, the Wi-Fi password, the encryption manner, and the like of the routing device 300, an NFC communications icon 601C and a window 621 may be displayed on the user interface 60.

The NFC communications icon 601C may be displayed in the status bar 601, and is used to inform the user that the electronic device 100 has enabled NFC communication.

The window 621 may display a current window page indicator 621A and a corresponding text description. For example, the current window page indicator 621A may be text information "NFC service", and the corresponding text description may be "Connect to the network" or "Whether to connect to the network D1232124?" Not limited to text information, the current window page indicator 621A may also be an icon, or the like. The window 621 may further display a "Cancel" control 621B and a "Connect" control 621C, and may be configured to monitor a touch operation (for example, a tap) performed on the control. In response to the operation, the electronic device 100 may perform an operation corresponding to the control, for example, no longer displaying the window 621 or connecting to the network D1232124.

When the electronic device 100 detects a touch operation (for example, a tap) performed on the "Connect" control 621C, the electronic device 100 connects to the network D1232124 in response to the operation. As shown in FIG. 10D, the electronic device 100 may display a signal strength indicator 601D of the Wi-Fi signal in the status bar 601. The signal strength indicator 601D of the Wi-Fi signal may be used to prompt the user that the electronic device 100 has connected to the network D1232124.

S905: The electronic device 100 caches Wi-Fi connection information.

Specifically, the electronic device 100 may store the Wi-Fi name, the Wi-Fi password, the encryption manner, and the like that are obtained in internal storage space.

S906: The electronic device 200 stores tag data 3 (which may also be referred to as first tag data) in an NFC tag chip, and sets a fixed field and a straight-through flag bit in the tag data 3.

A format of the tag data 3 may be based on the NDEF protocol format in the embodiment shown in FIG. 6A. The tag data 3 may include an NDEF protocol header, a service processing attribute flag bit, a straight-through flag bit, service data, and an end field. The electronic device 200 may set the fixed field. For descriptions of the NDEF protocol header, refer to related descriptions in the embodiment of FIG. 6A. Details are not described herein again. The service processing attribute flag bit may be used to indicate a service supported by the tag data 3. For example, when a value of the service processing attribute flag bit is "0x04" (which may also be referred to as a second attribute), it indicates that the tag data 3 is used for voice transmission and playing, that is, when the electronic device 100 obtains the tag data 3 and reads that the service processing attribute flag bit in the tag data 3 is "0x04", the electronic device 100 may send audio data to the electronic device 200. The straight-through flag bit may be used to indicate whether the electronic device 200 can receive, in the NFC straight-through transmission manner, data sent by the electronic device 100. For example, when a value of the straight-through flag bit is 1, it indicates that the electronic device 200 can receive, in the NFC straight-through transmission manner, the data sent by the electronic device 100. The service data may store a Bluetooth MAC address of the electronic device 200. The end field may be used to indicate an end location of data information in the tag data 3.

In some embodiments of this application, the tag data 3 may be pre-stored in the NFC tag chip before the electronic device 200 is delivered from a factory.

In some embodiments of this application, the tag data 3 may also be written into the NFC tag chip in real time by the electronic device 200 by using a micro processing unit via a bus connected to the NFC tag chip. This is not limited in this application.

S907: The electronic device 100 obtains the tag data 3 from the electronic device 200.

Specifically, the electronic device 100 has enabled NFC communication in step S902. When the electronic device 100 approaches the electronic device 200, the NFC tag chip in the electronic device 200 may send, in a manner of performing load modulation on the radio frequency field, the tag data 3 stored in the NFC tag chip to the electronic device 100.

In some other implementations, after the electronic device 100 obtains the Wi-Fi name, the Wi-Fi password, the encryption manner, and the like of the routing device 300, the NFC control chip in the electronic device 100 disables the radio frequency field. In this step, the radio frequency field of the specified frequency (for example, 13.56 MHz) needs to be enabled again, so as to enable the NFC communications function. For a specific procedure of how to enable the NFC communications function, refer to the foregoing descriptions in S902. Details are not described herein again.

S908: The electronic device 100 parses the straight-through flag bit in the tag data 3, and determines, based on the straight-through flag bit, whether the electronic device 200 supports NFC straight-through transmission.

Specifically, the electronic device 100 may learn, by parsing the straight-through flag bit in the tag data 3, whether the electronic device 200 receives the data sent by the electronic device 100 through the NFC straight-through transmission. For example, when parsing and reading that the value of the straight-through flag bit in the tag data 3 is 1 (which may also be referred to as a first value), the electronic device 100 learns that the electronic device 200 may receive data sent by the electronic device 100 in an NFC straight-through transmission manner, and the electronic device 100 may perform an operation of obtaining a Wi-Fi name, a Wi-Fi password, an encryption manner, and the like of a Wi-Fi network on the routing device 300.

S909: The electronic device 100 detects whether the Wi-Fi connection information is cached.

S910: The electronic device 100 establishes a Bluetooth connection to the electronic device 200 to send audio data.

Specifically, the electronic device 100 may obtain and parse the tag data 3 sent by the electronic device 200, to obtain the Bluetooth MAC address of the electronic device 200. The electronic device 100 may establish a Bluetooth connection to the electronic device 200 based on the Bluetooth MAC address of the electronic device 200. Then, the electronic device 100 may send, through the Bluetooth connection, audio data required by the electronic device 200 to play audio.

S911: The electronic device 200 plays audio based on the obtained audio data.

S912: The electronic device 100 sends a radio frequency field waiting instruction, to keep a radio frequency field communications link uninterrupted.

Specifically, in this embodiment of this application, the electronic device 200 may obtain, in the NFC straight-through transmission manner, the data sent by the electronic device 100. Therefore, when the electronic device 200 obtains, through the Bluetooth connection, the audio data sent by the electronic device 100, and plays the audio, the electronic device 200 may also obtain, in the NFC straight-through transmission manner, the Wi-Fi connection information sent by the electronic device 100. When the electronic device 100 has not sent the Wi-Fi connection information, the electronic device 100 may send the radio frequency field waiting instruction to the electronic device 200, to keep the radio frequency field communications link uninterrupted. For descriptions of the radio frequency field waiting instruction, refer to the descriptions in the embodiment shown in FIG. 6B, and details are not described herein again.

S913: The electronic device 100 encapsulates the Wi-Fi connection data into a straight-through data protocol.

Specifically, when the wireless local area network accessed by the electronic device 100 is the wireless local area network established by the routing device 300, the electronic device 100 may obtain Wi-Fi connection information of the routing device 300 from a memory, and encapsulate the Wi-Fi connection information into the straight-through data protocol. For descriptions of a format of the straight-through data protocol, refer to related descriptions in the embodiment shown in FIG. 6C, and details are not described herein again.

In some other embodiments, if the wireless local area network accessed by the electronic device 100 is not the wireless local area network established by the routing device 300, the electronic device 100 may detect signal strength of the wireless local area network established by the routing device 300. If the signal strength reaches specified strength (for example, -45 dbm), the electronic device 100 may obtain the Wi-Fi connection information of the routing device 300, and encapsulate the Wi-Fi connection information into the straight-through data protocol.

S914: The electronic device 100 sends a straight-through data start frame.

Specifically, after encapsulating the Wi-Fi connection information into the straight-through data protocol, the electronic device 100 may send the straight-through data start frame to the electronic device 200 in the NFC straight-through transmission manner, to prompt the electronic device 200 that the electronic device 100 is about to send the straight-through data to the electronic device 200. The straight-through data start frame may be in an NDEF protocol format, and a service data field may be specified character data of a specified field length, for example, "Ox10".

S915: The electronic device 100 sends, in the NFC straight-through transmission manner, Wi-Fi connection information (which may also be referred to as straight-through data) that has been encapsulated into the straight-through data protocol.

S916: The electronic device 200 sends an answer field.

Specifically, the electronic device 200 may send the answer field in the NFC straight-through transmission manner, to indicate whether the electronic device 200 receives the straight-through data sent by the electronic device 100. For descriptions of the answer field, refer to the foregoing descriptions of FIG. 6D. Details are not described herein again.

S917: The electronic device 200 parses the straight-through data obtained from the electronic device 100 to obtain the Wi-Fi connection information.

Specifically, an operation of parsing the straight-through data by the electronic device 200 is completed by a micro processing unit in the electronic device 200, and the straight-through data is not stored in the NFC tag chip. For descriptions of the micro processing unit, refer to the descriptions of the embodiment shown in FIG. 4. Details are not described herein again.

S918: The electronic device 200 reports the Wi-Fi connection information to a Wi-Fi connection module.

S919: The electronic device 200 connects to Wi-Fi in a background.

In some embodiments, the electronic device 100 may receive Wi-Fi connection information (for example, a Wi-Fi name, a Wi-Fi password, and an encryption manner of a Wi-Fi network) entered by a user, and connect to a corresponding Wi-Fi network based on the Wi-Fi connection information. Then, the electronic device 100 may send, to the electronic device 200 in the NFC straight-through transmission manner, straight-through data that carries the Wi-Fi connection information. After receiving the straight-through data, the electronic device 200 may obtain the Wi-Fi connection information by parsing the straight-through data. Then, the electronic device 200 may connect to a corresponding Wi-Fi network based on the Wi-Fi connection information.

It may be understood that a sequence of the foregoing steps is merely used to explain a specific procedure of the method as an example, and does not constitute a specific limitation on this application.

It may be understood that, the foregoing example of the user interface is merely used to explain this application, and should not be construed as a limitation on this application.

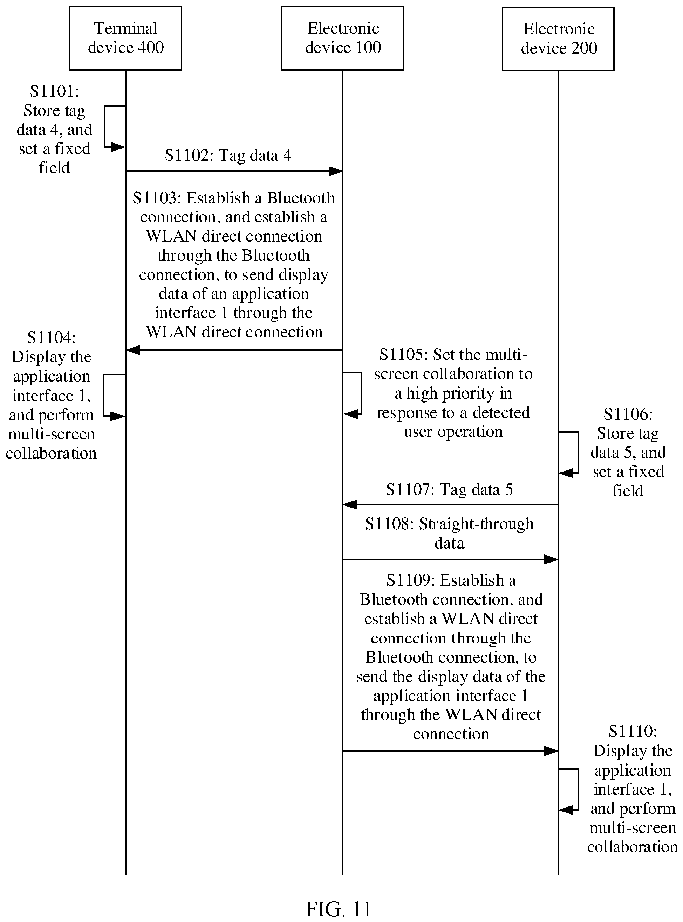

FIG. 11 is a schematic flowchart of an NFC communication method according to another embodiment of this application.

In some application scenarios, an electronic device 100 displays an application interface 1 (which may also be referred to as a first interface) of a first application. When the electronic device 100 approaches a terminal device 400, the electronic device 100 (for example, a mobile phone) may read a Bluetooth MAC address of the terminal device 400 from an NFC tag chip of the terminal device 400 (for example, a computer). Then, the electronic device 100 may establish a Bluetooth connection to the terminal device 400, and establish a WLAN direct connection to the terminal device 400 through the Bluetooth connection. For a hardware structure of the terminal device 400, refer to the foregoing structural description of an electronic device 200 shown in FIG. 3, and details are not described herein again. The electronic device 100 may send, through the WLAN direct connection, display data of the application interface 1 to the terminal device 400 for display.

The terminal device 400 may display a first window and a second window. The first window may display an application interface 2 (which may also be referred to as a second interface) of the first application and an application interface 3 (which may also be referred to as a third application interface) of the first application, and display content of the application interface 2 is the same as display content of the application interface 1 on the electronic device 100. Display content of the application interface 3 is different from the display content of the application interface 1. It should be noted that in this embodiment, the foregoing process may be referred to as multi-screen collaboration.

Then, when the electronic device 100 approaches the electronic device 200 (for example, a large screen), the electronic device 100 may read a Bluetooth MAC address of the electronic device 200 from an NFC tag chip of the electronic device 200, and the electronic device 100 may establish a Bluetooth connection to the electronic device 200, and establish a WLAN direct connection to the electronic device 200 through the Bluetooth connection. The electronic device 200 may send the display data of the application interface 1 through the WLAN direct connection. The electronic device 100 may send, to the electronic device 200 in an NFC straight-through transmission manner, straight-through data that carries a setting instruction. Then, the electronic device 200 may parse out the setting instruction in the straight-through data. The electronic device 200 may display the application interface 1 based on the display data in response to the setting instruction, to perform a multi-screen collaboration function instead of a basic function (for example, projection display) of the electronic device 200. In this way, the electronic device 200 may implement a plurality of functions (for example, the projection display function and the multi-screen collaboration function), and an operation of switching between functions is simple, thereby reducing operation steps of a user and improving user experience.

In this application scenario, the electronic device 100 may be referred to as a first electronic device, the electronic device 200 may be referred to as a second electronic device, the terminal device 400 may be referred to as a third electronic device, the NFC control chip may be referred to as a first NFC control chip, the NFC tag chip in the electronic device 200 may be referred to as a first NFC tag chip, and the NFC tag chip in the terminal device 400 may be referred to as a third NFC tag chip.

As shown in FIG. 11, the method may include the following steps.

S1101: The terminal device 400 stores tag data 4 in the NFC tag chip (which may also be referred to as the third NFC tag chip), and sets a fixed field in the tag data 4 (which may also be referred to as third tag data).

A format of the tag data 4 may be based on the NDEF protocol format in the embodiment shown in FIG. 6A. The tag data 4 may include an NDEF protocol header, a service processing attribute flag bit, a straight-through flag bit, service data, and an end field. The terminal device 400 may set the foregoing fixed field. For descriptions of the NDEF protocol header, refer to related descriptions in the embodiment of FIG. 6A. Details are not described herein again. The service processing attribute flag bit may be used to indicate a service supported by the tag data 4. For example, when a value of the service processing attribute flag bit is "0x05" (which may also be referred to as a third attribute), it indicates that the tag data 4 is used for multi-screen collaboration. That is, when the electronic device 100 obtains the tag data 4 and reads that the service processing attribute flag bit in the tag data 4 is "0x05", the electronic device 100 may send the display data of the application interface 1 to the terminal device 400, and the terminal device 400 receives the display data, displays the application interface 1, and performs the multi-screen collaboration function. The service data may store data information related to the terminal device 400. For example, the service data may store a Bluetooth MAC address of the terminal device 400 and/or a MAC address of a WLAN of the terminal device 400. The end field may be used to indicate an end location of data information in the tag data 4.

In some embodiments of this application, the tag data 4 may be pre-stored in the NFC tag chip before the terminal device 400 is delivered from a factory. In some other embodiments of this application, the tag data 4 may also be written into the NFC tag chip in real time by the terminal device 400 by using a micro processing unit via a bus connected to the NFC tag chip. This is not limited in this application.

S1102: The electronic device 100 enables NFC communication, and obtains the tag data 4 from the terminal device 400.

Specifically, for a process in which the electronic device 100 enables NFC communication and obtains the tag data 4 from the terminal device 400, refer to related descriptions in S702. Details are not described herein again.

S1103: The electronic device 100 and the terminal device 400 establish a Bluetooth connection, and establish a WLAN direct connection through the Bluetooth connection. The electronic device 100 sends the display data of the application interface 1 of the terminal device 400 through the foregoing connection.

Specifically, the electronic device 100 may obtain and parse the received tag data 4, to obtain the Bluetooth MAC address of the terminal device 400. The electronic device 100 may establish a Bluetooth connection to the terminal device 400 based on the Bluetooth MAC address of the terminal device 400. Then, the electronic device 100 may establish a WLAN direct connection to the terminal device 400 through the Bluetooth connection, and send the display data of the application interface 1 of the terminal device 400 through the WLAN direct connection.

S1104: The terminal device 400 and the electronic device 100 perform multi-screen collaboration.

Specifically, the terminal device 400 may perform multi-screen collaboration with the electronic device 100 based on the display data of the application interface 1.

S1105: The electronic device 100 sets the multi-screen collaboration function to a high priority in response to a detected user operation.

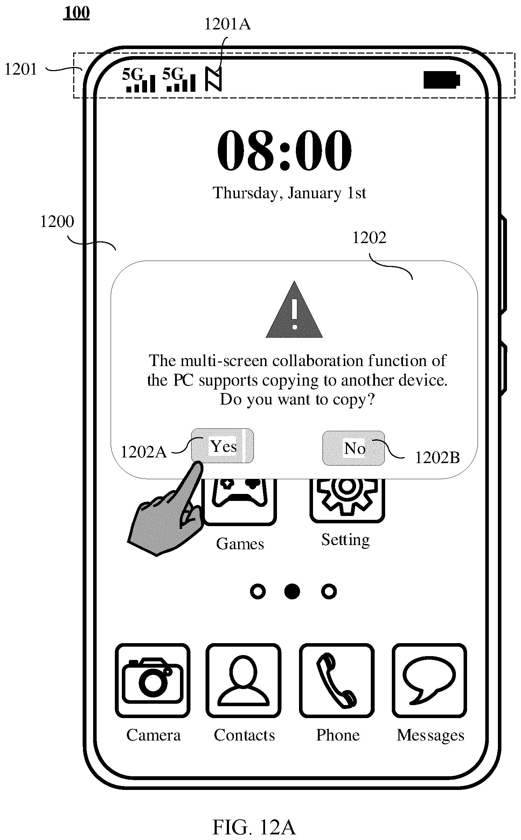

Specifically, as shown in an example of FIG. 12A, the electronic device 100 may receive an input (for example, a tap) of the user for a specified control, and in response to the input, the electronic device 100 may set the multi-screen collaboration function to the high priority.

As shown in an example of FIG. 12A, the electronic device 100 may display a user interface 1200 (which may also be referred to as a user interface 1). The user interface 1200 may include a status bar 1201, a plurality of application icons, a calendar indicator, a page indicator, and the like. The status bar 1201 may display an NFC communications icon 1201A, to prompt the user that the electronic device 100 has enabled NFC communication.

The user interface 1200 may display a prompt box 1202. The prompt box 1202 may be used to display prompt information, and the prompt information (which may also be referred to as a first prompt) may be used to prompt the user whether to copy the multi-screen collaboration function. For example, the prompt information displayed in the prompt box 1202 may be a text "The multi-screen collaboration function of the PC supports copying to another device. Do you want to copy?". In addition to the text information, the prompt information may further be a voice output by the electronic device 100, prompt information of another type, or the like. This is not limited in this application.

The prompt box 1202 may further display a corresponding control, so that the user selects whether to agree to copy the multi-screen collaboration function. For example, the prompt box 1202 may display a "Yes" control 1202A and a "No" control 1202B. The electronic device 100 may perform a corresponding operation in response to a touch operation (for example, a tap) on the control.

When the electronic device 100 detects a touch operation (which may also be referred to as a first input) performed by the user on the "Yes" control 1202A, for example, a tap, the electronic device 100 may set the multi-screen collaboration function to the high priority.

S1106: The electronic device 200 stores tag data 5 (which may also be referred to as first tag data) in an NFC tag chip, and sets a fixed field in the tag data 5.

A format of the tag data 5 may be based on the NDEF protocol format in the embodiment shown in FIG. 6A. The tag data 5 may include an NDEF protocol header, a service processing attribute flag bit, a straight-through flag bit, service data, and an end field. The electronic device 200 may set the fixed field. For descriptions of the NDEF protocol header, refer to related descriptions in the embodiment of FIG. 6A. Details are not described herein again. The service processing attribute flag bit may be used to indicate a service supported by the tag data 5. For example, when a value of the service processing attribute flag bit is "0x02", it indicates that the tag data 5 is used for a projection service (which may also be referred to as a first attribute). That is, when the electronic device 100 obtains the tag data 5 and reads that the service processing attribute flag bit in the tag data 5 is "Ox02", the electronic device 100 may send projection display data to the terminal device 400. The service data may be used to store the Bluetooth MAC address of the electronic device 200 and/or a MAC address end field of the WLAN, and may be used to indicate an end location of data information in the tag data 5.

In some embodiments of this application, the tag data 5 may be pre-stored in the NFC tag chip before the terminal device 400 is delivered from a factory. In some other embodiments of this application, the tag data 5 may also be written into the NFC tag chip in real time by the terminal device 400 by using a micro processing unit via a bus connected to the NFC tag chip. This is not limited in this application.

S1107: The electronic device 100 obtains the tag data 5 from the electronic device 200, parses the straight-through flag bit in the tag data 5, and determines, based on the straight-through flag bit, whether the electronic device 200 supports NFC straight-through transmission.

Specifically, the electronic device 100 has enabled NFC communication in step S1002. When the electronic device 100 approaches the electronic device 200, the NFC tag chip in the electronic device 200 may send, in a manner of performing load modulation on a radio frequency field, the tag data 5 stored in the NFC tag chip to the electronic device 100. The electronic device 100 may learn, by parsing the straight-through flag bit in the tag data 5, whether the electronic device 200 receives the data sent by the electronic device 100 through the NFC straight-through transmission. For example, when parsing and reading that a value of the straight-through flag bit in the tag data 5 is 1 (which may also be referred to as a first value), the electronic device 100 learns that the electronic device 200 may receive the data sent by the electronic device 100 in the NFC straight-through transmission manner.

In some other implementations, after the electronic device 100 obtains the tag data 4 stored in the terminal device 400, the NFC control chip in the electronic device 100 disables the radio frequency field, and in this step, the radio frequency field of a specified frequency (for example, 13.56 MHz) needs to be enabled again, so as to enable the NFC communications function. For a specific procedure of how to enable the NFC communications function, refer to the foregoing descriptions in S702. Details are not described herein again.

The electronic device 100 may receive an operation (for example, a tap) performed by the user on a specified control. In response to the operation, when reading the service processing attribute flag bit in the tag data 5, the electronic device 100 may not perform a basic function (for example, projection display) of the electronic device 200, but perform the multi-screen collaboration function that has been set to the high priority.

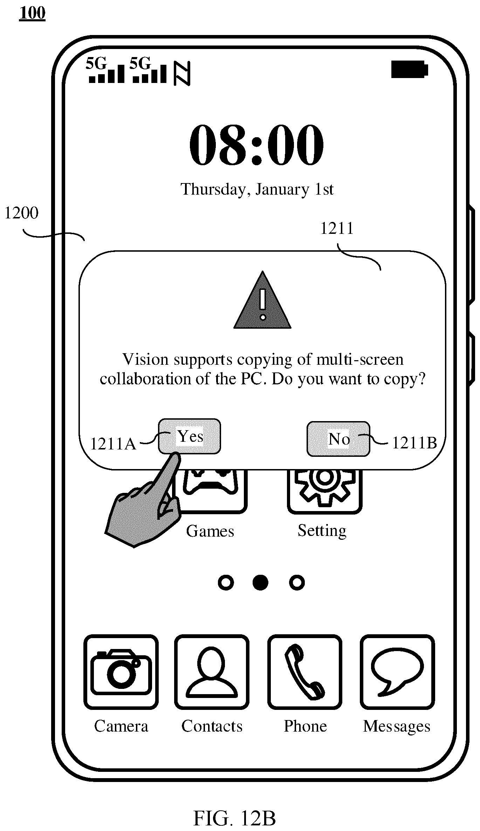

As shown in an example of FIG. 12B, the electronic device 100 may display a prompt box 1211 on the user interface 1200. The prompt box 1211 may be used to display prompt information, where the prompt information may be used to prompt the user whether to copy the foregoing multi-screen collaboration function to the electronic device 200. For example, the prompt information displayed in the prompt box 1211 may be a text "Vision supports copying of multi-screen collaboration of the PC. Do you want to copy?". In addition to the text information, the prompt information may further be a voice output by the electronic device 100, prompt information of another type, or the like. This is not limited in this application.

The prompt box 1211 may further display a corresponding control, so that the user selects whether to agree to copy the multi-screen collaboration function to the electronic device 200. For example, the prompt box 1211 may display a "Yes" control 1211A and a "No" control 1211B. The electronic device 100 may perform a corresponding operation in response to a touch operation (for example, a tap) on the control.

In a case that the electronic device 100 detects a touch operation (for example, a tap) performed by the user on the "Yes" control 1211A, when the electronic device 100 reads the service processing attribute flag bit in the tag data 5, the electronic device 200 may not perform a basic function (for example, projection display) corresponding to the service processing attribute flag bit, but perform the multi-screen collaboration function that has been set to the high priority.

In some embodiments, the electronic device 100 may determine whether to approach the electronic device 200 within a preset specified time threshold (for example, 10 minutes) after the tag data 4 is obtained, so as to determine whether to perform the multi-screen collaboration function.

Specifically, when reading the service processing attribute flag bit in the tag data 5, the electronic device 100 may determine, based on the time, a function performed by the electronic device 200. For example, in a case that the electronic device 100 determines that the electronic device 100 approaches the electronic device 200 within the preset specified time threshold (for example, 10 minutes) after the tag data 4 is obtained, when the electronic device 100 reads that the value of the service processing attribute flag bit in the tag data 5 is "0x02", the electronic device 200 performs the multi-screen collaboration function that is set to the high priority instead of projection display that is the basic function of the electronic device 200 and that is corresponding to the service processing attribute flag bit of "0x02". In addition, the electronic device 100 may cancel setting the multi-screen collaboration function as the high priority. The high priority of the multi-screen collaboration function is canceled, that is, when the electronic device 100 approaches the electronic device 200 again, the electronic device 200 performs the basic function (for example, projection display) instead of the multi-screen collaboration function.

When the electronic device 100 determines that the electronic device 100 approaches the electronic device 200 not within the preset specified time threshold (for example, 10 minutes), the electronic device 200 performs the basic function (for example, projection display).

S1108: The electronic device 100 sends the straight-through data to the electronic device 200.

Specifically, the electronic device 100 may encapsulate the setting instruction into the straight-through data. The electronic device 100 may send a straight-through data start frame, to prompt the electronic device 200 that the electronic device 100 is about to send the straight-through data to the electronic device 200. Then, the electronic device 100 may send the straight-through data that carries a multi-screen collaboration operation instruction to the electronic device 200 in the NFC straight-through transmission manner.

S1109: The electronic device 100 and the electronic device 200 establish a Bluetooth connection, and establish a WLAN direct connection through the Bluetooth connection. The electronic device 100 sends the display data (which may also be referred to as second display data) of the application interface 1 to the electronic device 200 through the WLAN direct connection.

Specifically, the electronic device 100 may obtain the Bluetooth MAC address of the electronic device 200 by obtaining and parsing the received tag data 5, and the electronic device 100 may establish a Bluetooth connection to the electronic device 200 based on the Bluetooth MAC address. Then, the electronic device 100 may establish a WLAN direct connection to the terminal device 400 through the Bluetooth connection, and send the display data of the application interface 1 to the electronic device 200 through the WLAN direct connection.

S1110: The electronic device 200 displays the application interface 1, and performs multi-screen collaboration.

Specifically, when receiving the straight-through data sent by the electronic device 100, the electronic device 200 may parse out the setting instruction based on the straight-through data. Then, in response to the setting instruction, the electronic device 200 may display the application interface 1 based on the received display data, so as to perform the multi-screen collaboration function.

It may be understood that a sequence of the foregoing steps is merely used to explain a specific procedure of the method as an example, and does not constitute a specific limitation on this application.

It may be understood that, the foregoing example of the user interface is merely used to explain this application, and should not be construed as a limitation on this application.

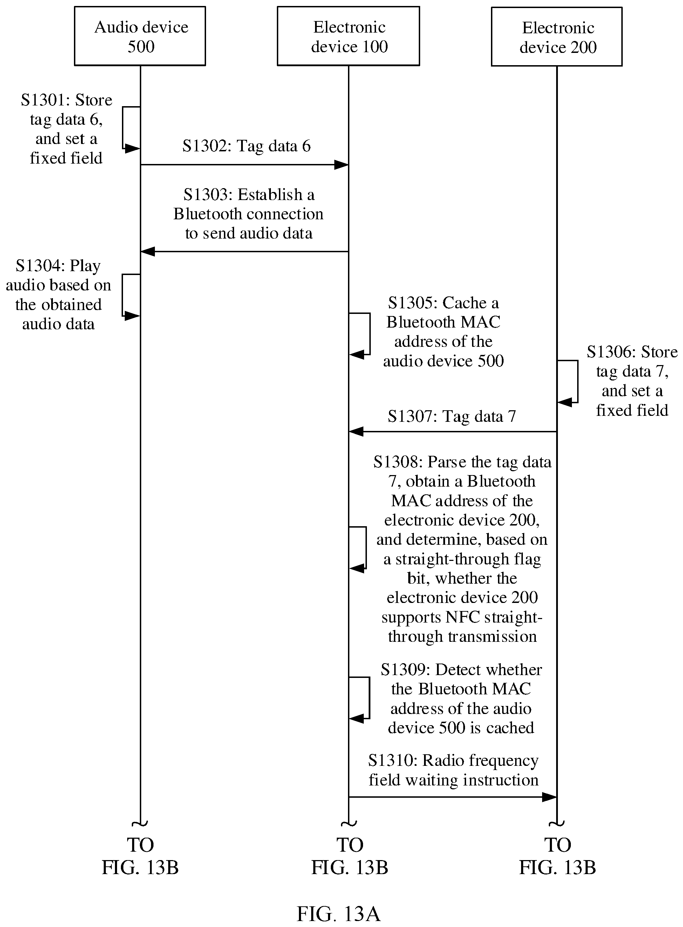

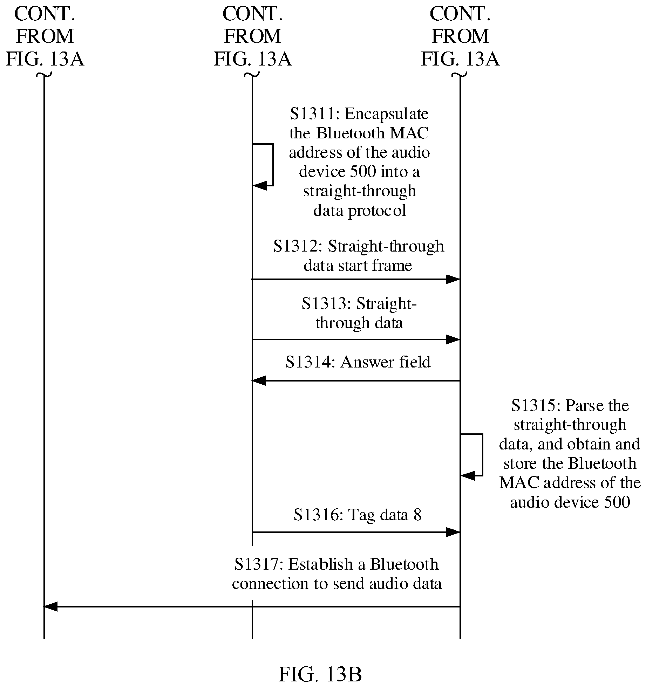

FIG. 13A and FIG. 13B are a schematic flowchart of an NFC communication method according to another embodiment of this application.

In some application scenarios, when an electronic device 100 (for example, a mobile phone) approaches an audio device 500, the electronic device 100 may read a Bluetooth MAC address of the audio device 500 from an NFC tag chip of the audio device 500 (for example, a Bluetooth speaker), and then the electronic device 100 may establish a Bluetooth connection to the audio device 500 based on the Bluetooth MAC address, and send audio data to the audio device 500 through the Bluetooth connection. After receiving the audio data, the audio device 500 may play audio based on the audio data. The electronic device 100 may cache the Bluetooth MAC address of the audio device 500. Then, when the electronic device 100 approaches the electronic device 200 (for example, a smartwatch), the electronic device 100 may send the Bluetooth MAC address of the audio device 500 to the electronic device 200 in an NFC straight-through transmission manner. After receiving the Bluetooth MAC address of the audio device 500, the electronic device 200 may store the Bluetooth MAC address in an NFC tag chip on the electronic device 200. In this process, the Bluetooth connection between the electronic device 100 and the audio device 500 may not be disconnected, and the audio device 500 may still receive, through the Bluetooth connection, the audio data sent by the electronic device 100, and play the audio based on the audio data. For a hardware structure of the audio device 500, refer to foregoing descriptions of a structure of the electronic device 200 shown in FIG. 3. Details are not described herein again.

In this way, when the electronic device 100 establishes a Bluetooth connection to the audio device 500 again, the electronic device 100 may obtain the Bluetooth MAC address of the audio device 500 from the NFC tag chip on the electronic device 200 by approaching the electronic device 200, and establish the Bluetooth connection to the audio device 500 based on the Bluetooth MAC address without approaching the audio device 500, so that user operations are more convenient and user experience is improved.

In this application scenario, the electronic device 100 may be referred to as a first electronic device, the electronic device 200 may be referred to as a second electronic device, the audio device 500 may be referred to as a third electronic device, the NFC control chip may be referred to as a first NFC control chip, the NFC tag chip in the electronic device 200 may be referred to as a first NFC tag chip, and the NFC tag chip in the audio device 500 may be referred to as a third NFC tag chip.

As shown in FIG. 13A and FIG. 13B, the method may include the following steps.

S1301: The audio device 500 stores tag data 6 (which may also be referred to as third tag data) in an NFC tag chip, and sets a fixed field in the tag data 6.

A format of the tag data 6 may be based on the NDEF protocol format in the embodiment shown in FIG. 6A. The tag data 6 may include an NDEF protocol header, a service processing attribute flag bit, a straight-through flag bit, service data, and an end field. The audio device 500 may set the fixed field and the straight-through flag bit. For descriptions of the NDEF protocol header, refer to related descriptions in the embodiment of FIG. 6A. Details are not described herein again. The service processing attribute flag bit may be used to indicate a service supported by the tag data 6. For example, when a value of the service processing attribute flag bit is "0x04", it indicates that the tag data 6 is used for voice transmission and playing, that is, when the electronic device 100 obtains the tag data 6 and reads that the service processing attribute flag bit in the tag data 6 is "0x04", the electronic device 100 may send audio data to the audio device 500. The service data may store the Bluetooth MAC address of the audio device 500. The end field may be used to indicate an end location of data information in the tag data 6.

In some embodiments of this application, the tag data 6 may be pre-stored in the NFC tag chip before the audio device 500 is delivered from a factory. In some other embodiments of this application, the tag data 6 may also be written into the NFC tag chip in real time by the audio device 500 by using a micro processing unit via a bus connected to the NFC tag chip. This is not limited in this application.

S1302: The electronic device 100 enables NFC communication, and obtains the tag data 6 from the audio device 500.

Specifically, for a process in which the electronic device 100 enables NFC communication and obtains the tag data 6 from the audio device 500, refer to related descriptions in S702. Details are not described herein again.

S1303: The electronic device 100 establishes a Bluetooth connection to the audio device 500 to send audio data.

Specifically, the electronic device 100 may obtain the Bluetooth MAC address of the audio device 500 by obtaining and parsing the tag data 6 sent by the audio device 500, and the electronic device 100 may establish a Bluetooth connection to the audio device 500 based on the Bluetooth MAC address. Then, the electronic device 100 may send, through the Bluetooth connection, audio data required by the audio device 500 to play audio.

S1304: The audio device 500 plays the audio based on the obtained audio data.

S1305: The electronic device 100 caches the Bluetooth MAC address of the audio device 500.

S1306: The electronic device 200 stores tag data 7 (which may also be referred to as first tag data) in an NFC tag chip, and sets a fixed field and a straight-through flag bit in the tag data 7.

A format of the tag data 7 may be based on the NDEF protocol format in the embodiment shown in FIG. 6A. The tag data 7 may include an NDEF protocol header, a service processing attribute flag bit, a straight-through flag bit, service data, and an end field. The electronic device 200 may set the fixed field and the straight-through flag bit. For descriptions of the NDEF protocol header, refer to related descriptions in the embodiment of FIG. 6A. Details are not described herein again. The service processing attribute flag bit may be used to indicate a service supported by the tag data 7. For example, when a value of the service processing attribute flag bit is "0x01", it indicates that the tag data 7 is used for a Bluetooth connection service, that is, when the electronic device 100 obtains the tag data 7 and reads that the service processing attribute flag bit in the tag data 7 is "0x01" (which may also be referred to as a fourth attribute), the electronic device 100 may establish a Bluetooth connection to the electronic device 200. The service data may be used to store a Bluetooth MAC address of the electronic device 200 and/or a MAC address of a WLAN. The straight-through flag bit may be used to indicate whether the electronic device 200 can receive, in the NFC straight-through transmission manner, data sent by the electronic device 100. For example, when a value of the straight-through flag bit is 1 (which may also be referred to as a first value), it indicates that the electronic device 200 can receive, in the NFC straight-through transmission manner, the data sent by the electronic device 100. The end field may be used to indicate an end location of data information in the tag data 7.

In some embodiments of this application, the tag data 7 may be pre-stored in the NFC tag chip before the electronic device 200 is delivered from a factory. In some other embodiments of this application, the tag data 7 may also be written into the NFC tag chip in real time by the electronic device 200 by using a micro processing unit via a bus connected to the NFC tag chip. This is not limited in this application.

S1307: The electronic device 100 obtains the tag data 7 from the electronic device 200.

Specifically, the electronic device 100 has enabled NFC communication in step S1102. When the electronic device 100 approaches the electronic device 200, the NFC tag chip in the electronic device 200 may send, in a manner of performing load modulation on the radio frequency field, the tag data 7 stored in the NFC tag chip to the electronic device 100.

In some other implementations, after the electronic device 100 obtains the tag data 6 in the audio device 500, the NFC control chip in the electronic device 100 disables the radio frequency field, and in this step, the radio frequency field of a specified frequency (for example, 13.56 MHz) needs to be enabled again, so as to enable the NFC communications function. For a specific procedure of how to enable the NFC communications function, refer to the foregoing descriptions in S702. Details are not described herein again.

S1308: The electronic device 100 parses the tag data 7, obtains the Bluetooth MAC address of the electronic device 200, and determines, based on the straight-through flag bit in the tag data 7, whether the electronic device 200 supports NFC straight-through transmission.

Specifically, the electronic device 100 may obtain, by parsing the tag data 7, that the value of the service processing attribute flag bit is "Ox01 ", and obtain the Bluetooth MAC address of the electronic device 200 stored in the service data. The electronic device 100 may establish a Bluetooth connection to the electronic device 200 based on the Bluetooth MAC address. The electronic device 100 may learn, based on the straight-through flag bit in the tag data 7, whether the electronic device 200 receives the data sent by the electronic device 100 through NFC straight-through transmission. For example, when parsing and reading that the value of the straight-through flag bit in the tag data 7 is 1, the electronic device 100 learns that the electronic device 200 may receive the data sent by the electronic device 100 in the NFC straight-through transmission manner, and the electronic device 100 may obtain the cached Bluetooth MAC address of the audio device 500.

S1309: The electronic device 100 detects whether the Bluetooth MAC address of the audio device 500 is cached.

S1310: The electronic device 100 sends a radio frequency field waiting instruction, to keep a radio frequency field communications link uninterrupted.

Specifically, in this embodiment of this application, the electronic device 200 may obtain, in the NFC straight-through transmission manner, the data sent by the electronic device 100. Therefore, when the electronic device 200 obtains, through the Bluetooth connection, the audio data sent by the electronic device 100, and plays the audio, the electronic device 200 may also obtain, in the NFC straight-through transmission manner, the Bluetooth MAC address of the audio device 500 sent by the electronic device 100. When the electronic device 100 has not sent the Bluetooth MAC address, the electronic device 100 may send the radio frequency field waiting instruction to the electronic device 200, to keep the radio frequency field communications link uninterrupted. For descriptions of the radio frequency field waiting instruction, refer to the descriptions in the embodiment shown in FIG. 6B, and details are not described herein again.

S1311: The electronic device 100 encapsulates the Bluetooth MAC address of the audio device 500 into a straight-through data protocol.

Specifically, for descriptions of a format of the straight-through data protocol, refer to related descriptions in the embodiment shown in FIG. 6C, and details are not described herein again.

S1312: The electronic device 100 sends a straight-through data start frame.

Specifically, after encapsulating the Bluetooth MAC address of the audio device 500 into the straight-through data protocol, the electronic device 100 may send the straight-through data start frame to the electronic device 200 in the NFC straight-through transmission manner, to prompt the electronic device 200 that the electronic device 100 is about to send the straight-through data to the electronic device 200. The straight-through data start frame may be in an NDEF protocol format, and a service data field may be specified character data of a specified field length, for example, "0x10".

S1313: The electronic device 100 sends, in the NFC straight-through transmission manner, the Bluetooth MAC address (which may also be referred to as straight-through data) that is of the audio device 500 and that has been encapsulated into the straight-through data protocol.

Specifically, the electronic device 100 may detect an operation (for example, a tap) performed by the user on a specified control, and in response to the operation, the electronic device 100 may send straight-through data including the Bluetooth MAC address of the audio device 500.

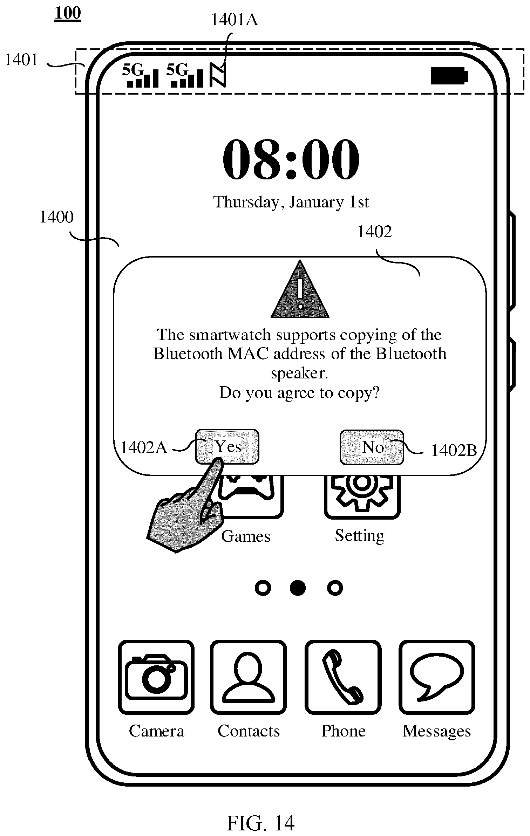

As shown in an example of FIG. 14, the electronic device 100 may display a user interface 1400. The user interface 1400 may include a status bar 1401, a plurality of application icons, a calendar indicator, a page indicator, and the like. The status bar 1401 may display an NFC communications icon 1401A, to prompt the user that the electronic device 100 has enabled NFC communication.

The user interface 1400 may display a prompt box 1402. The prompt box 1402 may be used to display prompt information, and the prompt information (which may also be referred to as a third prompt) may be used to prompt the user whether to send the straight-through data to the electronic device 200. For example, the prompt information displayed in the prompt box 1402 may be a text "The smartwatch supports copying of the Bluetooth MAC address of the Bluetooth speaker. Do you agree to copy?". In addition to the text information, the prompt information may further be a voice output by the electronic device 100, prompt information of another type, or the like. This is not limited in this application.

The prompt box 1402 may further display a corresponding control, so that the user selects whether to agree to send the straight-through data to the electronic device 200. For example, the prompt box 1402 may display a "Yes" control 1402A and a "No" control 1402B. The electronic device 100 may perform a corresponding operation in response to a touch operation (for example, a tap) on the control.

When the electronic device 100 detects a touch operation (which may also be referred to as a second input) performed by the user on the "Yes" control 1402A, for example, a tap, the electronic device 100 sends the straight-through data to the electronic device 200.

S1314: The electronic device 200 sends an answer field.

Specifically, the electronic device 200 may send the answer field in the NFC straight-through transmission manner, to indicate whether the electronic device 200 receives the straight-through data sent by the electronic device 100. For descriptions of the answer field, refer to the foregoing descriptions of FIG. 6D. Details are not described herein again.

S1315: The electronic device 200 parses the straight-through data obtained from the electronic device 100, and obtains and stores the Bluetooth MAC address of the audio device 500.

Specifically, an operation of parsing the straight-through data by the electronic device 200 is completed by a micro processing unit in the electronic device 200. The Bluetooth MAC address of the audio device 500 that is obtained by the electronic device 200 by parsing the straight-through data may be stored in the NFC tag chip on the electronic device 200. For descriptions of the micro processing unit, refer to the descriptions of the embodiment shown in FIG. 4. Details are not described herein again.

S1316: The electronic device 100 obtains tag data 8 (which may also be referred to as fourth tag data).

Specifically, after the Bluetooth connection between the electronic device 100 and the audio device 500 is disconnected, when the electronic device 100 approaches the electronic device 200, the electronic device 100 may obtain, by using the radio frequency field generated by the NFC control chip, the tag data 8 stored in the NFC tag chip of the electronic device 200. The tag data 8 may include an NDEF protocol header, a service processing attribute flag bit, a straight-through flag bit, service data, and an end field. The electronic device 200 may set the fixed field and the straight-through flag bit. For descriptions of the NDEF protocol header, refer to related descriptions in the embodiment of FIG. 6A. Details are not described herein again. The service data field in the tag data 8 may store the Bluetooth MAC address of the audio device 500.

S1317: The electronic device 100 establishes a Bluetooth connection to the audio device 500.

Specifically, the electronic device 100 may parse the tag data 8 to obtain the Bluetooth MAC address of the audio device 500. The electronic device 100 may establish a Bluetooth connection to the audio device 500 based on the Bluetooth MAC address. The electronic device 100 may send the audio data to the audio device 500 based on the Bluetooth connection.

It may be understood that a sequence of the foregoing steps is merely used to explain a specific procedure of the method as an example, and does not constitute a specific limitation on this application.

It may be understood that, the foregoing example of the user interface is merely used to explain this application, and should not be construed as a limitation on this application.

The following describes a system module interaction flowchart according to an embodiment of this application.

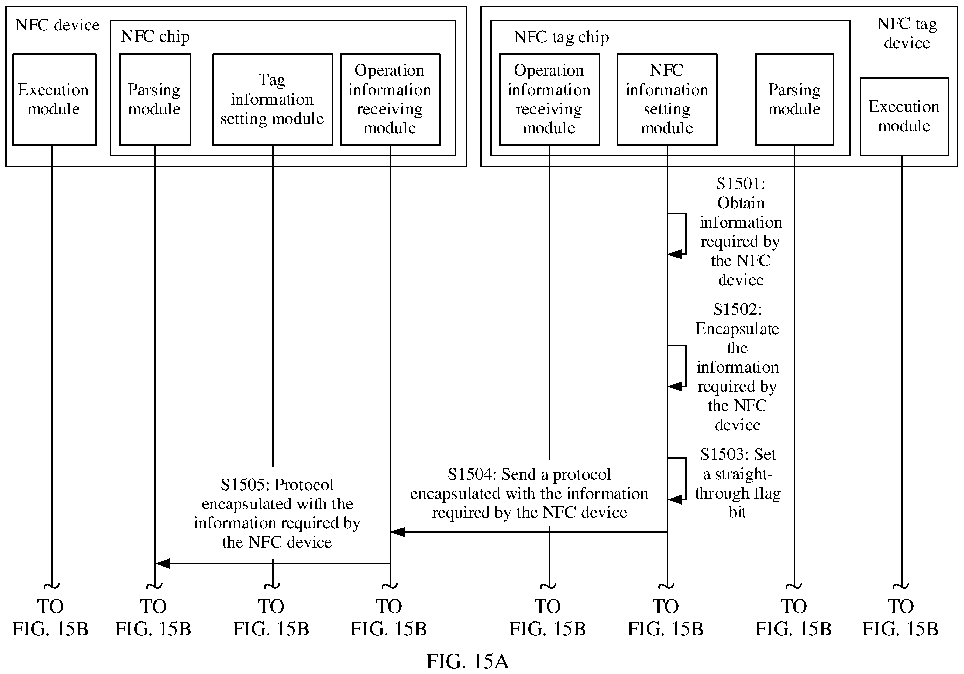

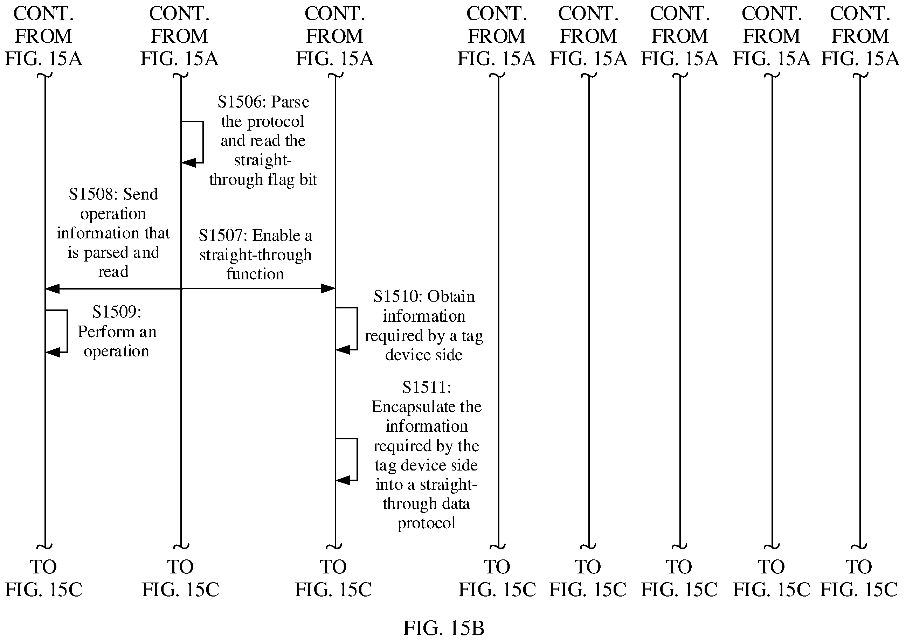

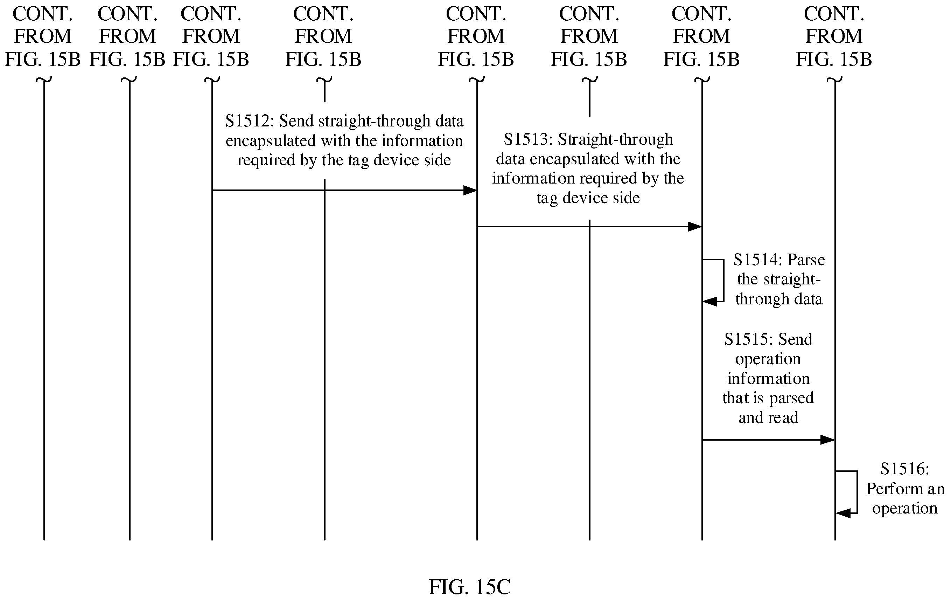

As shown in an example of FIG. 15A, FIG. 15B, and FIG. 15C, the system provided in this application may include an NFC device and an NFC tag device (also referred to as a tag device) module. The NFC device may include an execution module and an NFC control chip. The NFC control chip may include a parsing module, a tag side information setting module, and an operation information receiving module. The NFC tag module may include an execution module and an NFC tag chip. The NFC tag chip may include an operation information receiving module, an NFC information setting module, and a parsing module.

S1501: The NFC information setting module of the NFC tag device obtains information required by the NFC device.

Specifically, the information required by the NFC device may include a Bluetooth MAC address of the NFC tag device, and/or Wi-Fi connection information of the NFC tag device, for example, a Wi-Fi name, a Wi-Fi password, and an encryption manner. In addition, the information required by the NFC device may further include an operation instruction for the NFC device to send data to the NFC tag device. When obtaining the foregoing information from the NFC tag device, the NFC device may establish a Bluetooth connection and/or a Wi-Fi connection to the NFC tag device based on the foregoing information, and send data information to the NFC tag device.

S1502: The NFC information setting module of the NFC tag device encapsulates the information required by the NFC device.

Specifically, the NFC information setting module of the NFC tag device may encapsulate a data format of the information required by the NFC device into an NDEF protocol format provided in this application. For descriptions of the NDEF protocol format, refer to the foregoing descriptions. Details are not described herein again.

S1503: The NFC information setting module of the NFC tag device sets a straight-through flag bit.

Specifically, for descriptions of the straight-through flag bit, refer to the foregoing descriptions. Details are not described herein again.

S1504: The NFC tag device sends the NDEF protocol encapsulated with the information required by the NFC device to the operation information receiving module of the NFC device.

Specifically, for descriptions of the NDEF protocol format, refer to the foregoing descriptions. Details are not described herein again.

S1505: The operation information receiving module of the NFC device sends the NDEF protocol encapsulated with the information required by the NFC device to the parsing module of the NFC device.

S1506: The parsing module of the NFC device parses the protocol and reads the straight-through flag bit.

Specifically, the NDEF protocol may include the information required by the NFC device in S1501, and the fixed field and the straight-through flag bit in the NDEF protocol.

S1507: The NFC device enables a straight-through function.

Specifically, the NFC device may learn, by parsing the straight-through flag bit in the NDEF protocol, whether the NFC tag device receives data sent by the NFC device in an NFC straight-through transmission manner. For example, when parsing and reading that a value of the straight-through flag bit in the NDEF protocol is 1, the NFC device learns that the NFC tag device may receive the data sent by the NFC device in the NFC straight-through transmission manner, and then the NFC device may send data to the NFC tag device in the NFC straight-through transmission manner.

S1508: The parsing module of the NFC device sends operation information that is parsed and read to the execution module of the NFC device.

Specifically, the NFC device may parse the NDEF protocol, and the NDEF protocol includes a service processing attribute field. The parsing module in the NFC device may send a corresponding operation instruction to the execution module based on the service processing attribute field. For descriptions of the service processing attribute field, refer to the foregoing related descriptions. Details are not described herein again.

S1509: The execution module of the NFC device performs a corresponding operation.

Specifically, when parsing and reading a service attribute flag bit, the NFC device may send a corresponding instruction to the execution module based on the service attribute flag bit. The execution module may perform a corresponding operation based on the instruction. For example, when the parsing module reads that the service attribute flag bit is "0x02", the execution module needs to obtain corresponding projection service data, and send the projection service data to the NFC tag device through a Bluetooth connection or a Wi-Fi connection. For details, refer to the foregoing specific method embodiments, and details are not described herein again.

S1510: A tag information setting module of the NFC device obtains the information required by the NFC tag device.

S1511: The tag information setting module of the NFC device encapsulates the information required by the NFC tag device into a straight-through data protocol.

Specifically, for descriptions of a format of the straight-through data protocol, refer to the foregoing descriptions. Details are not described herein again.

In some embodiments, when the NFC device does not send the information required by the NFC tag device, the NFC device may send a radio frequency field waiting instruction to the NFC tag device, so as to keep a radio frequency field communications link uninterrupted. For descriptions of the radio frequency field waiting instruction, refer to the foregoing descriptions, and details are not described herein again.

S1512: The NFC device sends straight-through data encapsulated with the information required by the NFC tag device to the operation information receiving module of the NFC tag device.

Specifically, different from sending data through a Bluetooth connection or a Wi-Fi connection in step S1509, the NFC device in this step may send the straight-through data in the NFC straight-through transmission manner.

In some embodiments, before sending the straight-through data, the NFC device may further send a straight-through data start frame to the NFC tag device in the NFC straight-through transmission manner, to indicate that the NFC device is about to send information to the tag device in the NFC straight-through transmission manner. For the straight-through data start frame, refer to descriptions of the foregoing specific method embodiments, and details are not described herein again.

S1513: The operation information receiving module of the NFC tag device sends the straight-through data to the parsing module of the NFC tag device.

Specifically, the straight-through data is not stored in the NFC tag chip.

S1514: The parsing module of the NFC tag device parses the straight-through data.

S1515: The parsing module of the NFC tag device sends operation information that is parsed and read to the execution module of the NFC tag device.

S1516: The execution module of the NFC tag device performs a corresponding operation.

Specifically, for a corresponding operation performed by the execution module of the NFC tag device, refer to the foregoing embodiment shown in FIG. 7 in which the electronic device 200 logs in to a specified application based on login account information in the straight-through data.

In some embodiments, for a corresponding operation performed by the execution module of the NFC tag device, refer to the foregoing embodiment shown in FIG. 9A and FIG. 9B in which the electronic device 200 connects to the Wi-Fi network based on the Wi-Fi connection information in the straight-through data.

In some embodiments, for a corresponding operation performed by the execution module of the NFC tag device, refer to the foregoing embodiment shown in FIG. 11 in which the electronic device 200 performs a multi-screen collaboration function based on the setting instruction in the straight-through data.

In some embodiments, for a corresponding operation performed by the execution module of the NFC tag device, refer to the foregoing embodiment shown in FIG. 13A and FIG. 13B in which the electronic device 200 writes the Bluetooth MAC address of the audio device 500 into tag data of the NFC tag chip based on the Bluetooth MAC address of the audio device 500 in the straight-through data.

In the foregoing embodiments of this application, the electronic device 100 may establish a Wi-Fi network. The electronic device 100 may establish a WLAN direct connection to the electronic device 200 by sending straight-through data that carries the Wi-Fi network information to the electronic device 200. The Wi-Fi network information may include a Wi-Fi name and a Wi-Fi password of the Wi-Fi network, and an encryption manner of the Wi-Fi network.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. An NFC communications system, comprising: a first electronic device (100) and a second electronic device (200), wherein the first electronic device (100) is configured with a first near filed communication NFC control chip (401), and the second electronic device (200) is configured with a first near filed communication tag NFC tag chip (406), wherein the first NFC control chip (401) is configured to modulate a radio frequency field with a specified frequency to communicate with the first NFC tag chip (406), and the first NFC tag chip (406) is configured to sense the radio frequency field to obtain energy, and perform load modulation on the radio frequency field to communicate with the first NFC control chip (401);
the first electronic device (100) is configured to read, by using the radio frequency field generated by the first NFC control chip (401), first tag data stored in the first NFC tag chip (406);
the first electronic device (100) is further configured to: after reading the first tag data, perform a first operation, and send straight-through data to the second electronic device (200) by using the first NFC control chip (401); and
the second electronic device (200) is configured to perform a second operation after receiving the straight-through data by using the first NFC tag chip (406);
**characterized in that** the first electronic device (100) is further configured to display a first interface of a first application before reading the first tag data; and the first tag data comprises a Bluetooth media access control MAC address of the second electronic device (200) and a service processing attribute of the second electronic device (200);
the first operation comprises:
when the service processing attribute of the second electronic device (200) is a first attribute, establishing a Bluetooth connection to the second electronic device (200) based on the Bluetooth MAC address of the second electronic device (200);
establishing a wireless local area network WLAN direct connection to the second electronic device (200) based on the Bluetooth connection; and
sending first display data to the second electronic device (200) through the WLAN direct connection;
the second electronic device (200) is further configured to: after receiving the first display data, display a second interface based on the first display data, wherein display content on the second interface is the same as display content on the first interface;
the straight-through data comprises account information of the first application and an identifier of the first application, and the account information comprises an account identifier and an account password of the first application; and
the second operation comprises:
logging in to the first application on the second electronic device (200) based on the account information and the identifier of the first application by using the account information.

2. An NFC communication method comprising:
reading, by a first electronic device (100) by using a radio frequency field generated by a first NFC control chip (401), first tag data stored in a first NFC tag chip (406) of a second electronic device (200), wherein
the first NFC control chip (401) is configured to modulate the radio frequency field with a specified frequency to communicate with the first NFC tag chip (406), and the first NFC tag chip (406) is configured to sense the radio frequency field to obtain energy, and perform load modulation on the radio frequency field to communicate with the first NFC control chip (401); and
after reading the first tag data, performing, by the first electronic device (100), a first operation, and sending straight-through data to the second electronic device (200) by using the first NFC control chip (401), wherein the straight-through data is used to trigger the second electronic device (200) to perform a second operation;
**characterized in that** the first tag data comprises a Bluetooth media access control MAC address of the second electronic device (200) and a service processing attribute of the second electronic device (200);
before the reading first tag data, the method further comprises:
displaying, by the first electronic device (100), a first interface of a first application;
the first operation comprises:
when the service processing attribute of the second electronic device (200) is a first attribute, establishing a Bluetooth connection to the second electronic device (200) based on the Bluetooth MAC address of the second electronic device (200);
establishing a wireless local area network WLAN direct connection to the second electronic device (200) based on the Bluetooth connection; and
sending first display data to the second electronic device (200) through the WLAN direct connection, wherein the first display data is used by the second electronic device (200) to display a second interface, and display content on the second interface is the same as display content on the first interface;
the straight-through data comprises account information of the first application and an identifier of the first application, and the account information comprises an account identifier and an account password of the first application; and
the second operation comprises:
logging in to the first application on the second electronic device (200) based on the account information and the identifier of the first application by using the account information.

3. A plurality of computer storage mediums, comprising computer instructions, wherein when the computer instructions are run on an NFC communications system, the NFC communications system is enabled to perform the method according to claim 2.

4. A computer program product, wherein when the computer program product runs on an NFC communications system, the NFC communications system is enabled to perform the method according to claim 2.

## Patentansprüche

1. NFC-Kommunikationssystem, Folgendes umfassend: ein erstes elektronisches Gerät (100) und ein zweites elektronisches Gerät (200), wobei das erste elektronische Gerät (100) mit einem ersten Nahfeldkommunikations-, NFC-, Steuer-Chip (401) konfiguriert ist und das zweite elektronische Gerät (200) mit einem ersten Nahfeldkommunikations-Tag- NFC-Tag-Chip (406) konfiguriert ist, wobei der erste NFC-Steuer-Chip (401) dafür konfiguriert ist, ein Funkfrequenzfeld mit einer spezifizierten Frequenz zu modulieren, um mit dem ersten NFC-Tag-Chip (406) zu kommunizieren, und der erste NFC-Tag-Chip (406) dafür konfiguriert ist, das Funkfrequenzfeld abzutasten, um Energie zu gewinnen, und eine Lastmodulation an dem Funkfrequenzfeld durchzuführen, um mit dem ersten NFC-Steuer-Chip (401) zu kommunizieren;
wobei das erste elektronische Gerät (100) dafür konfiguriert ist, mit Hilfe des von dem ersten NFC-Steuer-Chip (401) erzeugten Funkfrequenzfeldes erste Tag-Daten zu lesen, die in dem ersten NFC-Tag-Chip (406) gespeichert sind;
das erste elektronische Gerät (100) ferner für Folgendes konfiguriert ist: nach dem Lesen der ersten Tag-Daten, Durchführen einer ersten Operation und Senden von Durchgangsdaten an das zweite elektronische Gerät (200) mit Hilfe des ersten NFC-Steuer-Chips (401); und
das zweite elektronische Gerät (200) dafür konfiguriert ist, nach dem Empfangen der Durchgangsdaten mit Hilfe des ersten NFC-Tag-Chips (406) eine zweite Operation durchzuführen;
**dadurch gekennzeichnet, dass** das erste elektronische Gerät (100) ferner dafür konfiguriert ist, vor dem Lesen der ersten Tag-Daten eine erste Schnittstelle einer ersten Anwendung anzuzeigen; und die ersten Tag-Daten eine Bluetooth-Medienzugangssteuerungs-, MAC-, Adresse des zweiten elektronischen Geräts (200) und ein Dienstverarbeitungsattribut des zweiten elektronischen Geräts (200) umfassen; wobei die erste Operation Folgendes umfasst:
wenn das Dienstverarbeitungsattribut des zweiten elektronischen Geräts (200) ein erstes Attribut ist, Einrichten einer Bluetooth-Verbindung mit dem zweiten elektronischen Gerät (200), basierend auf der Bluetooth-MAC-Adresse des zweiten elektronischen Geräts (200);
Einrichten einer drahtlosen lokalen Netzwerk-, WLAN-, Direktverbindung zu dem zweiten elektronischen Gerät (200), basierend auf der Bluetooth-Verbindung; und
Senden erster Anzeigedaten an das zweite elektronische Gerät (200) über die WLAN-Direktverbindung;
wobei das zweite elektronische Gerät (200) ferner für Folgendes konfiguriert ist: nach dem Empfangen der ersten Anzeigedaten Anzeigen einer zweiten Schnittstelle, basierend auf den ersten Anzeigedaten, wobei Anzeigeinhalt auf der zweiten Schnittstelle der gleiche ist wie Anzeigeinhalt auf der ersten Schnittstelle;
wobei die Durchgangsdaten Konteninformationen der ersten Anwendung und eine Kennung der ersten Anwendung umfassen und die Konteninformationen eine Kontenkennung und ein Kontenpasswort der ersten Anwendung umfassen; und
wobei die zweite Operation Folgendes umfasst:
Einloggen in die erste Anwendung auf dem zweiten elektronischen Gerät (200), basierend auf den Konteninformationen und der Kennung der ersten Anwendung mit Hilfe der Konteninformationen.

2. NFC-Kommunikationsverfahren, Folgendes umfassend:
Lesen, durch ein erstes elektronisches Gerät (100) mit Hilfe eines von einem ersten NFC-Steuer-Chip (401) erzeugten Funkfrequenzfeldes, erster Tag-Daten, die auf einem ersten NFC-Tag-Chip (406) eines zweiten elektronischen Geräts (200) gespeichert sind, wobei der erste NFC-Steuer-Chip (401) dafür konfiguriert ist, das Funkfrequenzfeld mit einer spezifizierten Frequenz zu modulieren, um mit dem ersten NFC-Tag-Chip (406) zu kommunizieren, und der erste NFC-Tag-Chip (406) dafür konfiguriert ist, das Funkfrequenzfeld abzutasten, um Energie zu gewinnen, und eine Lastmodulation an dem Funkfrequenzfeld durchzuführen, um mit dem ersten NFC-Steuer-Chip (401) zu kommunizieren, und
nach dem Lesen der ersten Tag-Daten, Durchführen, durch das erste elektronische Gerät (100), einer ersten Operation und Senden von Durchgangsdaten an das zweite elektronische Gerät (200) mit Hilfe des ersten NFC-Steuer-Chips (401), wobei die Durchgangsdaten verwendet werden, um das Durchführen einer zweiten Operation durch das zweite elektronische Gerät (200) auszulösen;
**dadurch gekennzeichnet, dass** die ersten Tag-Daten eine Bluetooth-Medienzugangssteuerungs-, MAC-, Adresse des zweiten elektronischen Geräts (200) und ein Dienstverarbeitungsattribut des zweiten elektronischen Geräts (200) umfassen;
wobei das Verfahren vor dem Lesen der ersten Tag-Daten Folgendes umfasst:
Anzeigen einer ersten Schnittstelle einer ersten Anwendung durch das erste elektronische Gerät (100),
wobei die erste Operation Folgendes umfasst
wenn das Dienstverarbeitungsattribut des zweiten elektronischen Geräts (200) ein erstes Attribut ist, Einrichten einer Bluetooth-Verbindung mit dem zweiten elektronischen Gerät (200), basierend auf der Bluetooth-MAC-Adresse des zweiten elektronischen Geräts (200);
Einrichten einer drahtlosen lokalen Netzwerk-, WLAN-, Direktverbindung zu dem zweiten elektronischen Gerät (200), basierend auf der Bluetooth-Verbindung; und Senden erster Anzeigedaten an das zweite elektronische Gerät (200) über die WLAN-Direktverbindung, wobei die ersten Anzeigedaten von dem zweiten elektronischen Gerät (200) verwendet werden, um eine zweite Schnittstelle anzuzeigen, und Anzeigeinhalt auf der zweiten Schnittstelle der gleiche ist wie Anzeigeinhalt auf der ersten Schnittstelle;
wobei die Durchgangsdaten Konteninformationen der ersten Anwendung und eine Kennung der ersten Anwendung umfassen und die Konteninformationen eine Kontenkennung und ein Kontenpasswort der ersten Anwendung umfassen; und
wobei die zweite Operation Folgendes umfasst:
Einloggen in die erste Anwendung auf dem zweiten elektronischen Gerät (200),
basierend auf den Konteninformationen und der Kennung der ersten Anwendung mit Hilfe der Konteninformationen.

3. Mehrere Computerspeichermedien, die Computeranweisungen umfassen, wobei, wenn die Computeranweisungen auf einem NFC-Kommunikationssystem abgearbeitet werden, das NFC-Kommunikationssystem in die Lage versetzt wird, das Verfahren nach Anspruch 2 durchzuführen.

4. Computerprogrammprodukt, wobei, wenn das Computerprogrammprodukt auf einem NFC-Kommunikationssystem läuft, das NFC-Kommunikationssystem in die Lage versetzt wird, das Verfahren nach Anspruch 2 durchzuführen.

## Revendications

1. Système de communications NFC, comprenant : un premier dispositif électronique (100) et un second dispositif électronique (200), le premier dispositif électronique (100) étant configuré avec une première puce de commande de communication en champ proche NFC (401), et le second dispositif électronique (200) étant configuré avec une première puce d'étiquette de communication en champ proche NFC (406), la première puce de commande NFC (401) étant configurée pour moduler un champ radiofréquence à une fréquence spécifiée afin de communiquer avec la première puce d'étiquette NFC (406), et la première puce d'étiquette NFC (406) étant configurée pour détecter le champ radiofréquence afin d'obtenir de l'énergie et pour réaliser une modulation de charge sur le champ radiofréquence afin de communiquer avec la première puce de commande NFC (401) ;
le premier dispositif électronique (100) étant configuré pour lire, à l'aide du champ radiofréquence généré par la première puce de commande NFC (401), des premières données d'étiquette stockées dans la première puce d'étiquette NFC (406) ;
le premier dispositif électronique (100) étant en outre configuré pour : après la lecture des premières données d'étiquette, réaliser une première opération et envoyer des données de transmission directe au second dispositif électronique (200) à l'aide de la première puce de commande NFC (401) ; et
le second dispositif électronique (200) étant configuré pour réaliser une seconde opération après réception des données de transmission directe à l'aide de la première puce d'étiquette NFC (406) ;
**caractérisé en ce que** le premier dispositif électronique (100) est en outre configuré pour afficher une première interface d'une première application avant la lecture des premières données d'étiquette ; et les premières données d'étiquette comprennent une adresse de contrôle d'accès au support MAC Bluetooth du second dispositif électronique (200) et un attribut de traitement de service du second dispositif électronique (200) ;
la première opération comprenant :
lorsque l'attribut de traitement de service du second dispositif électronique (200) est un premier attribut,
l'établissement d'une connexion Bluetooth au second dispositif électronique (200) sur la base de l'adresse MAC Bluetooth du second dispositif électronique (200) ;
l'établissement d'une connexion directe de réseau local sans fil WLAN au second dispositif électronique (200) sur la base de la connexion Bluetooth ; et
l'envoi de premières données d'affichage au second dispositif électronique (200) au moyen de la connexion directe WLAN ;
le second dispositif électronique (200) étant en outre configuré pour : après réception des premières données d'affichage, afficher une seconde interface sur la base des premières données d'affichage, le contenu affiché sur la seconde interface étant identique au contenu affiché sur la première interface ;
les données de transmission directe comprenant des informations de compte de la première application et un identifiant de la première application, et les informations de compte comprenant un identifiant de compte et un mot de passe de compte de la première application ; et
la seconde opération comprenant :
la connexion à la première application sur le second dispositif électronique (200) sur la base des informations de compte et de l'identifiant de la première application à l'aide des informations de compte.

2. Procédé de communication NFC, comprenant :
la lecture, par un premier dispositif électronique (100) à l'aide d'un champ radiofréquence généré par une première puce de commande NFC (401), de premières données d'étiquette stockées dans une première puce d'étiquette NFC (406) d'un second dispositif électronique (200),
la première puce de commande NFC (401) étant configurée pour moduler le champ radiofréquence à une fréquence spécifiée afin de communiquer avec la première puce d'étiquette NFC (406), et la première puce d'étiquette NFC (406) étant configurée pour détecter le champ radiofréquence afin d'obtenir de l'énergie et pour réaliser une modulation de charge sur le champ radiofréquence afin de communiquer avec la première puce de commande NFC (401) ; et
après la lecture des premières données d'étiquette, la réalisation, par le premier dispositif électronique (100), d'une première opération et l'envoi de données de transmission directe au second dispositif électronique (200) à l'aide de la première puce de commande NFC (401), les données de transmission directe étant utilisées pour déclencher le second dispositif électronique (200) afin de réaliser une seconde opération ;
**caractérisé en ce que** les premières données d'étiquette comprennent une adresse de contrôle d'accès au support MAC Bluetooth du second dispositif électronique (200) et un attribut de traitement de service du second dispositif électronique (200) ;
avant la lecture des premières données d'étiquette, le procédé comprenant en outre :
l'affichage, par le premier dispositif électronique (100), d'une première interface d'une première application ;
la première opération comprenant :
lorsque l'attribut de traitement de service du second dispositif électronique (200) est un premier attribut,
l'établissement d'une connexion Bluetooth au second dispositif électronique (200) sur la base de l'adresse MAC Bluetooth du second dispositif électronique (200) ;
l'établissement d'une connexion directe de réseau local sans fil WLAN au second dispositif électronique (200) sur la base de la connexion Bluetooth ; et
l'envoi de premières données d'affichage au second dispositif électronique (200) au moyen de la connexion directe WLAN, les premières données d'affichage étant utilisées par le second dispositif électronique (200) pour afficher une seconde interface, le contenu affiché sur la seconde interface étant identique au contenu affiché sur la première interface ;
les données de transmission directe comprenant des informations de compte de la première application et un identifiant de la première application, et les informations de compte comprenant un identifiant de compte et un mot de passe de compte de la première application ; et
la seconde opération comprenant :
la connexion à la première application sur le second dispositif électronique (200) sur la base des informations de compte et de l'identifiant de la première application à l'aide des informations de compte.

3. Pluralité de supports de stockage informatique, comprenant des instructions informatiques qui, lorsqu'elles sont exécutées sur un système de communications NFC, permettent au système de communications NFC de réaliser le procédé selon la revendication 2.

4. Produit programme informatique qui, lorsqu'il est exécuté sur un système de communications NFC, permet au système de communications NFC de réaliser le procédé selon la revendication 2.
